(19) Europäisches Patentamt
European Patent Office
Office européen des brevets

(11) **EP 4 633 144 A1**

(12) **EUROPEAN PATENT APPLICATION**

(43) Date of publication:
**15.10.2025 Bulletin 2025/42**

(21) Application number: **24305568.8**

(22) Date of filing: **09.04.2024**

(51) International Patent Classification (IPC):
$H04N\ 19/11^{(2014.01)}$    $H04N\ 19/156^{(2014.01)}$
$H04N\ 19/176^{(2014.01)}$    $H04N\ 19/593^{(2014.01)}$

(52) Cooperative Patent Classification (CPC):
**H04N 19/176; H04N 19/11; H04N 19/156; H04N 19/593**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **DUMAS, Thierry**
  **35700 RENNES (FR)**

• **GALPIN, Franck**
  **35235 THORIGNE-FOUILLARD (FR)**
• **CHEN, Ya**
  **35700 RENNES (FR)**
• **LE LEANNEC, Fabrice**
  **35830 BETTON (FR)**

(74) Representative: **Rittner, Karsten**
  **Rittner & Partner**
  **Patentanwälte mbB**
  **Schiffgraben 17**
  **30159 Hannover (DE)**

(54) **RESTRICTED USAGE OF NEURAL NETWORK-BASED PREDICTION IN COMBINATION WITH ADVANCED PREDICTION TOOLS**

(57)    Video coding may selectively use neural network-based intra prediction in combination with advanced prediction tools. In examples, a device (e.g., encoder or decoder) may obtain a current video block. For example, the current video block may be associated with a block-based intra prediction tool. The device may determine whether a condition for applying a neural network-based prediction to the current video block is met. The device may perform a prediction for the current video block based at least on whether the condition for applying the neural network-based prediction to the current video block is met. For example, if the condition is met, the prediction may be performed using at least a first neural network, and, if the condition is not met, the prediction may be performed using the block-based intra prediction tool. The device may decode or decode the current video block based at least on the prediction.

FIG. 17B

**EP 4 633 144 A1**

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

Systems, methods, and instrumentalities are disclosed for a device configured for one or more of video coding (e.g., encoding and/or decoding), distribution, or consumption.

Systems, methods, and instrumentalities are disclosed for selectively using neural network-based prediction (e.g., intra prediction) in combination with advanced prediction tools (e.g., advanced intra prediction tools).

In examples, a device (e.g., an encoder for video encoding or a decoder for video decoding) may obtain a current video block, which may be associated with a block-based prediction tool (e.g., block-based intra prediction tool). The device may determine whether a condition for applying a neural network-based prediction to the current video block is met. The device may perform a prediction for the current video block based at least on whether the condition for applying the neural network-based prediction to the current video block is met. For example, if the condition is met, the prediction may be performed using at least a first neural network, and, if the condition is not met, the prediction may be performed using the block-based prediction tool. The device may decode the current video block based at least on the prediction.

In examples, if the condition for applying the neural network-based prediction to the current video block is met, the prediction may be performed using a matrix that comprises a set of weights of the first neural network. In examples, the device may determine a virtual block for predicting a portion of the current video block. The portion of the current video block may have a first size and the virtual block may have a second size that is bigger than the first size. The device may determine a prediction block for the virtual block using the matrix, which may be dedicated to blocks of the second size. Upon obtaining the prediction block for the virtual block, the device may truncate the prediction block to the first size to obtain a prediction block for the portion of the current video block that has the first size.

In examples, the block-based prediction tool may include a template-based multiple reference line (TMRL) prediction tool.

In examples, the current video block may be associated with a default matrix comprising a first set of weights and a proxy matrix comprising a second set of weights. The second set of weights included in the proxy matrix may differ at least partially from the first set of weights included in the default matrix (e.g., at least a portion of the weights included in the second matrix may be zero-valued weights or weights having power-of-2 values), and the matrix used to perform the prediction for the current video block may be the proxy matrix.

In examples, the device may determine whether the condition for applying the neural network-based prediction to the current video block is met by determining a complexity associated with the application of the neural network-based prediction and determine whether the condition is met based on whether the complexity exceeds a threshold value.

In examples, the device may determine the complexity associated with the application of the neural network-based prediction based on a number of instructions to be executed, a number of multiplications to be performed, or a number of memory accesses to be carried out in association with the application of the neural network-based prediction.

In examples, the device may perform the prediction for the current video block by deriving prediction information associated with the current video block based at least on whether a condition for deriving the prediction information using a second neural network is met. For example, if the condition for deriving the prediction information using the second neural network is met, the device may derive the prediction information using the second neural network.

In examples, the block-based prediction tool may include a decoder side intra mode derivation (DIMD) tool, a template-based intra mode derivation (TIMD) tool, a spatial geometric partitioning mode (SGPM) tool, a template-based multiple reference line (TMRL) tool, a combined intra inter prediction (CIIP) tool, or an intra block copy (IBC) tool.

**BRIEF DESCRIPTION OF THE DRAWINGS**

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 4 illustrates an example of a system in which various aspects and examples may be implemented.

FIG. 5 illustrates an example of extraction of the gradients from the context of a given $w \times h$ block predicted via DIMD.

FIG. 6 illustrates an example range of the "target intra prediction mode index" from the absolute values of $G_{VER}$ and $G_{HOR}$ and the signs of $G_{VER}$ and $G_{HOR}$.

FIG. 7 illustrates an example computation of the angle $\theta$ between the reference axis and the direction being perpendicular to the gradient $G$ of components $G_{VER}$ and $G_{HOR}$, e.g., when $|G_{VER}| > |G_{HOR}|$.

FIG. 8 illustrates an example computation of the angle $\theta$ between the reference axis and the direction being perpendicular to the gradient $G$ of components $G_{VER}$ and $G_{HOR}$ , e.g., when $|G_{HOR}| \geq |G_{VER}|$.

FIG. 9 illustrates an example of the computation of the target intra prediction mode index in the conditions of FIG. 7FIG. 7, e.g., when $|G_{VER}| > |G_{HOR}|$.

FIG. 10 illustrates an example of the computation of the target intra prediction mode index in the conditions of FIG. 8, e.g., when $|G_{HOR}| \geq |G_{VER}|$.

FIG. 11 illustrates an example of a decomposition into three separate regions of the context of a given $w \times h$ block predicted via DIMD.

FIGS. 12A-12C illustrate examples of templates of a given $w \times h$ block predicted via TIMD and the set of reference samples of the template.

FIG. 13 illustrates an example of a template (1301, 1302) of a given $w \times h$ block (1300) predicted via SGPM and the set (1303) of reference samples of (1301, 1302).

FIG. 14 illustrates an example of a template (1401, 1402) of a given $w \times h$ block (1400) predicted via SGPM and the set (1403) of reference samples of (1401, 1402).

FIG. 15 illustrates an example prediction of the current $w \times h$ block $Y$ from the context $X$ of reference samples around $Y$ via the NN-based intra prediction mode.

FIG. 16 illustrates an example of intra prediction mode signaling for the current $w \times h$ luma CB framed in a dashed line.

FIGS. 17A-17C illustrate a flowchart showing an example of a process to obtain the reconstruction $\tilde{Y}$ of a $w \times h$ block $Y$ at the decoder side of a hybrid block-based video codec.

FIG. 18 illustrates an example of downsampling and/or transposition of the context of the current $w \times h$ block, then transposition and/or upsampling of the prediction resulting from the matrix-based computations.

FIG. 19 illustrates an example of transposition and/or downsampling of the context of the current $w \times h$ block, then upsampling and/or transposition of the prediction arising from the matrix-based multiplication.

FIGS. 20A-20B illustrate an example definition of isSubstitutedByMb$^{derivation}$ shown in FIG. 17B.

FIGS. 21A-21B illustrate an example definition of isSubstitutedByMb$^{derivation}$ shown in FIG. 17B.

FIG. 22 illustrates an example of the prediction of a template of a given $w \times h$ block via matrix-based intra prediction during the derivation operation of TIMD.

FIG. 23 illustrates an example definition of isSubstitutedByMb$^{derivation}$ shown in FIG. 17B.

FIG. 24 illustrates an example definition of isSubstitutedByMb$^{prediction}$ shown in FIG. 17C.

FIG. 25 illustrates an example of the prediction of a $w_p \times h_p$ portion $P$ of a template of a $w \times h$ block $Y$ via the mode of index idxMode.

FIG. 26 illustrates an example prediction of a given $w_p \times h_p$ portion $P$ of template using a matrix $W_{h,\,w}^{\mathbf{idxMode}}$ of $hw$ columns dedicated to the prediction of blocks of size $w \times h$, $w \geq w_p$ and $h > h_p$, via truncation of the vector-matrix multiplication.

FIG. 27 illustrates an example of the prediction of a given $w_p \times h_p$ portion $P$ of template using a matrix $W_{h,\,w}^{\mathbf{idxMode}}$ of $hw$ columns dedicated to the prediction of blocks of size $w \times h$, $w \geq w_p$ and $h \geq h_p$, via truncation of the vector-matrix multiplication.

FIG. 28A-28B illustrate an example of the prediction of a $w_p \times h_p$ portion $P$ of a template of a given $w \times h$ block $Y$ via the mode of index idxMode during the derivation operation of a template-based tool and prediction of $Y$ via the mode of index idxMode during its prediction operation.

FIGS. 29A-29B illustrate an example definition of isSubstitutedByMb$^{derivation}$ and isSubstitutedByMb$^{prediction}$.

FIG. 30 illustrates an example of extended reference lines of a given $w \times h$ block predicted via TMRL.

FIGS 31A-31B illustrate an example of the prediction of each portion of the template of a given $w \times h$ block when the pair of the extended reference line of index 3 and the intra prediction mode of index idxMode are being tested on the template of the block and the intra prediction mode of index idxMode is replaced by matrix-based intra prediction, during the TMRL derivation operation.

FIGS. 32A-32C illustrate an example of the prediction of a given $w \times h$ block via TMRL when the pair of the extended reference line of index 3 and the intra prediction mode of index idxMode are selected for prediction and the intra prediction mode of index idxMode is replaced by matrix-based intra prediction.

FIGS. 33A-33B illustrate an example of the prediction of each portion of the template of a given $w \times h$ block when the pair of the extended reference line of index 1 and the intra prediction mode of index idxMode are being tested on the template of the block and the intra prediction mode of index idxMode is replaced by matrix-based intra prediction, during the TMRL derivation operation.

FIGS. 34A-34C illustrate an example of the prediction of a given $w \times h$ block via TMRL when the pair of the extended reference line of index 1 and the intra prediction mode of index idxMode are selected for prediction and the intra prediction mode of index idxMode is replaced by matrix-based intra prediction.

FIGS. 35A-35B illustrate an example of the prediction of a given $w \times h$ block via TMRL when the pair of the extended reference line of index 3 and the intra prediction mode of index idxMode are selected for prediction and the intra prediction mode of index idxMode is replaced by matrix-based intra prediction.

FIGS. 36A-36B illustrate an example of the prediction of a given $w \times h$ block via TMRL when the pair of the extended reference line of index 1 and the intra prediction mode of index idxMode are selected for prediction and the intra prediction mode of index idxMode is replaced by matrix-based intra prediction.

FIGS. 37A-37B illustrate an example definition of isSubstitutedByMb$^{derivation}$ and isSubstitutedByMb$^{prediction}$.

FIGS. 38A-38B illustrate an example definition of isSubstitutedByMb$^{derivation}$ and isSubstitutedByMb$^{prediction}$.

FIGS. 39A-39B illustrate an example of the prediction of a $w_p \times h_p$ portion **P** of a template of a $w \times h$ block **Y** via the mode of index idxMode during the derivation operation of a template-based tool and prediction of **Y** via the mode of index idxMode during its prediction operation.

FIGS. 40A-40B illustrate an example of the prediction of a $w_p \times h_p$ portion **P** of a template of a $w \times h$ block **Y** via the mode of index idxMode during the derivation operation of a template-based tool and/or prediction of **Y** via the mode of index idxMode during its prediction operation.

FIGS. 41A-41B illustrate example definitions of isSubstitutedByMb$^{derivation}$ , isSubstitutedByMb$^{prediction}$, isProxyUsed$^{derivation}$, and isProxyUsed$^{prediction}$.

FIG. 42A-42B illustrate example definitions of isSubstitutedByMb$^{derivation}$ , isSubstitutedByMb$^{prediction}$, isProxyUsed$^{derivation}$, and isProxyUsed$^{prediction}$.

## DETAILED DESCRIPTION

A more detailed understanding may be had from the following description, given by way of example in conjunction with the accompanying drawings.

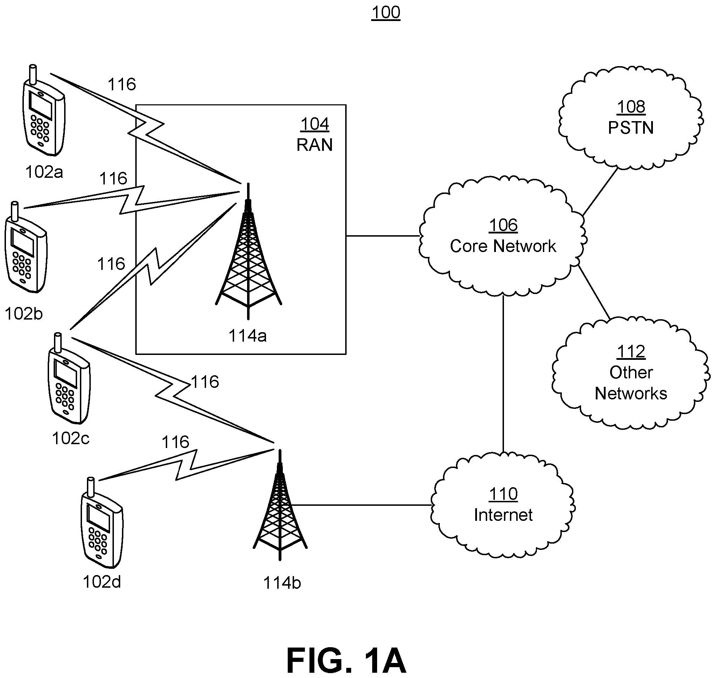

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for example using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

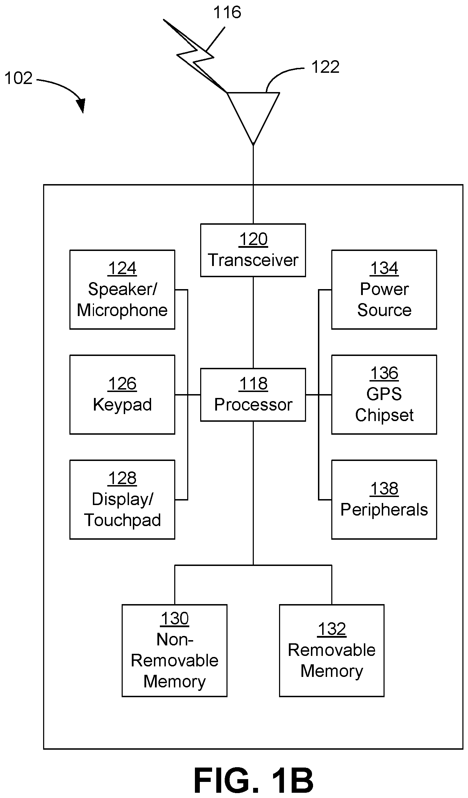

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

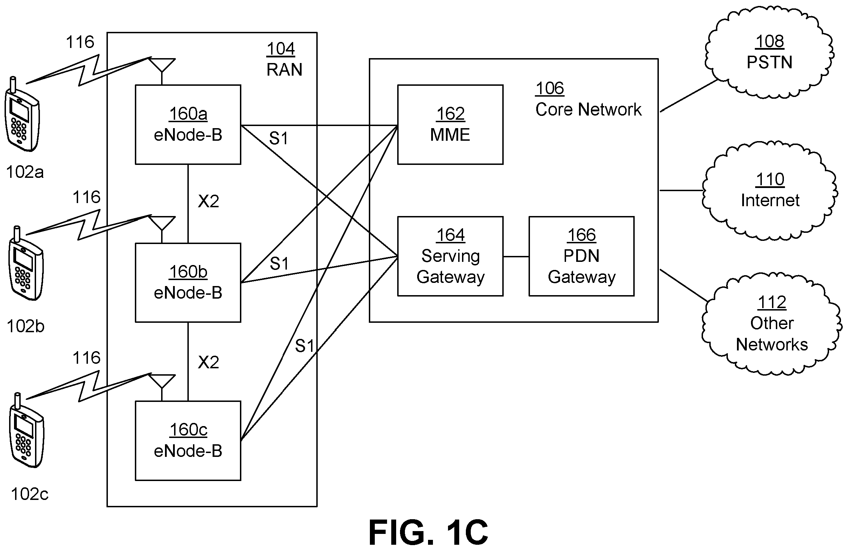

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

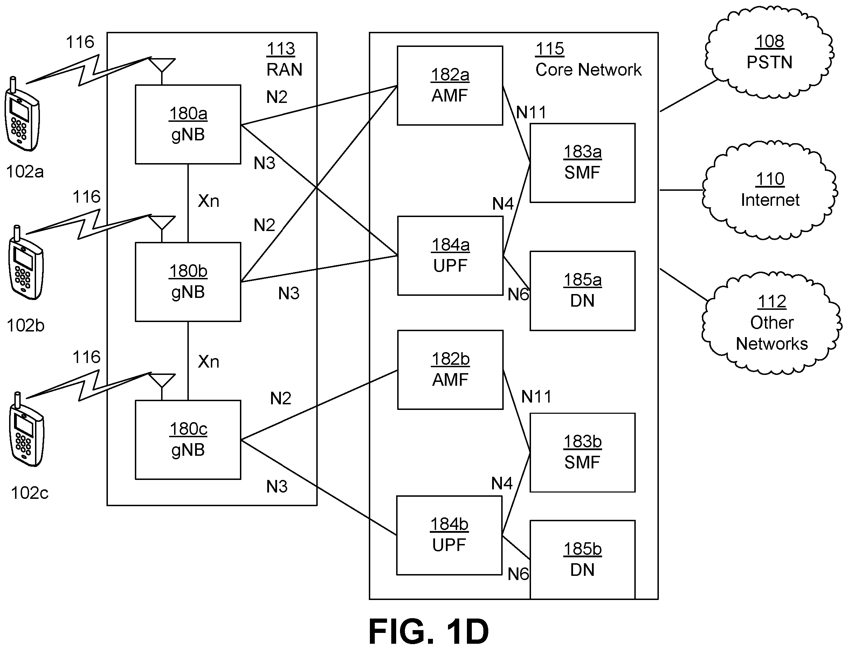

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

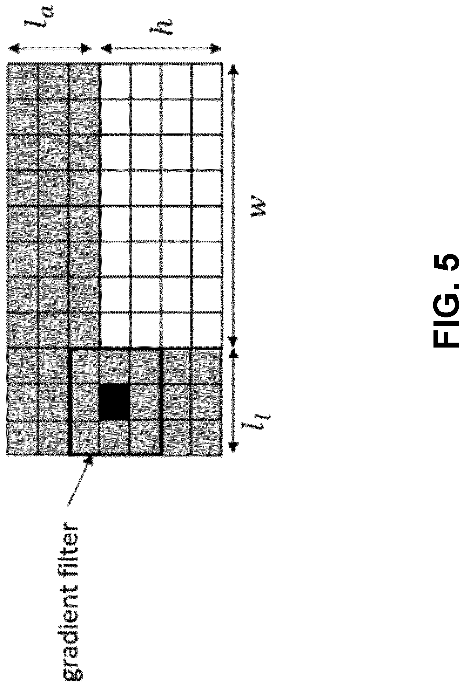

The aspects described and contemplated in this application may be implemented in many different forms. FIGS. 5-42B described herein may provide some examples, but other examples are contemplated. The discussion of FIGS. 5-42B does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more operations or actions for achieving the described method. Unless a specific order of operations or actions is required for proper operation of the method, the order and/or use of specific operations and/or actions may be modified or combined. Additionally, terms such as "first", "second", etc. may be used in various examples to modify an element, component, operation, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

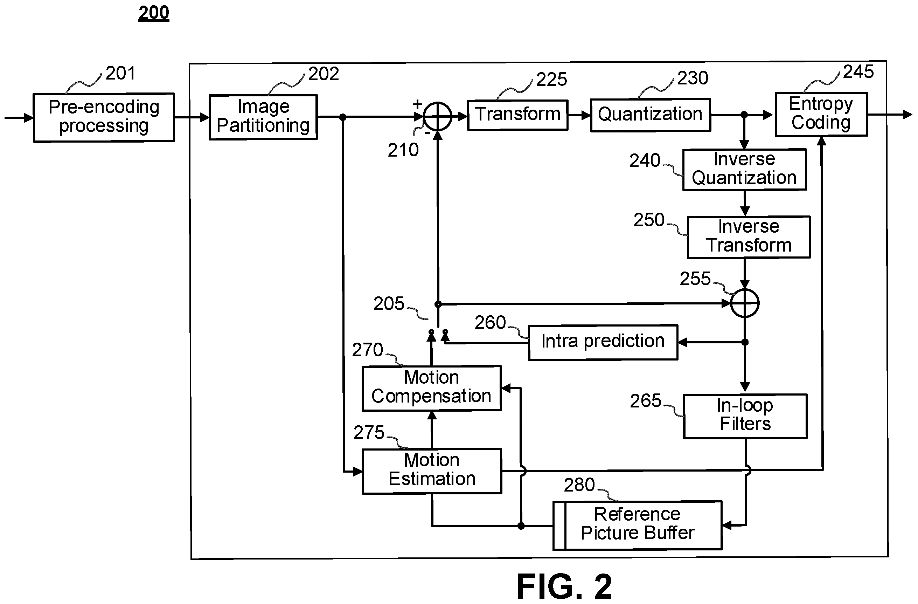

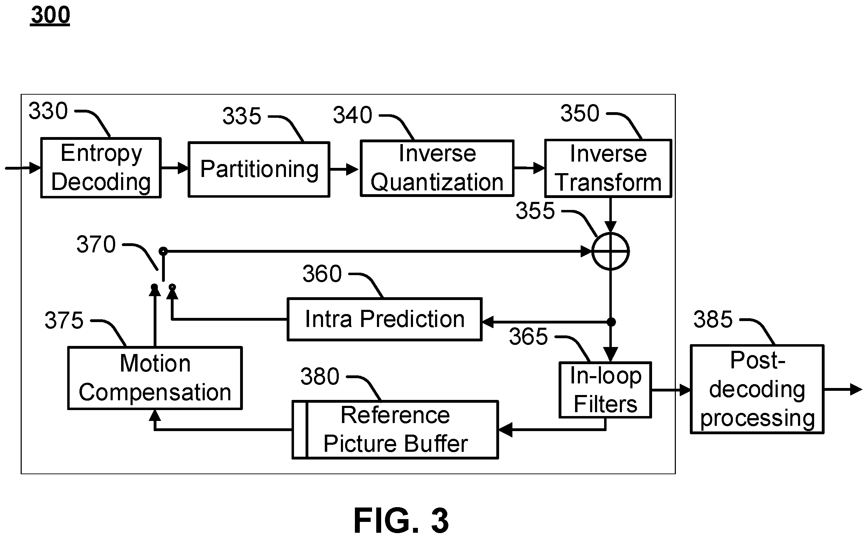

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as a number of operations, HoG bin values, block dimensions, template dimensions, filter dimensions, number of prediction modes, number of pixels, number of reference lines, bit depth, bit values, parameter values, weight values, constant values, multiplier values, minimum values, maximum values, range values, true values, false values, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for example using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, such as picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filtering) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). In some examples (e.g., for a given picture) the contents of the reference picture buffer 380 on the decoder 300 side may be identical to the contents of the reference picture buffer 280 on the encoder 200 side (e.g., for the same picture).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

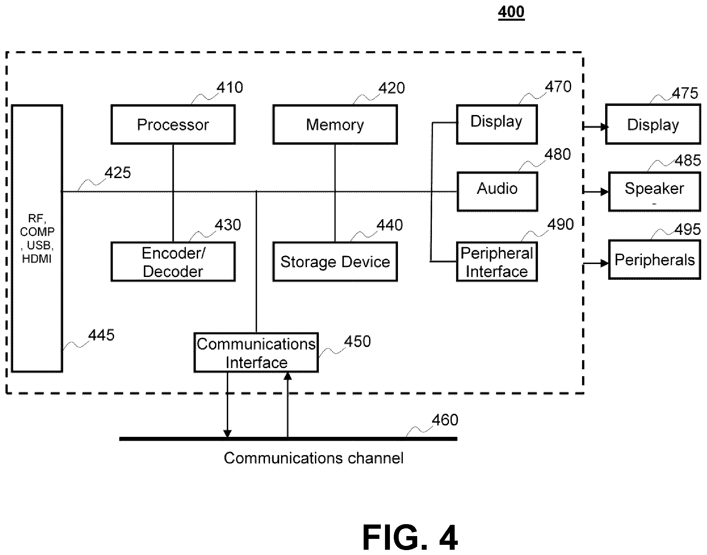

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, determining whether a condition for applying a neural network-based prediction to a current video block (e.g., a video block associated with an intra prediction tool) is met; performing a prediction for the current video block based at least on whether the condition for applying the neural network-based prediction to the current video block is met; performing the prediction using at least a first neural network if the condition is met; performing the prediction using the intra prediction tool if the condition is not met; decoding the current video block based at least on the prediction, etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application, for example, determining whether a condition for applying a neural network-based prediction to a current video block (e.g., a video block associated with an intra prediction tool) is met; performing a prediction for the current video block based at least on whether the condition for applying the neural network-based prediction to the current video block is met; performing the prediction using at least a first neural network if the condition is met; performing the prediction using the intra prediction tool if the condition is not met; encoding the current video block based at least on the prediction, etc.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, such as, $G_{VER}$, $G_{HOR}$, isSubstitutedByMb$^{derivation}$, isSubstituted-ByMb$^{prediction}$, idxMode, isProxyUsed$^{derivation}$, isProxyUsed$^{prediction}$, grpIdx$_1$, repIdx, nnFlag, macMbTimdCtu, nbPix-elsCtbLuma, macMbCtu, etc. are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, IPM signaling, DIMD flag, TMP flag, TIMD flag, EIP flag, MIP flag, indices, SGPM flag, TMRL flag, nnFlag, nnFlagChroma, DM flag, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

A block-based video coding device may include a encoder/decoder with at least one intra prediction module.

Decoder Side Intra Mode Derivation (DIMD) may be based on an assumption that the reconstructed pixels surrounding a given block to be predicted carry information to infer the texture directionality in the block, e.g., the intra prediction modes that may be most likely generate the predictions with the highest qualities. Explanations herein may apply (e.g., the same way) at both the encoder and decoder sides. Examples may describe the prediction of a luma block via DIMD.

Intra prediction modes indices may be derived in DIMD. For a given block predicted via DIMD, an example derivation of the indices of the intra prediction modes that may be most likely to generate the predictions of the block with the highest qualities may be described in (e.g., three) operations. First, gradients may be extracted from a context of reconstructed pixels around the block. Second, the gradients may be used to fill a Histogram of Oriented Gradients (HOG). Third, the indices of the intra prediction modes that may be most likely to produce the predictions with the highest qualities may be derived from the HOG.

Gradients may be extracted from the context. For a given block predicted via DIMD, an L-shape context of $I_a$ rows of reconstructed pixels above the block and $I_l$ columns of reconstructed pixels on the left side of the block may be considered, as shown by example in FIG. 5. The L-shape context may also be referred to as a template of the block. At a (e.g., each) reconstructed pixel of interest in the context, a local vertical gradient and a local horizontal gradient may be computed. In some examples, the local vertical and horizontal gradients may be computed via (e.g., $3 \times 3$) vertical and horizontal Sobel filters, respectively. A reconstructed pixel of interest in this context may refer to a reconstructed pixel at which the gradient filter does not go out of the context bounds. The (e.g., complete) extraction of gradients may be summarized by the "valid" convolution of the (e.g., $3 \times 3$) vertical and horizontal Sobel filters with the context. In some examples, $I_a = I_l = 3$.

FIG. 5 illustrates an example of extraction of the gradients from the context of a given $w \times h$ block predicted via DIMD. The $w \times h$ block is displayed in white. The context of the block is displayed in gray. The gradient filter is framed in black.

A Histogram of Oriented Gradients (HOG) may be constructed. In the HOG, a (e.g., each) bin may be associated with the index of a different directional intra prediction mode. At initialization, (e.g., all) the HOG bins may be equal to zero (0). For a (e.g., each) reconstructed pixel of interest at which the local vertical gradient $G_{VER}$ and the local horizontal gradient $G_{HOR}$ may be computed, a direction may be derived from $G_{VER}$ and $G_{HOR}$, and/or the bin associated with the index of the directional intra prediction mode whose direction is the closest to the derived direction may be incremented. This index may be called the "target intra prediction mode index."

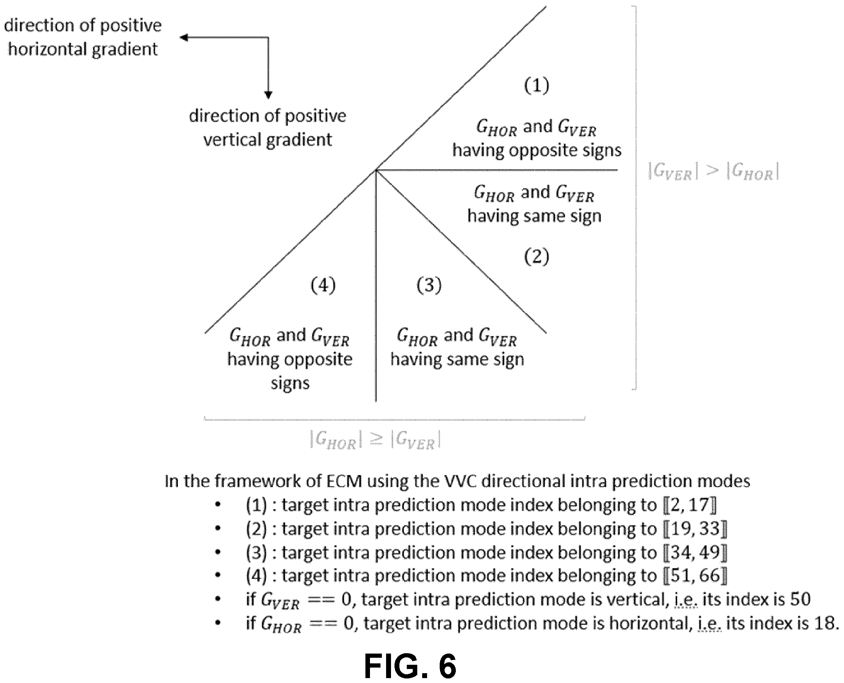

For a given reconstructed pixel of interest, the derivation of the direction from $G_{VER}$ and $G_{HOR}$ may be based on the following observation. During the prediction of a block via a directional intra prediction mode, the largest gradient in absolute value may (e.g., usually) follow the perpendicular to the mode direction. Therefore, the direction derived from $G_{VER}$ and $G_{HOR}$ may be perpendicular to the gradient of components $G_{VER}$ and $G_{HOR}$. FIG. 6 shows an example of mapping from the absolute values of $G_{VER}$ and $G_{HOR}$ and the signs of $G_{VER}$ and $G_{HOR}$ to the range of the target intra prediction mode index, using (e.g., 65) directional intra prediction modes, considering vertical and horizontal gradient filters for which the direction of positive vertical gradient goes from top to bottom and the direction of positive horizontal gradient goes from right to left.

FIG. 6 illustrates an example range of the "target intra prediction mode index" from the absolute values of $G_{VER}$ and $G_{HOR}$ and the signs of $G_{VER}$ and $G_{HOR}$.

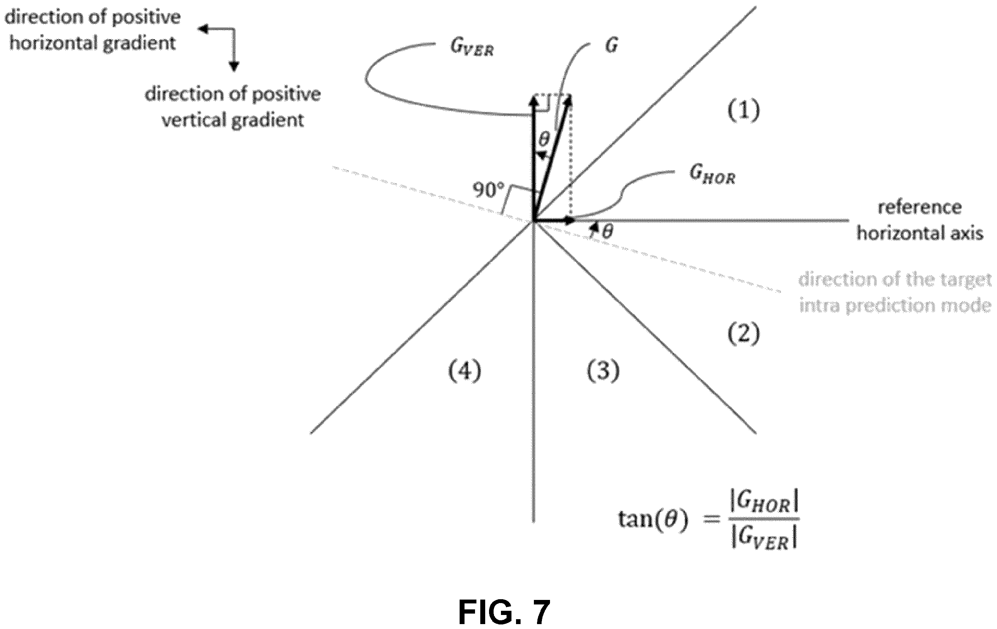

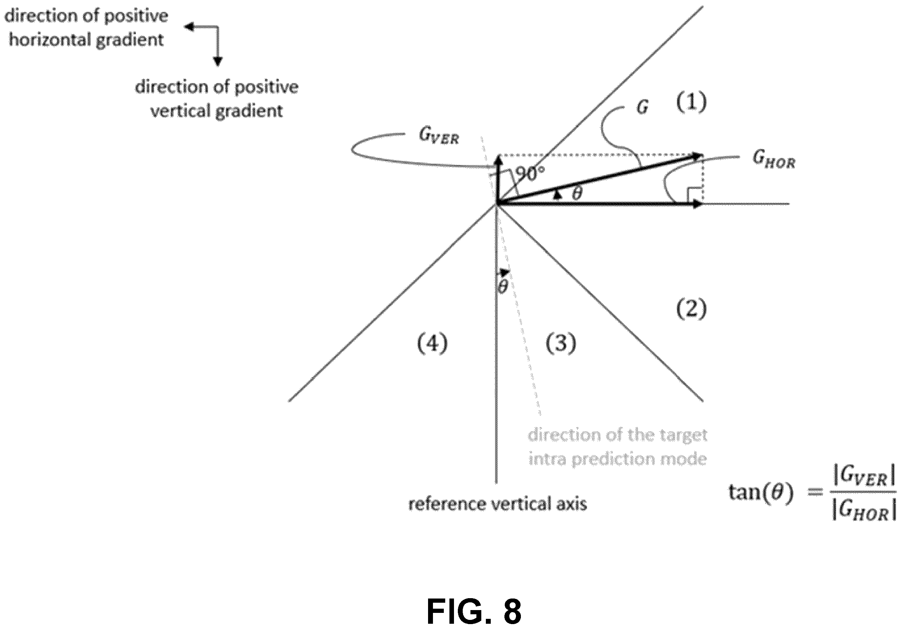

If $|G_{VER}| > |G_{HOR}|$, the reference axis may be the horizontal axis. Otherwise, the reference axis may be the vertical axis. The angle $\theta$ between the reference axis and the direction being perpendicular to the gradient G of components $G_{VER}$ and $G_{HOR}$ may be given by $\tan(\theta) = |G_{HOR}|/|G_{VER}|$ if $|G_{VER}| > |G_{HOR}|$, otherwise $\tan(\theta) = |G_{VER}|/|G_{HOR}|$, see FIG. 7 and FIG. 8.

FIG. 7 illustrates an example computation of the angle $\theta$ between the reference axis and the direction being perpendicular to the gradient G of components $G_{VER}$ and $G_{HOR}$ when $|G_{VER}| > |G_{HOR}|$. Note that, here, $G_{VER} < 0$ and $G_{HOR} < 0$.

FIG. 8 illustrates an example computation of the angle $\theta$ between the reference axis and the direction being perpendicular to the gradient G of components $G_{VER}$ and $G_{HOR}$ when $|G_{HOR}| \geq |G_{VER}|$. Note that, here, $G_{VER} < 0$ and $G_{HOR} < 0$.

For the current reconstructed pixel of interest at which the local vertical gradient $G_{VER}$ and the local horizontal gradient $G_{HOR}$ may be computed, for the range of intra prediction mode indices that may be found as shown in FIG. 6, the index of the intra prediction mode whose angle with respect to the reference axis is the closest to $\theta$ may be found. The bin associated with the index of the found "target intra prediction mode" may (e.g., then) be incremented by $|G_{HOR}| + |G_{VER}|$. For the current reconstructed pixel of interest, if $G_{HOR} = G_{VER} = 0$, a HOG bin may not be incremented.

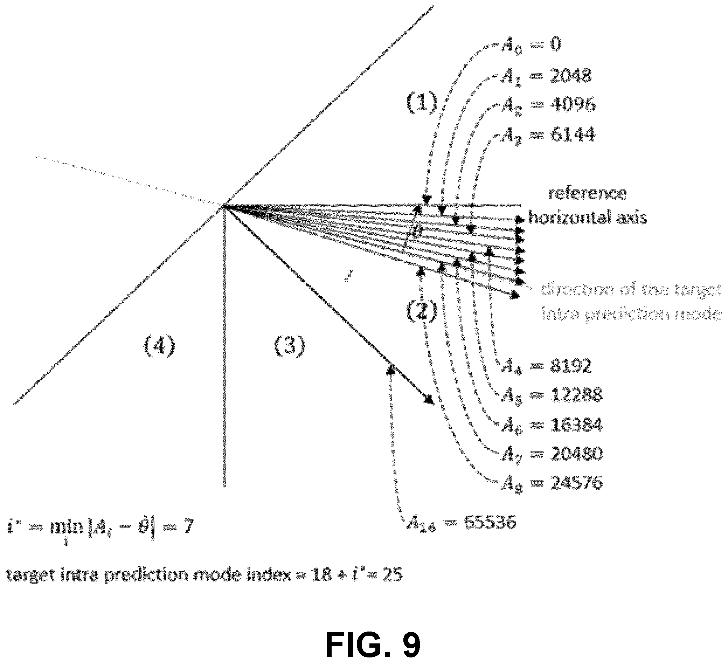

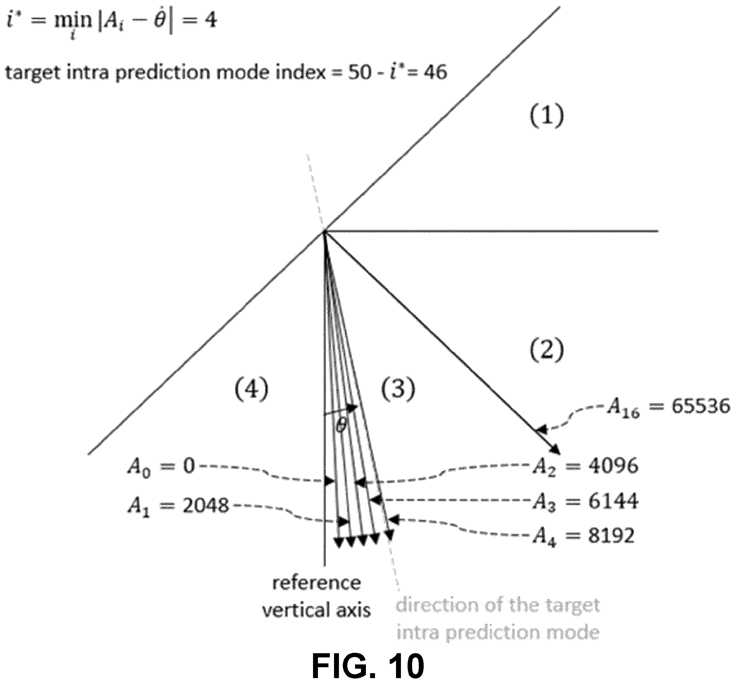

Angle discretization may be utilized. For a given reconstructed pixel at which the local vertical gradient $G_{VER}$ and the local horizontal gradient $G_{HOR}$ may be computed, for the found range of the target intra prediction mode index (e.g., see FIG. 6), the angle $\theta$ (e.g., as described herein) may not be directly compared to the angle of a (e.g., each) intra prediction mode with respect to the reference axis in this range. The absolute angle of a (e.g., each) intra prediction mode with respect to its reference axis may be stored in a scaled integer form. Therefore, $\dot{\theta} = \text{floor}(\tan(\theta) \times (1 \ll 16))$ may be compared to the scaled integer form $A_i$ of the angle of the directional intra prediction mode of index i from the reference axis, $i \in [|0, 16|]$. The floor parameter may denote the floor operation, e.g., an operation that for an input x as a result of floor(x) returns the greatest integer less than or equal to x. The absolute shift i* from the index of the reference axis to the index of the target

$$i^* = \min_i | A_i - \dot{\theta} |$$

intra prediction mode may be $i^* = \min_i | A_i - \dot{\theta} |$. The target intra prediction mode index may be (e.g., finally) equal to the index of the reference axis shifted by i*. In the conditions shown in FIG. 7, FIG. 9 illustrates the computation of the index of the target intra prediction mode using the above-mentioned discretization of $\theta$. In the conditions of FIG. 8, FIG. 10 presents the computation of the index of the target intra prediction mode using the above-mentioned discretization of $\theta$.

FIG. 9 illustrates an example of the computation of the target intra prediction mode index in the conditions of FIG. 7FIG. 7, e.g., $|G_{VER}| > |G_{HOR}|$. Note that, here, $G_{VER} < 0$ and $G_{HOR} < 0$.

FIG. 10 illustrates an example of the computation of the target intra prediction mode index in the conditions of FIG. 8, e.g., when $|G_{HOR}| \geq |G_{VER}|$. Note that, here, $G_{VER} < 0$ and $G_{HOR} < 0$.

Derivation of intra prediction modes indices from the resulting HOG.

In some examples, once the filling of the HOG is completed, the (e.g., five (5)) bins with the largest magnitudes may correspond to the indices of the (e.g., five (5)) directional intra prediction modes that most likely yield the (e.g., five (5)) predictions with the highest qualities.

A prediction may be determined. For a given block predicted via DIMD, following the derivation of the indices of the (e.g., five (5)) directional intra prediction modes, the prediction of the block may be computed, for example, by blending the (e.g., six (6)) predictions of the block via the (e.g., five (5)) directional intra prediction modes and PLANAR. The blending weights may depend on the relative magnitudes of the (e.g., five (5)) HOG bins with the largest magnitudes.

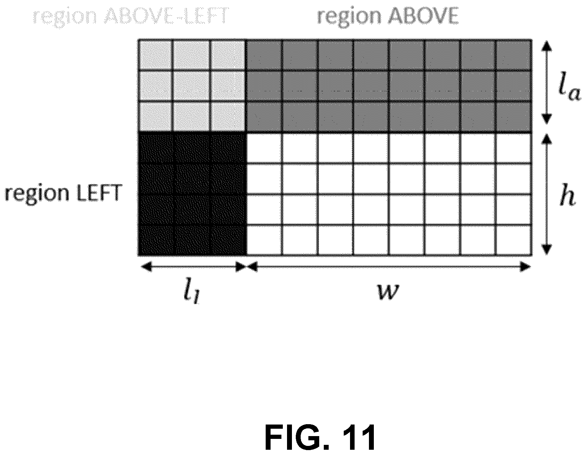

DIMD may be implemented with location dependent DIMD. In some examples, (e.g., regular) DIMD (e.g., as described herein) may be combined with a location dependent DIMD. For a given block predicted via DIMD, in the location dependent DIMD, if/when deriving an intra prediction mode index, a determination may be made whether the derivation may be mostly influenced by the portion of the context above the block or by the portion of the context on the left side of the block. For a given block predicted via DIMD, the context of the block may be divided into (e.g., three) separate regions, e.g., as shown by example in FIG. 11. For the regions ABOVE, LEFT, and ABOVE-LEFT, HOGs $H_{above}$, $H_{left}$, and $H_{aboveLeft}$, respectively, may be filled. $H_{full} = H_{above} + H_{left} + H_{aboveLeft}$. By denoting idxModeDimd$_i$ the index of the $i^{th}$ directional intra prediction mode derived by DIMD, $i \in [\![0, 5]\!]$, $H_{above}$ and $H_{left}$ may determine whether idxModeDimd$_i$ (e.g., mainly)

depends on a specific context region ABOVE or LEFT, for example, as follows:

if $H_{left}[idxModeDimd_i] < H_{full}[idxModeDimd_i]/3$:
$dimdLocDep_i = 1$, e.g., $idxModeDimd_i$ mainly depends on region ABOVE

else if $H_{above}[idxModeDimd_i] < H_{full}[idxModeDimd_i]/3$:
$dimdLocDep_i = 2$, e.g., $idxModeDimd_i$ mainly depends on region LEFT else:
$dimdLocDep_i = 0$, e.g., $idxModeDimd_i$ may not be location dependent.

FIG. 11 illustrates an example of the decomposition into (e.g., three) separate regions of the context of a given $w \times h$ block predicted via DIMD. The $w \times h$ block is displayed in white. The ABOVE, LEFT, and ABOVE-LEFT regions in the context of the block are shown in dark gray, black, and light gray, respectively.

For $i \in [\![0, 5]\!]$, $dimdLocDep_i$ may define how the prediction of the block via the intra prediction mode of index $idxModeDimd_i$ may be blended with the (e.g., five (5)) other predictions, forming the final prediction of the block. For example, if $dimdLocDep_0 = 1$, the prediction of the block via the intra prediction mode of index $idxModeDimd_0$ may be blended, e.g., by giving relatively larger weights to the predicted samples closer to the top border of the block.

DIMD may be signaled. In some examples, for a given luma Coding Block (CB), DIMD may be signaled via a DIMD flag, which may be placed before the Template Matching Prediction (TMP) flag in the decision tree of the signaling of the intra prediction mode selected to predict the luma CB.

Template-based Intra Mode Derivation (TIMD) may assume that the intra prediction modes generating the predictions of a template of reconstructed pixels around a given block to be predicted with the highest qualities may be most likely to yield the predictions of the block with the highest qualities. Explanations described herein may apply the same way at both the encoder and decoder sides. Examples may describe the prediction of a luma block via TIMD. In some examples, TIMD may apply only to luma.

Intra prediction modes indices may be derived in TIMD. For a given block predicted via TIMD, the derivation of intra prediction modes indices may include multiple (e.g., three) passes of tests of modes on the template of reconstructed pixels surrounding the block. The tests may be, for example, in terms of prediction Sum of Absolute Transform Differences (SATD).

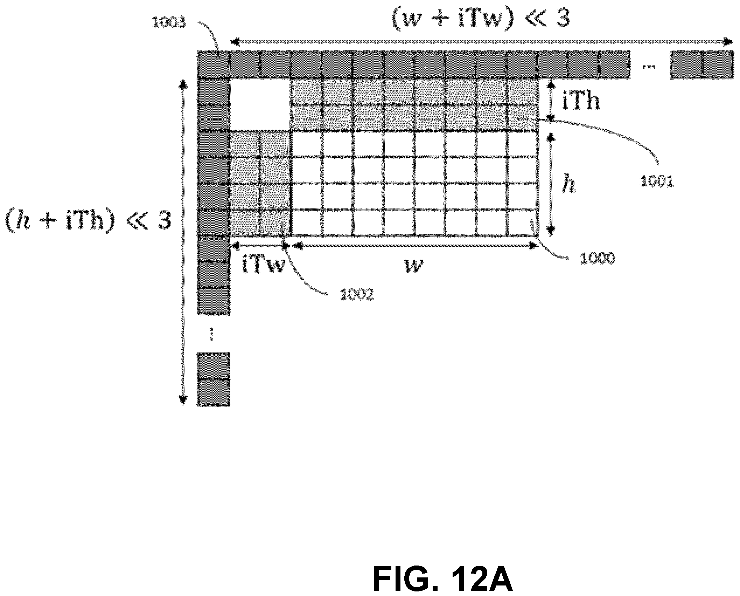

In an example of a first pass, for a given $w \times h$ block (1000), e.g., as shown by example in FIG. 12A, for a (e.g., each) index of intra prediction mode in the list $\mathcal{L}$ being the Most Probable Mode (MPM) list of (1000) supplemented with default indices in {DC_IDX, HOR_IDX, VER_IDX} (e.g., if the indices do not already exist in the MPM list), the intra prediction mode may compute a prediction of the template (1001, 1002) of reconstructed pixels surrounding (1000) from the set of reference samples (1003) of (1001, 1002), and the SATD between (1001, 1002) and its prediction may be calculated. The (e.g., two) intra prediction modes with minimum template prediction SATDs may be retained. Note that, in TIMD, the set of directional intra prediction modes may be extended, e.g., from 65 to 129. Thus, before testing a directional intra prediction mode of index idxDir on (1001, 1002) in terms of prediction SATD, idxDir may be re-mapped as idxDir = (idxDir $\ll$ 1) - 2.

In an example of a second pass, for several extended wide-angle intra prediction modes, a (e.g., each) of the modes may compute a prediction of (1001, 1002) from (1003), and the SATD between (1001, 1002) and its prediction may be calculated. The (e.g., two) intra prediction modes with minimum template prediction SATDs may be updated.

In an example of a third pass, for a (e.g., each) of the (e.g., two) intra prediction modes retained by the second pass, if the mode is neither PLANAR nor DC, its two closest directional intra prediction modes may also be tested on (1001, 1002), e.g., in terms of prediction SATD. The (e.g., two) intra prediction modes with minimum template prediction SATDs may be updated.

A blending condition may be defined. Let timdIsBlend may denote the flag indicating whether the TIMD blending applies. Let $satd_0$ and $satd_1$ be the smallest and second smallest prediction SATDs respectively. The determination whether the TIMD blending applies may be determined, for example, as follows:

$$timdIsBlend = satd_1 < 2satd_0.$$

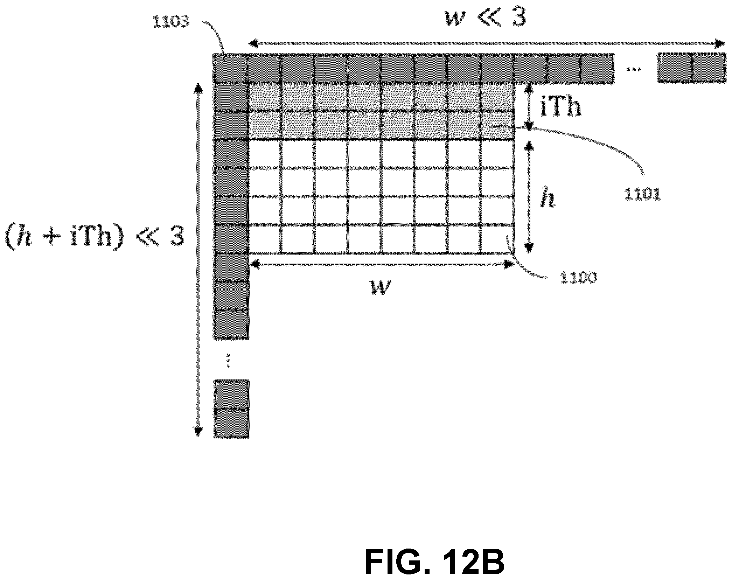

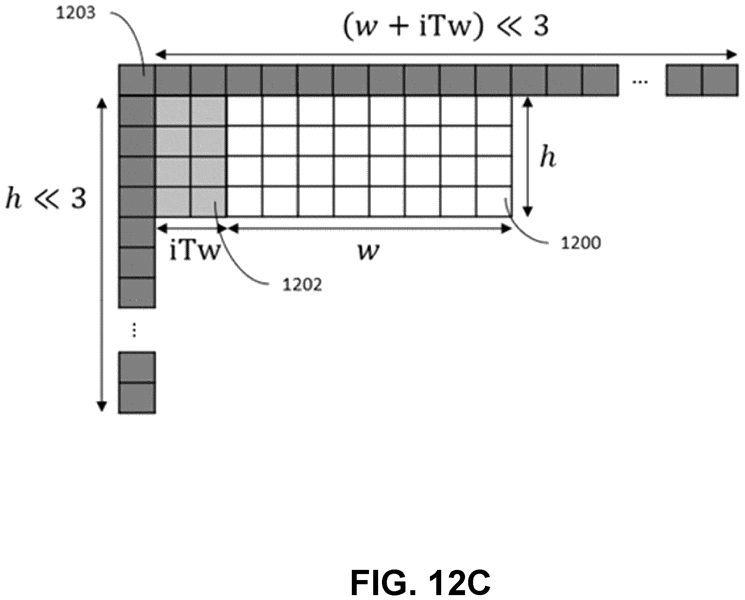

The foregoing example may assume that the template of the given $w \times h$ block does not go out of the current frame bounds. If the template portion on the left side of the block goes out of the current frame bounds, FIG. 12A may become FIG. 12B. If the template portion above the block goes out of the current frame bounds, FIG. 12A may become FIG. 12C.

FIGS. 12A-12C illustrate examples of a template of a given $w \times h$ block predicted via TIMD and the set of reference samples of the template. In some examples, iTw = 2 if $w \le 8$; otherwise, iTw = 4. iTh = 2 if $h \le 8$; otherwise, iTh = 4.

A prediction may be determined. If timdIsBlend is false, the final prediction of the current block from the set of reference samples may be performed, for example, using the first retained intra prediction mode. Otherwise, the final prediction of the current block may arise from the blending of the (e.g., two) predictions of the block via the first and second retained intra prediction modes, respectively, where the blending weights may depend on $satd_0$ and $satd_1$.

A non-angular and/or a location dependent TIMD may be implemented. During the derivation of intra prediction mode indices (e.g., as described herein), before the first pass, PLANAR and DC may be tested on the template of reconstructed pixels surrounding the given block, e.g., in terms of prediction SATD. The index $idx_{NA} \in \{PLANAR\_IDX, DC\_IDX\}$ of the non-angular intra prediction mode with the smallest prediction SATD $satd_{NA}$ may be saved. After the third pass, if timdIsBlend is true, if $idx_{NA}$ is different from the indices of the (e.g., two) retained intra prediction modes, and if $satd_{NA} < 1.5\ satd_0$, during the generation of the final prediction of the given block (e.g., as described herein), the final prediction may result from, for example, the blending of the (e.g., two) predictions of the block via the first and second retained intra prediction modes, respectively, and the prediction of the block via the intra prediction mode of index $idx_{NA}$. The blending weights may depend on $satd_0$, $satd_1$, and $satd_{NA}$.

Location dependent TIMD may be implemented. For a given $w \times h$ block (1000) predicted via TIMD whose template (1001, 1002) does not go out of the current frame bounds, the location-dependency of the $i^{th}$ retained intra prediction mode, $i \in [\![0, 2]\!]$, may be determined, for example, from a ratio of normalized prediction SATD $satd_{i,A}$ on the template portion (1001) above (1000) and normalized prediction SATD $satd_{i,L}$ on the template portion (1002) on the left side of (1000). The $0^{th}$ and $1^{st}$ retained intra prediction modes may correspond to the (e.g., two) retained intra prediction modes having prediction SATDs $satd_0$ and $satd_1$ respectively. The second retained intra prediction mode may correspond to the (e.g., optionally) retained non-angular intra prediction mode of index $idx_{NA}$ and prediction SATD $satd_{NA}$. For example:

$$\text{if } \overline{satd}_{i,A} < (1/2)\overline{satd}_{i,L}:$$

$$\text{timdLocDep}_i = 1$$

$$\text{else if } \overline{satd}_{i,L} < (1/2)\overline{satd}_{i,A}:$$

$$\text{timdLocDep}_i = 2$$

$$\text{else:}$$

$$\text{timdLocDep}_i = 0$$

where $\text{timdLocDep}_i$ may denote the location dependent parameter value associated with the $i^{th}$ retained intra prediction mode, $i \in [\![0, 2]\!]$. A value of zero (0) may indicate no location-dependency. A value of one (1) may indicate vertical location dependency. A value of two (2) may indicate horizontal location dependency. In examples, $\overline{satd}_{i,A} = satd_{i,A}/(w \times iTh)$, where $satd_{i,A}$ may denote the SATD between the template portion (1001) above (1000) and its prediction via the $i^{th}$ retained intra prediction mode. In examples, $\overline{satd}_{i,L} = satd_{i,L}/(h \times iTw)$, where $satd_{i,L}$ may denote the SATD between the template portion (1002) on the left side of (1000) and its prediction via the $i^{th}$ retained intra prediction mode.

In examples, if the template portion on the left side of the given $w \times h$ block goes out of the current frame bounds, $\text{timdLocDep}_i = 1, \forall i \in [\![0, 2]\!]$. In examples, if the template portion above the given block goes out of the current frame bounds, $\text{timdLocDep}_i = 2, \forall i \in [\![0, 2]\!]$.

In examples, if timdIsBlend is true, for $i \in [\![0, 2]\!]$, $\text{timdLocDep}_i$ may define how the prediction of the block via the $i^{th}$ retained intra prediction mode may be blended with the other prediction(s), forming the final prediction of the block. For example, assuming that timdIsBlend is true, if $\text{timdLocDep}_0 = 1$, the prediction of the block via the $0^{th}$ retained intra prediction mode may be blended, for example, by using relatively larger weights for the predicted samples closer to the top border of the block. For example, assuming that timdIsBlend is true, if $\text{timdLocDep}_0 = 2$, the prediction of the block via the $0^{th}$ retained intra prediction mode may be blended, for example, by giving relatively larger weights to predicted samples closer to the left border of the block.

TIMD may be signaled. In some examples, for a given luma CB, TIMD may be signaled via a TIMD flag, which may be placed before the Extrapolation-based Intra Prediction (EIP) flag and after the Matrix-based Intra Prediction (MIP) flag in the decision tree of the signaling of the intra prediction mode selected to predict this luma CB.

Spatial Geometric Partition Mode (SGPM) may be implemented. A given block predicted via Spatial Geometric Partition Mode (SGPM) may be split into (e.g., two) partitions along a frontier. The prediction of the block may be produced, for example, by blending the predictions of the block via (e.g., two) different intra prediction modes. The blending weights may depend on the frontier. A list of (e.g., 16) triplets of a partition mode index and (e.g., two) intra prediction modes indices may be derived via tests on a template of the block. At the encoder side, if SGPM is selected to predict the block, the index in the list of the selected triplet may be signaled to the decoder. The details (e.g., all the details) of examples described herein may apply (e.g., the same way) at both the encoder and decoder sides. Examples may focus on the prediction of a luma block via SGPM. In some examples, SGPM may apply (e.g., only) to luma.

The list of triplets of a partition mode index and (e.g., two) intra prediction modes indices may be derived.

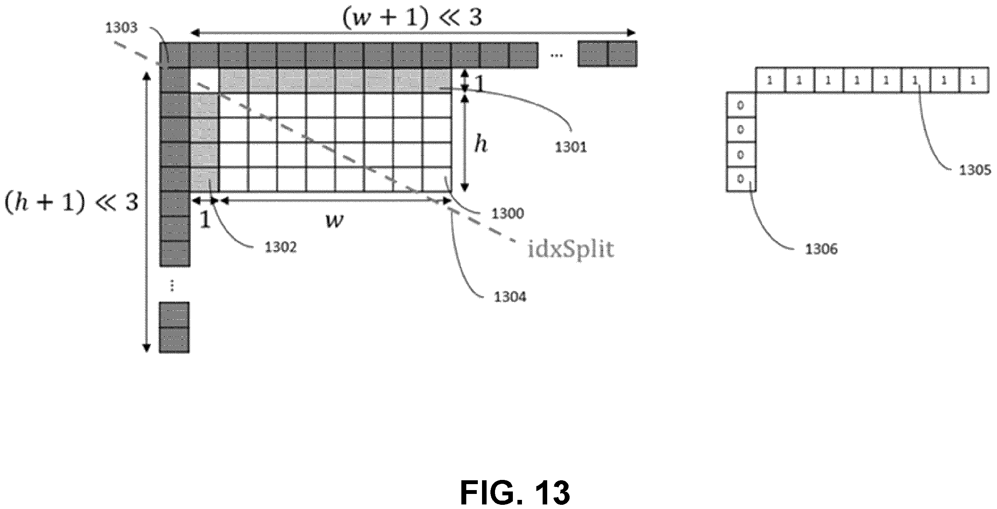

For a given $w \times h$ block (1300) predicted via SGPM, e.g., as shown by example in FIG. 13, the derivation of the list of (e.g., 16) triplets of a partition mode index and (e.g., two) intra prediction modes indices may go through multiple (e.g., three) operations.

In an example of a first operation, for an (e.g., each) index $\mathrm{idxSplit} \in [\![0, 63]\!]$ of partition mode, for an (e.g., each) index $\mathrm{idxPart} \in [\![0, 1]\!]$ of partition resulting from the split of the block using the partition mode of index idxSplit, a list $\mathcal{L}_{\mathrm{idxSplit,idxPart}}$ of three indices of intra prediction modes to be tested on a template of the block may be constructed. By scanning candidate intra prediction modes successively, a candidate mode index may be added to $\mathcal{L}_{\mathrm{idxSplit,idxPart}}$ (e.g., if it does not already exist in $\mathcal{L}_{\mathrm{idxSplit,idxPart}}$ ). The candidate intra modes may be (e.g., two) intra prediction modes derived via a modified TIMD applied to the block, the intra prediction mode whose direction is parallel to the frontier associated with idxSplit, the first intra prediction mode derived via DIMD applied to the block, and intra prediction modes selected to predict neighboring blocks, the choice of the neighboring blocks depending on idxSplit and idxPart.

In an example of a second operation, for a (e.g., each) index idxMode of intra prediction mode inside $\left\{\mathcal{L}_{\mathrm{idxSplit,idxPart}}\right\}_{\mathrm{idxSplit} \in [\![0,63]\!], \mathrm{idxPart} \in [\![0,1]\!]}$ , the mode may compute a prediction of the template (1301, 1302) of reconstructed pixels surrounding (1300) from the set of reference samples (1303) of (1301, 1302). The Sum of Absolute Differences (SAD) $\mathrm{sad}_{\mathrm{idxMode}}$ between (1301, 1302) and its prediction may be calculated. In examples, for $\mathrm{idxSplit} \in [\![0, 63]\!]$ , the SAD $\mathrm{sad}_{\mathrm{idxSplit,idxMode}}$ between the portion (1301, 1302) on the right side of the frontier (1304) associated with idxSplit and its prediction may be calculated.

In an example of a third operation, for $\mathrm{idxSplit} \in [\![0, 63]\!]$ , for $(i, j) \in [\![0, 2]\!]^2$ , $i \neq j$, the SAD between (1301, 1302) and its prediction via SGPM involving the partition mode of index idxSplit and the (e.g., two) intra prediction modes of indices $\mathcal{L}_{\mathrm{idxSplit,0}}$ [$i$] and $\mathcal{L}_{\mathrm{idxSplit,1}}$ [$j$] may be computed, for example, as $\mathrm{sad}_{\mathrm{idxSplit},\mathcal{L}_{\mathrm{idxSplit,0}}[i]} + \mathrm{sad}_{\mathcal{L}_{\mathrm{idxSplit,1}}[j]} - \mathrm{sad}_{\mathrm{idxSplit},\mathcal{L}_{\mathrm{idxSplit,1}}[j]}$ . The list IL of 16 triplets may be filled (e.g., in ascending order) based on the latter prediction SAD.

In some examples, e.g., in a second operation, the computation of $\mathrm{sad}_{\mathrm{idxSplit,idxMode}}$ may be done by multiplying elementwise the absolute difference between (1301, 1302) and its prediction with the binary mask (1305, 1306) and summing up the result of the elementwise multiplication. The binary mask (1305, 1306) may depend on idxSplit.

FIG. 13 illustrates an example of a template (1301, 1302) of a given $w \times h$ block (1300) predicted via SGPM and the set (1303) of reference samples of (1301, 1302). The block may be split into (e.g., two) partitions via the partition mode of index idxSplit = 14.

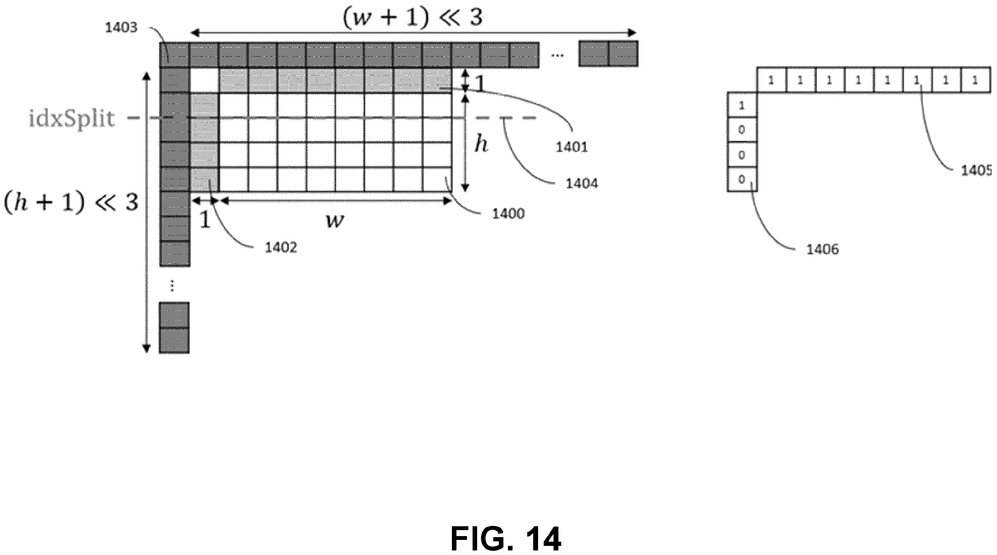

FIG. 14 illustrates an example of a template (1401, 1402) of a given $w \times h$ block (1400) predicted via SGPM and the set (1403) of reference samples of (1401, 1402). The block may be split into (e.g., two) partitions via the partition mode of index idxSplit = 19.

A prediction may be determined. For a given $w \times h$ block predicted via SGPM, IL[idxSgpm] = {idxSplit, idxModeSgpmO, idxModeSgpm1}, where idxSgpm may denote the index in IL of the triplet selected for prediction. The final prediction predfinal of the block may be expressed, e.g., for $x \in [\![0, w-1]\!]$ and $y \in [\![0, h-1]\!]$ , as follows:

$$\mathrm{predFinal}(x,y) = \mathrm{clip}((w(x, y) * \mathrm{pred0}(x, y) + (32 - w(x,y)) * \mathrm{pred0}(x, y) + 16) \gg 5, 0, 1023 )$$

where pred0 and pred1 may denote the predictions of the block via the intra prediction modes of indices idxModeSgpmO and idxModeSgpm1, respectively. Weight $w(x, y)$ may denote the weight at position $(x, y)$ inside the predicted block. Weight $w(x, y)$ may depend on idxSplit. Clip( . ,0,1023) may clip its input scalar, for example, to [0, 1023].

SGPM may be signaled. In some examples, for a given luma CB, SGPM may be signaled via a SGPM flag, which may be placed before the Template-based Multiple Reference Lines (TMRL) flag and after the EIP flag in the decision tree of the signaling of the intra prediction mode selected to predict the luma CB. In examples, if the SGPM flag is true (e.g., indicating SGPM may be selected to predict the luma CB), idxSgpm may be signaled, for example, via a truncated binary code of length 16.

Template-based Multiple Reference Line (TMRL) may be implemented. The list of pairs of an extended reference line index and a mode index may be derived.

In examples, for a given block predicted via TMRL, a (e.g., each) allowed pair of an extended reference line and an intra prediction mode may be tested on a template of the block, e.g., in terms of prediction SAD. An index of an extended reference line may belong to {1, 3, 5, 7, 12}. An index of an intra prediction mode may belong to $[\![1, 131]\!]$, for example, as TMRL may involve the extended set of 129 directional intra prediction modes, e.g., excluding PLANAR. The list $\overline{\mathbb{L}}$ of (e.g., 20) pairs of an extended reference line index and an intra prediction mode index may be filled, for example, in ascending order of the prediction SAD.

A prediction may be determined. For a given block predicted via TMRL, the pair of an extended reference line and an intra prediction mode of indices $\overline{\mathbb{L}}[\mathrm{idxTmrl}]$ may be used to predict the block, where idxTmrl may denote the index in

$\overline{\mathbb{L}}$ of the selected pair.

TMRL may be signaled. In some examples, for a given luma CB, TMRL may be signaled via a TMRL flag, which may be placed after the SGPM flag in the decision tree of the signaling of the intra prediction mode selected to predict the luma CB. In examples, if the TMRL flag is true, idxTmrl may be signaled, for example, via a truncated Golomb-Rice code with divisor 4.

Neural network-based intra prediction may be performed. The broadest definition of neural network-based intra prediction may be used in the embodiments described herein. For example, "neural network-based intra prediction" may refer to an intra prediction tool in which a series of one or multiple layers, e.g., a layer including an affine (or linear) transformation that may be followed by a non-linear function, may be used to compute a prediction of a current block from already reconstructed pixels around the current block. Examples of "neural network-based intra prediction" may include neural network video coding (NNVC) and matrix-based intra prediction (e.g., multiplying a vector of reconstructed pixels around a current block with a matrix to get a prediction of the current block) as described herein.

Neural network (NN)-based intra prediction may be performed, for example, in Neural Network Video Coding (NNVC), which may be implemented by a hybrid block-based video codec.

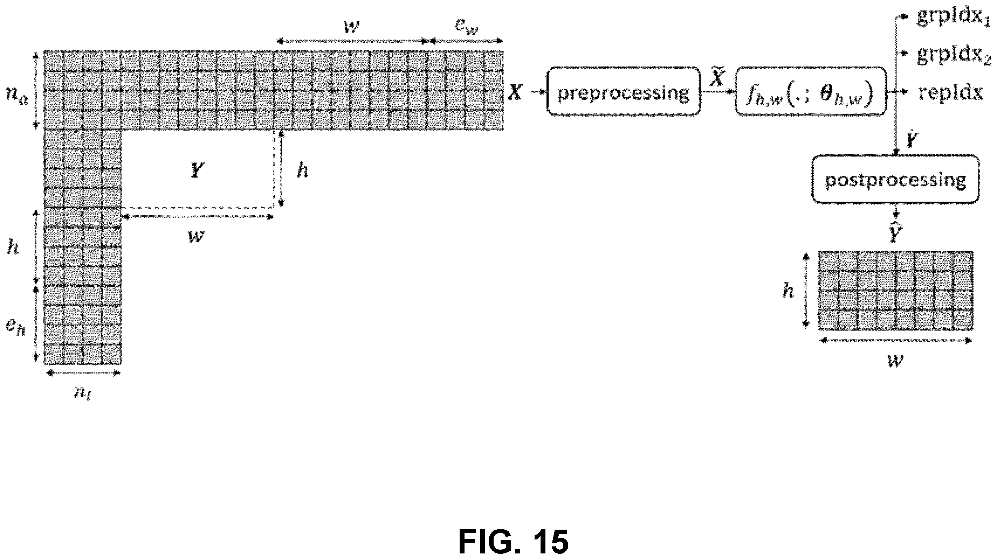

A neural network may include an inference. The NN-based intra prediction mode may include, for example, seven NNs, each dedicated to predicting blocks of a different size in {$4 \times 4$, $8 \times 4$, $16 \times 4$, $32 \times 4$, $8 \times 8$, $16 \times 8$, $16 \times 16$}. The NN predicting blocks of size $w \times h$ may be denoted $f_{h,w}(. ; \theta_{h,w})$, where $\theta_{h,w}$ gathers its parameters. For a given $w \times h$ block $Y$, $f_{h,w}(. ; \theta_{h,w})$ may take a preprocessed version $\tilde{X}$ of the context $X$ made of $n_a$ rows of $n_l + 2w + e_w$ reference samples located above the block and $n_l$ columns of $2h + e_h$ reference samples on its left side to provide $\dot{Y}$. The application of a postprocessing to $\dot{Y}$ may yield a prediction $\hat{Y}$ of $Y$, e.g., as shown by example in FIG. 15. The NN $f_{h,w}(. ; \theta_{h,w})$ may return (e.g., two) indices grpIdx$_1$ and grpIdx$_2$. Index grpIdx$_i$ may denote the index characterizing the Low Frequency Non-Separable Transform (LFNST) set index and whether the primary transform coefficients resulting from the application of the Discrete Cosine Transform (DCT)-2 horizontally and the DCT-2 vertically to the residue of the neural network prediction may be transposed if/when IfnstIdx = $i$, $i \in \{1, 2\}$. Index IfnstIdx may denote the LFNST index. In examples, IfnstIdx = 0 may indicate that LFNST may not be used for coding $Y$. In examples, IfnstIdx $\in \{1, 2\}$ may indicate that LFNST may be used for coding $Y$, e.g., involving the kernel of index IfnstIdx - 1 inside the LFNST set of a given index. The NN $f_{h,w}(. ;$

$\theta_{h,w})$ may give the index $\mathrm{repIdx} \in [\![0, 66]\!]$ of the WC intra prediction mode (e.g., PLANAR, DC, or directional intra prediction mode) whose prediction of $Y$ from the reference samples surrounding $Y$ best represents **P.**

FIG. 15 illustrates an example prediction of the current $w \times h$ block $Y$ from the context $X$ of reference samples around $Y$ via the NN-based intra prediction mode. In examples, w = 8, $h$ = 4. In examples, $n_a = n_l = e_h = e_w = 4$.

Signaling may be provided by an encoder to a decoder. For example, there may be signaling in luma.

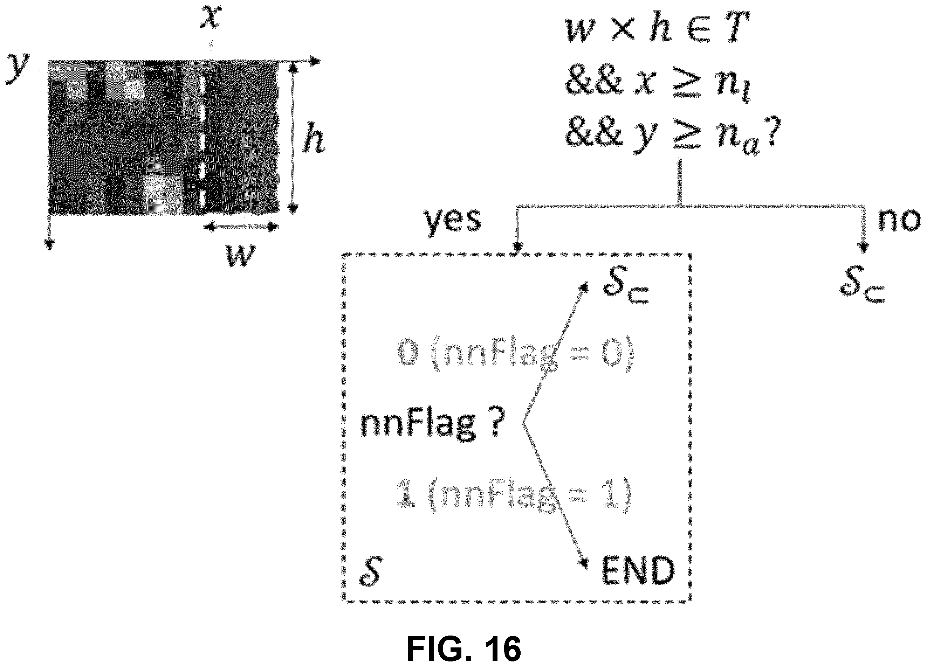

For the current $w \times h$ luma CB, e.g., whose top-left pixel may be at position $(x, y)$ in the current luma channel, the intra prediction mode signaling in luma may be split into multiple (e.g., two) cases. For example, if $w \times h \in$ T, the nnFlag may appear in the intra prediction mode signaling in luma. In examples, the nnFlag = 1 may indicate that the NN-based intra prediction mode may be selected to predict the current luma CB and END. The nnFlag = 0 may indicate that the NN-based intra prediction mode may not be selected to predict the current luma CB, which may indicate that the regular intra prediction mode signaling in luma, denoted $S_\subset$, may apply, e.g., as shown by example in FIG. 16. Otherwise, the regular intra prediction mode signaling in luma $S_\subset$ may apply. The set T may be, for example, as follows:

$T=\{4\times4, 4\times8, 8\times4, 4\times16, 16\times4, 4\times32, 32\times4, 8\times8, 8\times16, 16\times8, 8\times32, 32\times8, 16\times16, 16\times32, 32\times16, 32\times32, 64\times64\}$

In examples, if "$w \times h \in T$ && nnFlag = 1, " if the context of the current luma CB goes out of the bounds of the current luma channel, e.g., $x < n_l \,\|\, y < n_a$, the NN-based intra prediction may be replaced by PLANAR.

FIG. 16 illustrates an example of intra prediction mode signaling for the current $w \times h$ luma CB framed in a dashed line. The coordinates of the pixel at the top-left of the CB may be $(x, y)$. The bin value of an nnFlag value is shown in gray. In examples, $h = 8$, $w = 4$, $x = 8$, and $y = 0$.

Signaling may be performed in chroma. For example, for the current pair of $w \times h$ chroma CBs, which may have a top-left pixel at position $(x, y)$ in the current pair of chroma channels, the intra prediction mode signaling in chroma may be split into (e.g., two) cases.

For example, if the luma CB collocated with the pair of chroma CBs may be predicted by the NN-based intra prediction mode, if $w \times h \in T$, the Direct Mode (DM) may become the NN-based intra prediction mode; Otherwise, the DM may be set to PLANAR.

Otherwise, if $w \times h \in T$, nnFlagChroma may appear in the intra prediction mode signaling in chroma. In examples, the nnFlagChroma may be placed before the DM flag in the decision tree of the intra prediction mode signaling in chroma. In examples, nnFlagChroma = 1 may indicate that the NN-based intra prediction mode may be selected to predict the current pair of chroma CBs and END. In examples, nnFlagChroma = 0 may indicate that the NN-based intra prediction mode may not be selected to predict the current pair of chroma CBs. The regular intra prediction mode signaling in chroma may resume from the DM flag; Otherwise, the regular intra prediction mode signaling in chroma may apply.

In examples, if "$w \times h \in T$" and DM becomes the NN based intra prediction mode, or if "$w \times h \in T$ && nnFlagChroma = 1" and the context of the current chroma CB goes out of the bounds of the current chroma channel (e.g., $x < n_l \,\|\, y < n_a$), the NN-based intra prediction may be replaced by PLANAR.

Transformation may be performed on the context and neural network prediction. For example, for a given $w \times h$ block, if $w \times h \in T$, the NN-based intra prediction mode may predict the block, but the NN-based intra prediction mode may not include $f_{h,w}(.\,; \theta_{h,w})$. In this case, the context of the current block may be down-sampled vertically by a factor $\delta$, down-sampled horizontally by a factor $\gamma$, and/or transposed, for example, before the operation "preprocessing" shown in FIG. 15. The prediction of the current block may be transposed, up-sampled vertically by the factor $\delta$, and/or up-sampled horizontally by the factor $\gamma$, for example, after the operation "postprocessing" shown in FIG. 15. The transposition of the context of the current block and the prediction, $\delta$, and $\gamma$ may be chosen, for example, so that a neural network belonging to the NN-based intra prediction mode may be used for prediction, e.g., as shown by example in

| $w \times h$ | transposition | $\gamma$ | $\delta$ | NN used for prediction |
|---|---|---|---|---|
| $4 \times 4$ | no | 1 | 1 | $f_{4,4}(.,\theta_{4,4})$ |
| $8 \times 4$ | no | 1 | 1 | $f_{4,8}(.,\theta_{4,8})$ |
| $4 \times 8$ | yes | 1 | 1 | $f_{4,8}(.,\theta_{4,8})$ |
| $16 \times 4$ | no | 1 | 1 | $f_{4,16}(.,\theta_{4,16})$ |
| $4 \times 16$ | yes | 1 | 1 | $f_{4,16}(.,\theta_{4,16})$ |
| $32 \times 4$ | no | 1 | 1 | $f_{4,32}(.,\theta_{4,32})$ |
| $4 \times 32$ | yes | 1 | 1 | $f_{4,32}(.,\theta_{4,32})$ |
| $8 \times 8$ | no | 1 | 1 | $f_{8,8}(.,\theta_{8,8})$ |
| $16 \times 8$ | no | 1 | 1 | $f_{8,16}(.,\theta_{8,16})$ |
| $8 \times 16$ | yes | 1 | 1 | $f_{8,16}(.,\theta_{8,16})$ |
| $32 \times 8$ | no | 2 | 1 | $f_{8,16}(.,\theta_{8,16})$ |
| $8 \times 32$ | yes | 1 | 2 | $f_{8,16}(.,\theta_{8,16})$ |
| $16 \times 16$ | no | 1 | 1 | $f_{16,16}(.,\theta_{16,16})$ |
| $32 \times 16$ | no | 2 | 1 | $f_{16,16}(.,\theta_{16,16})$ |
| $16 \times 32$ | no | 1 | 2 | $f_{16,16}(.,\theta_{16,16})$ |
| $32 \times 32$ | no | 2 | 2 | $f_{16,16}(.,\theta_{16,16})$ |
| $64 \times 64$ | no | 4 | 4 | $f_{16,16}(.,\theta_{16,16})$ |

Table 1.

| $w \times h$ | transposition | $\gamma$ | $\delta$ | NN used for prediction |
|---|---|---|---|---|
| $4 \times 4$ | no | 1 | 1 | $f_{4,4}(.,\theta_{4,4})$ |
| $8 \times 4$ | no | 1 | 1 | $f_{4,8}(.,\theta_{4,8})$ |
| $4 \times 8$ | yes | 1 | 1 | $f_{4,8}(.,\theta_{4,8})$ |
| $16 \times 4$ | no | 1 | 1 | $f_{4,16}(.,\theta_{4,16})$ |
| $4 \times 16$ | yes | 1 | 1 | $f_{4,16}(.,\theta_{4,16})$ |
| $32 \times 4$ | no | 1 | 1 | $f_{4,32}(.,\theta_{4,32})$ |
| $4 \times 32$ | yes | 1 | 1 | $f_{4,32}(.,\theta_{4,32})$ |
| $8 \times 8$ | no | 1 | 1 | $f_{8,8}(.,\theta_{8,8})$ |
| $16 \times 8$ | no | 1 | 1 | $f_{8,16}(.,\theta_{8,16})$ |
| $8 \times 16$ | yes | 1 | 1 | $f_{8,16}(.,\theta_{8,16})$ |
| $32 \times 8$ | no | 2 | 1 | $f_{8,16}(.,\theta_{8,16})$ |
| $8 \times 32$ | yes | 1 | 2 | $f_{8,16}(.,\theta_{8,16})$ |
| $16 \times 16$ | no | 1 | 1 | $f_{16,16}(.,\theta_{16,16})$ |
| $32 \times 16$ | no | 2 | 1 | $f_{16,16}(.,\theta_{16,16})$ |
| $16 \times 32$ | no | 1 | 2 | $f_{16,16}(.,\theta_{16,16})$ |
| $32 \times 32$ | no | 2 | 2 | $f_{16,16}(.,\theta_{16,16})$ |
| $64 \times 64$ | no | 4 | 4 | $f_{16,16}(.,\theta_{16,16})$ |

Table 1 - Example of decision of transposing the context of the current $w \times h$ block to be predicted and the prediction of the block, the value of $\gamma$, and the value of $\delta$, and the neural network belonging to the NN-based intra prediction mode used for prediction for a (e.g., each) $w \times h \in T$.

In some examples, matrix-based intra prediction may replace conventional (e.g., hybrid block-based, including template-based) intra prediction modes. For a given block to be predicted, the weights of a matrix (e.g., corresponding to a layer of a neural network) used for the prediction of a given block may be multiplied by the reference samples inside a template (e.g., an L-shape causal neighborhood template) around the given block to compute the prediction samples (e.g., instead of using a hybrid block-based intra prediction mode to derive those samples). In examples, an L-shape causal neighborhood template may be as shown on the left-hand side of FIG. 15, for example, if/when $n_a = n_l = 4$ and $e_h = e_w = 0$.

For a given $w \times h$ block to be predicted, denoting the vector of $k \in \mathbb{N}^*$ reference samples in the L-shape causal neighborhood template as $\tilde{X}$ and the matrix of $khw$ weights as $W$, the vector $\dot{Y}$ of $hw$ predicted samples may be computed, for example, in accordance with the following vector-matrix multiplication:

$$\dot{Y} = \tilde{X}W$$

In some implementations of video encoders/decoders (codecs), the replacement of conventional intra prediction modes by matrix-based intra prediction may (e.g., only) be enabled for certain block sizes, such as $w \leq 16$ and $h \leq 16$, and/or for modes of indices 0, 1, and $2 + 4 * i$, where $i = \{0, 1, 2, ..., 16\}$, e.g., every four (4) modes. The term "conventional intra prediction mode" may refer, for example, to an intra prediction mode in {PLANAR, DC, 65 directional intra prediction modes, etc.}. In these implementations, no extra signaling may be needed to enable the replacement of conventional intra prediction modes by matrix-based intra prediction.

In some implementations of hybrid block-based video codecs, an NN-based intra prediction may not be combined with other advanced prediction tools such as template-based prediction tools, for example, because of the large additional decoding complexities the potential combinations may incur.

However, in these hybrid block-based video codecs, if NN-based intra prediction is used to replace (or supplement), at least partially, the hybrid block-based prediction modes, it may be preferable (e.g., in terms of rate-distortion efficiency) to activate/deactivate the NN-based intra prediction inside the derivation operation of the hybrid block-based (e.g., including template-based) prediction modes or inside the prediction operation of the hybrid block-based prediction mode, if proper constraints are imposed based on the encoding or decoding complexity involved. A set of NNs with limited size may be used by the NN-based intra prediction, for example, because of constraints on the memory footprint of the NN-based intra prediction. Given a set of NNs with limited size, the NN-based intra prediction may be activated/deactivated inside the derivation operation of a given hybrid block-based (e.g., including template-based) prediction tool or inside the prediction operation of the hybrid block-based prediction tool.

Combinations of NN-based intra prediction and hybrid block-based (e.g., including template-based) prediction tools may be advantageous, for example, in terms of a trade-off between additional decoding complexity, memory footprint of the NN-based intra prediction, and/or rate-distortion efficiency.

NN-based intra prediction may be combined with hybrid block-based (e.g., including template-based) prediction tools. For example, NN-based intra prediction may be activated/deactivated inside the derivation operation of a template-based prediction tool or inside its prediction operation, and the activation/deactivation may be conditional (e.g., parametrized by a complexity budget, the definition of preprocessing and postprocessing that may occur before and after, respectively, the NN computations, etc.). As another example, the NN computations may be truncated, for example, to maximize the use of a NN during the derivation/prediction operation of the template-based prediction tool. As yet another example, a proxy NN may be used, for example, to limit the complexity of the NN-based intra prediction during the derivation/prediction operation of the template-based prediction tool.

Below are examples describing the combination of NN-based intra prediction and a hybrid block-based (e.g., including template-based) prediction tool. Even though the examples may be described using the term "matrix-based intra prediction," the examples may be applied generally to all NN-based prediction techniques (e.g., the matrix may include a set of weights of an NN or correspond to a single-layer NN), including deep neural network (e.g., neural network comprising multiple layers) based prediction techniques. And even though the examples may be described as using a NN-based prediction technique to "replace" a hybrid block-based coding mode, those skilled in the art will understand that "replacing" may include "supplementing," in which case only certain operations (e.g., derivation and/or prediction) associated with the hybrid block-based coding mode, while maintaining other operations (e.g., transform and coefficients coding) of the hybrid block-based coding mode.

Activation/deactivation of matrix-based intra prediction inside a (e.g., template-based) prediction tool may be conditional.

In some examples, if matrix-based intra prediction replaces hybrid block-based intra prediction modes, the activation/deactivation of matrix-based intra prediction and a determination of which matrix to use inside the derivation/prediction operation of a template-based prediction tool may depend on, for example, a complexity budget and/or the definition of preprocessing and postprocessing occurring before and after, respectively, the matrix-based computations.

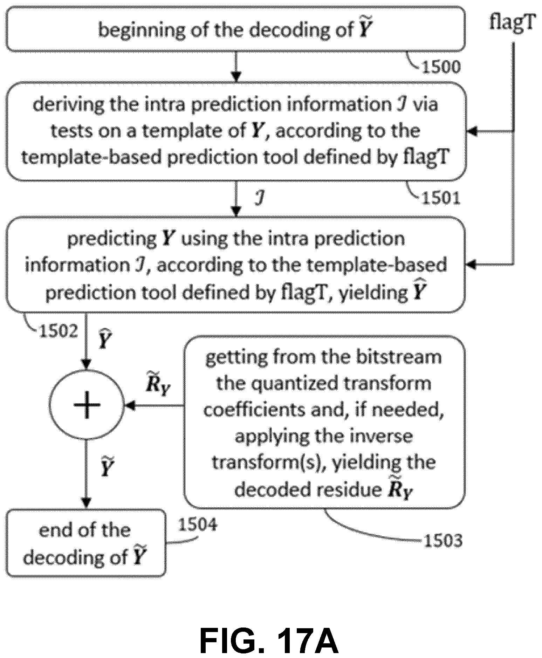

For example, at the decoder side of a hybrid block-based video codec, FIGS. 17A-17C show an example of a process for obtaining the reconstruction $\tilde{Y}$ of a given $w \times h$ block $Y$.

As shown in FIG. 17A, at 1500, the decoding of $\tilde{Y}$ may begin.

At 1501, intra prediction information $\mathcal{J}$ may be derived via tests on a template of $Y$. The template-based tool may be identified by a flag flagT previously read from the bitstream.

At 1502, $Y$ may be predicted using $\mathcal{J}$, which may yield $\hat{Y}$.

At 1503, the decoded residue $\tilde{R}_Y$ may be obtained via entropy decoding and inverse transform(s). Then, $\tilde{Y} = \hat{Y} + \tilde{R}_Y$.

At 1504, the decoding of $\tilde{Y}$ may end.

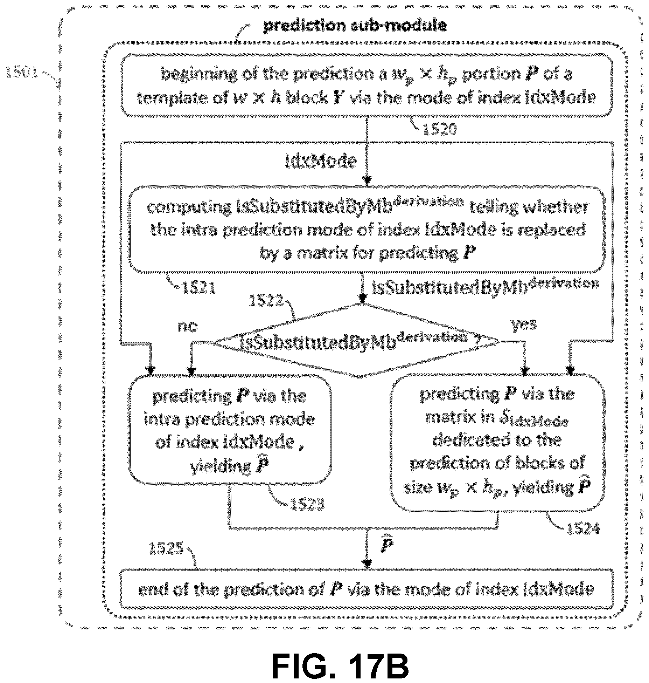

In examples, at 1501 in FIG. 17A, the tests on a template of $Y$ may call a prediction sub-module, which may include, for example, 1520 to 1525 shown in FIG. 17B.

As shown in FIG. 17B, at 1520, the prediction of a $w_p \times h_p$ portion $P$ of a template of $Y$ via the mode of index idxMode may start.

At 1521, isSubstitutedByMb$^{derivation}$ may be computed. For example, isSubstitutedByMb$^{derivation}$ may indicate whether the intra prediction mode of index idxMode may be replaced by a matrix for predicting $P$.

At 1522, if isSubstitutedByMb$^{derivation}$ is true, the process may move on to 1524. Otherwise, the process may get to 1523.

At 1523, $P$ may be predicted by the intra prediction mode of index idxMode, which may yield $\hat{P}$.

At 1524, $P$ may be predicted via the matrix in $\mathcal{S}_{\mathrm{idxMode}}$ dedicated to the prediction of blocks of size $w_p \times h_p$, which may yield $\hat{P}$. $\mathcal{S}_{\mathrm{idxMode}}$ may gather the matrices for replacing the intra prediction mode of index idxMode, for given block sizes. For example, $\mathcal{S}_{\mathrm{idxMode}} = \{W^{\mathrm{idxMode}}_{4,4}, W^{\mathrm{idxMode}}_{4,8}, W^{\mathrm{idxMode}}_{8,4}, W^{\mathrm{idxMode}}_{4,16}, W^{\mathrm{idxMode}}_{16,4}, W^{\mathrm{idxMode}}_{8,8}, W^{\mathrm{idxMode}}_{8,16}, W^{\mathrm{idxMode}}_{16,8}\}$, where $W^{\mathrm{idxMode}}_{h,w}$ may denote the matrix for replacing the intra prediction mode of index idxMode, specific to blocks

of size $w \times h$.

At 1525, the prediction of **P** via the mode of index idxMode may end.

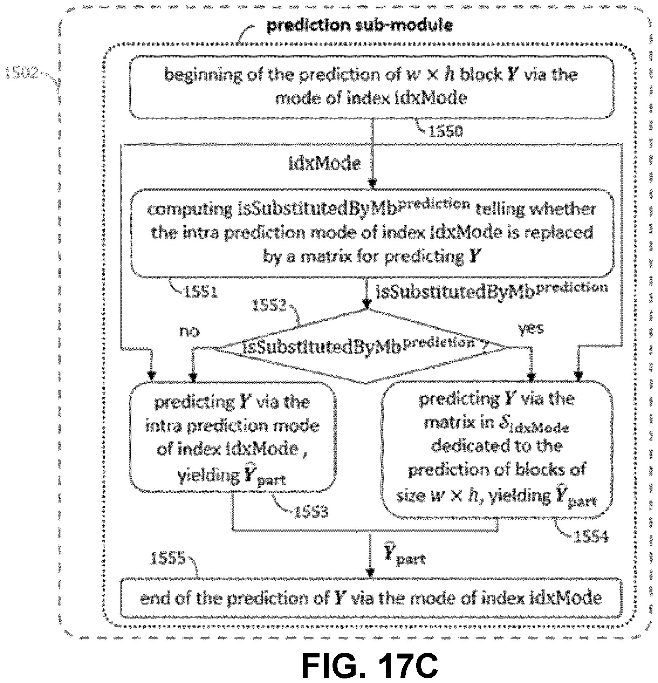

In examples, at 1502 in FIG. 17A, the prediction of **Y** may go through a prediction sub-module, which may include, for example, 1550 to 1555 shown in FIG. 17C.

As shown in Fig. 17C, at 1550, the prediction of **Y** via the mode of index idxMode may begin.

At 1551, isSubstitutedByMb$^{prediction}$ may be computed. For example, isSubstitutedByMb$^{prediction}$ may indicate whether the intra prediction mode of index idxMode may be replaced by a matrix for predicting **Y**.

At 1552, if isSubstitutedByMb$^{prediction}$ is true, the process may get to 1554. Otherwise, the process may go on to 1553.

At 1553, **Y** may be predicted by the intra prediction mode of index idxMode, which may yield $\hat{Y}_{part}$.

At 1554, **Y** may be predicted via the matrix in $\mathcal{S}_{\mathrm{idxMode}}$ dedicated to the prediction of blocks of size $w \times h$, which may yield $\hat{Y}_{part}$.

At 1525, the prediction of **Y** via the mode of index idxMode may end.

The prediction sub-module may return $\hat{Y}_{part}$, for example, because further operations may be needed to generate $\hat{Y}$ from $\hat{Y}_{part}$. For example, $\hat{Y}_{part}$ may be blended with other prediction(s) of **Y** to get the final prediction $\hat{Y}$ of **Y**.

Further examples are provided to specify isSubstitutedByMb$^{derivation}$ and isSubstitutedByMb$^{prediction}$.

In examples, the matrix-based intra prediction may be deactivated (e.g., systematically) during the derivation operation. For example, during the derivation operation of the template-based prediction tool of interest, the matrix-based intra prediction may be systematically deactivated.

For example, as shown in FIG. 17B, at 1521, isSubstitutedByMb$^{derivation}$ may be set to false to deactivate matrix-based intra prediction (e.g., regardless of whether a matrix exists for performing NN-based derivation). At 1551,

$$\mathrm{isSubstitutedByMb}^{\mathrm{prediction}} = \boldsymbol{W}_{h,w}^{\mathrm{idxMode}} \in \mathcal{S}_{\mathrm{idxMode}}.$$

In examples, the matrix-based intra prediction may be activated, for example, (e.g., if/when possible) during the derivation operation. For example, during the derivation operation of the template-based prediction tool of interest, the matrix-based intra prediction may be activated if there exists a matrix for predicting a portion of a template of the current block.

For example, as shown in FIG. 17B, at 1521, $\mathrm{isSubstitutedByMb}^{\mathrm{derivation}} = \boldsymbol{W}_{h_p,w_p}^{\mathrm{idxMode}} \in$ $\mathcal{S}_{\mathrm{idxMode}}$. At 1551,

$$\mathrm{isSubstitutedByMb}^{\mathrm{prediction}} = \boldsymbol{W}_{h,w}^{\mathrm{idxMode}} \in \mathcal{S}_{\mathrm{idxMode}}.$$

In examples, the matrix-based intra prediction may be activated, for example, depending on a complexity budget. For example, during the derivation operation of the template-based prediction tool of interest or during its prediction operation, the matrix-based intra prediction may be activated if its current cumulated complexity score has not exceeded a threshold.

For example, for a given block **Y** in the current frame, the current cumulated complexity score of the matrix-based intra prediction may be the cumulated estimated number of instructions due to the application of the matrix-based intra prediction from the beginning of the reconstruction of the current frame to the beginning of the reconstruction of **Y**.

For (e.g., another) example, for a given block **Y** in the current frame, the current cumulated complexity score of the matrix-based intra prediction may be the cumulated estimated number of instructions due to the application of the matrix-based intra prediction from the beginning of the reconstruction of the current Group Of Picture (GOP) to the beginning of the reconstruction of **Y**.

For (e.g., another) example, for a given block **Y** in the current frame, the current cumulated complexity score of the matrix-based intra prediction may be the cumulated number of Multiply Accumulates (MACs) due to the application of the matrix-based intra prediction from the beginning of the reconstruction of the current frame to the beginning of the reconstruction of **Y**.

For (e.g., another) example, for a given block **Y** in the current frame, the current cumulated complexity score of the matrix-based intra prediction may be the cumulated number of MACs due to the application of the matrix-based intra prediction from the beginning of the reconstruction of the current GOP to the beginning of the reconstruction of **Y**.

For (e.g., another) example, for a given block **Y** in the current frame, the current cumulated complexity score of the matrix-based intra prediction may be the cumulated number of MACs due to the application of the matrix-based intra prediction from the beginning of the reconstruction of the current Coding Tree Unit (CTU) including **Y** to the beginning of the reconstruction of **Y,** denoted macMbCtu. For example, as shown in FIG. 17B, at 1521,

$$\text{isSubstitutedByMb}^{\text{derivation}} = \boldsymbol{W}_{h_p,w_p}^{\text{idxMode}} \in \mathcal{S}_{\text{idxMode}}$$ && macMbCtu < maxMacMbCtu . As shown in FIG. 17C, at 1551,

$$\text{isSubstitutedByMb}^{\text{prediction}} = \boldsymbol{W}_{h,w}^{\text{idxMode}} \in \mathcal{S}_{\text{idxMode}}$$

&& macMbCtu < maxMacMbCtu . For example, maxMacMbCtu = 4096 . For (e.g., another) example, maxMacMbCtu = nbPixelsCtbLuma/$\alpha$ where nbPixelsCtbLuma may denote the number of pixels in a luma Coding Tree Block (CTB). For example, $\alpha$ = 8. For (e.g., another) example, $\alpha$ = 16. For (e.g., another) example, $\alpha$ = f(QP), function of the Quantization Parameter (QP). For example, $\alpha$ = 8 if QP < 32; otherwise, $\alpha$ = 32. For example, $\alpha$ may be a configuration parameter.

For (e.g., another) example, for a given block **Y** in the current frame, the current cumulated complexity score of the matrix-based intra prediction may be the cumulated number of accesses to memories of matrices weights during the applications of the matrix-based intra prediction from the beginning of the reconstruction of the current CTU including **Y** to the beginning of the reconstruction of **Y**, denoted accessesMemMbCtu. The example may be generalized, for example, by replacing "beginning of the reconstruction of the current CTU including **Y**" by "beginning of the reconstruction of the current frame." The example may be generalized, for example, by replacing "beginning of the reconstruction of the current CTU including **Y**" by "beginning of the reconstruction of the current GOP."

The examples (e.g., any of the examples) may be combined with one another. For example, as shown in FIG. 17B, at 1521,

$$\text{isSubstitutedByMb}^{\text{derivation}} = \boldsymbol{W}_{h_p,w_p}^{\text{idxMode}} \in \mathcal{S}_{\text{idxMode}}$$

&& macMbCtu < maxMacMbCtu && accessesMemMbCtu < maxAccessesMemMbCtu. As shown in FIG. 17C, at 1551,

$$\text{isSubstitutedByMb}^{\text{prediction}} = \boldsymbol{W}_{h,w}^{\text{idxMode}} \in \mathcal{S}_{\text{idxMode}}$$

&& macMbCtu < maxMacMbCtu && accessesMemMbCtu < maxAccessesMemMbCtu. For example, maxAccessesMemMbCtu = 64 $\times$ nbPixelsCtbLuma. For (e.g., another) example, maxAccessesMemMbCtu = nbPixelsCtbLuma/$\beta$, where $\beta$ may be a configuration parameter.

Activation of the matrix-based intra prediction may depend on the definition of the preprocessing and/or postprocessing. For example, the use of matrix-based intra prediction as replacement of conventional intra prediction modes may depend on the option of downsampling the L-shape causal neighborhood (e.g., also known as "context") of a given block (e.g., or a given portion of template) vertically (e.g., by a factor $\delta \in \mathbb{N}^*$ ), down-sampling the L-shape causal neighborhood horizontally (e.g., by a factor $\gamma \in \mathbb{N}^*$ ), and/or transposing the L-shape causal neighborhood before the matrix-based computations. The prediction resulting from the matrix-based computations may (e.g., then) be transposed and/or up-sampled vertically by the factor $\delta$ and/or upsampled horizontally by the factor $\gamma$.

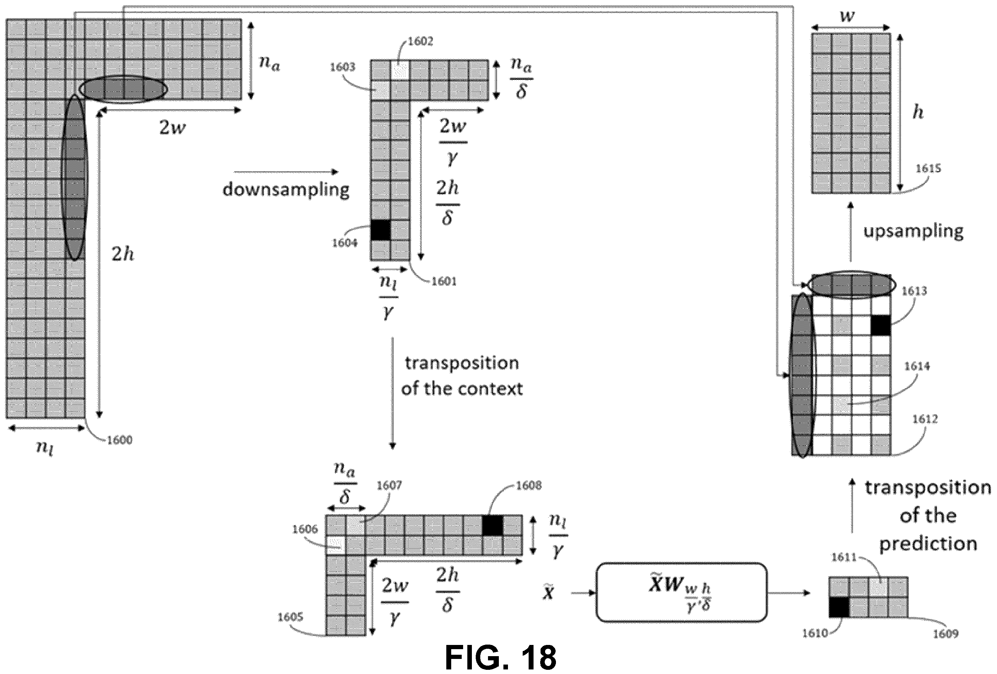

FIG. 18 shows an example of downsampling and/or transposing the context of the current $w \times h$ block, and transposing and/or upsampling the prediction arising from the matrix-based computations.

As shown in FIG. 18, the context (1600) of the $w \times h$ block to be predicted may be downsampled by $\delta$ vertically and downsampled by $\gamma$ horizontally, which may yield the downsampled context (1601). (1601) may be transposed, which may yield the transposed context (1605). The transposition may move the pixels (1602), (1603), and (1604) to (1606), (1607), and (1608) respectively. The multiplication between (1605) and the matrix $\boldsymbol{W}_{\frac{w}{\gamma},\frac{h}{\delta}}$ dedicated to blocks of size $\frac{h}{\delta} \times \frac{w}{\gamma}$ may return the prediction (1609). (1609) may be transposed, which may yield the transposed prediction (1612). The transposition may move the pixels (1610) and (1611) to (1613) and (1614), respectively. (1612) may be upsampled, for example, using the border pixels circled in FIG. 18, which may yield the final $w \times h$ prediction (1615).

In the example shown in FIG. 18, $w$ = 4, $h$ = 8, $n_a = n_l$ = 4, $\delta = \gamma$ = 2.

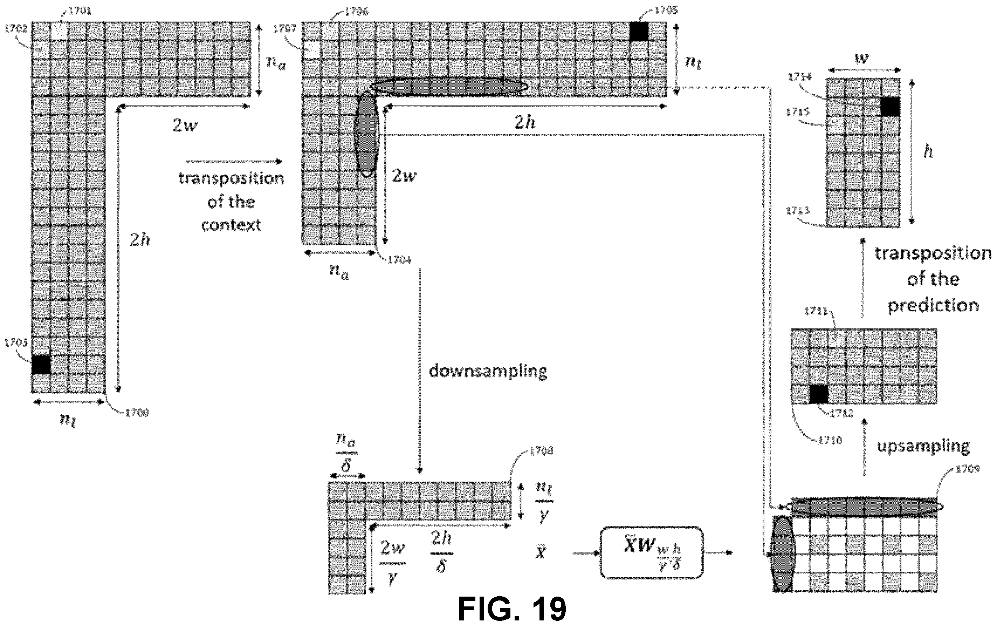

In the example shown in FIG. 18, the downsampling and the transposition may be swapped, which may lead to FIG. 19.

FIG. 19 illustrates an example of transposition and/or downsampling of the context of the current $w \times h$ block, then upsampling and/or transposition of the prediction arising from the matrix-based multiplication. In examples, $w$ = 4, $h$ =

$8, n_a = n_l = 4, \delta = \gamma = 2.$

For example, for a given w $\times$ h block *Y* predicted via a given template-based prediction tool, during its derivation operation, using

$$\mathcal{S}_{\mathrm{idxMode}} = \{\boldsymbol{W}_{4,4}^{\mathrm{idxMode}}, \boldsymbol{W}_{4,8}^{\mathrm{idxMode}}, \boldsymbol{W}_{4,16}^{\mathrm{idxMode}}, \boldsymbol{W}_{4,32}^{\mathrm{idxMode}},$$

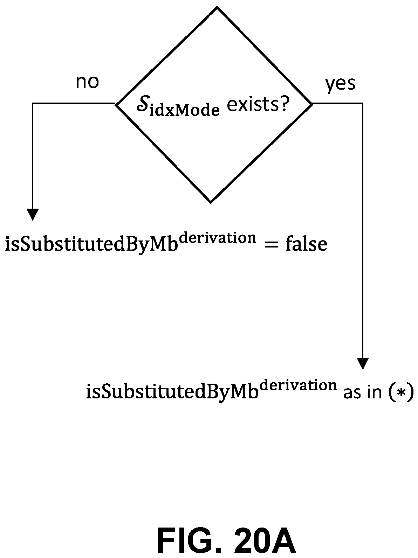

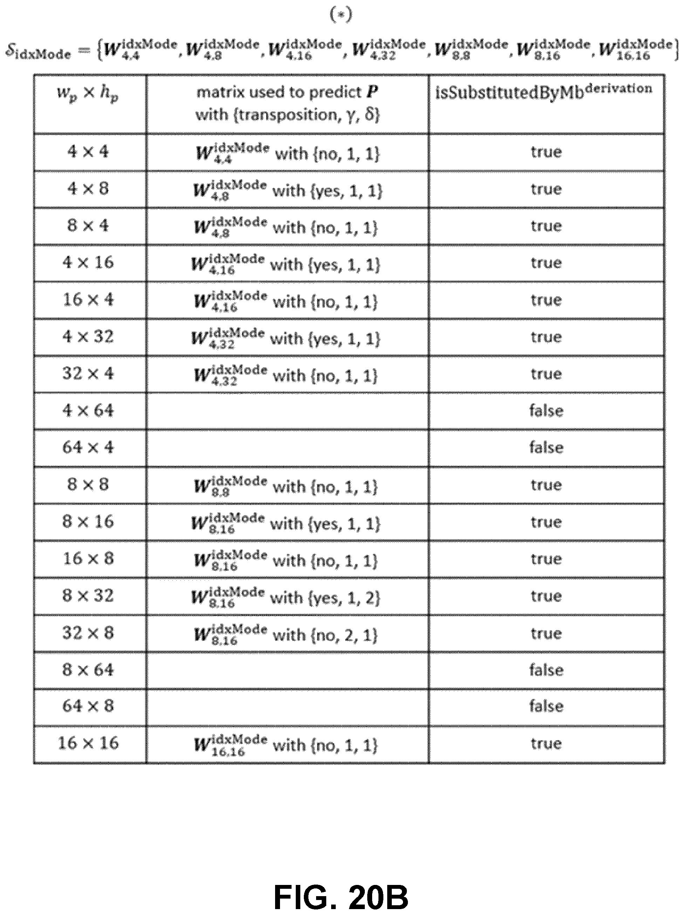

$\boldsymbol{W}_{8,8}^{\mathrm{idxMode}}, \boldsymbol{W}_{8,16}^{\mathrm{idxMode}}, \boldsymbol{W}_{16,16}^{\mathrm{idxMode}}\}$ , in FIG. 17B at 1521, isSubstitutedByMb$^{\mathrm{derivation}}$ may be specified via the table-based definition in FIGS. 20A-20B. In FIGS. 20A-20B, the statement "$\mathcal{S}_{\mathrm{idxMode}}$ exists ?" may be true if, for example, in the hybrid block-based codec of interest, there exists a set $\mathcal{S}_{\mathrm{idxMode}}$ of matrices for replacing the intra prediction mode of index idxMode, for given block sizes.

FIGS. 20A-20B illustrate an example definition of isSubstitutedByMb$^{\mathrm{derivation}}$ shown in FIG. 17B.

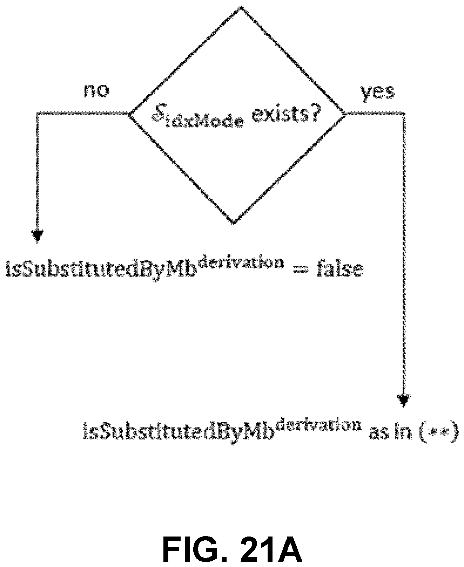

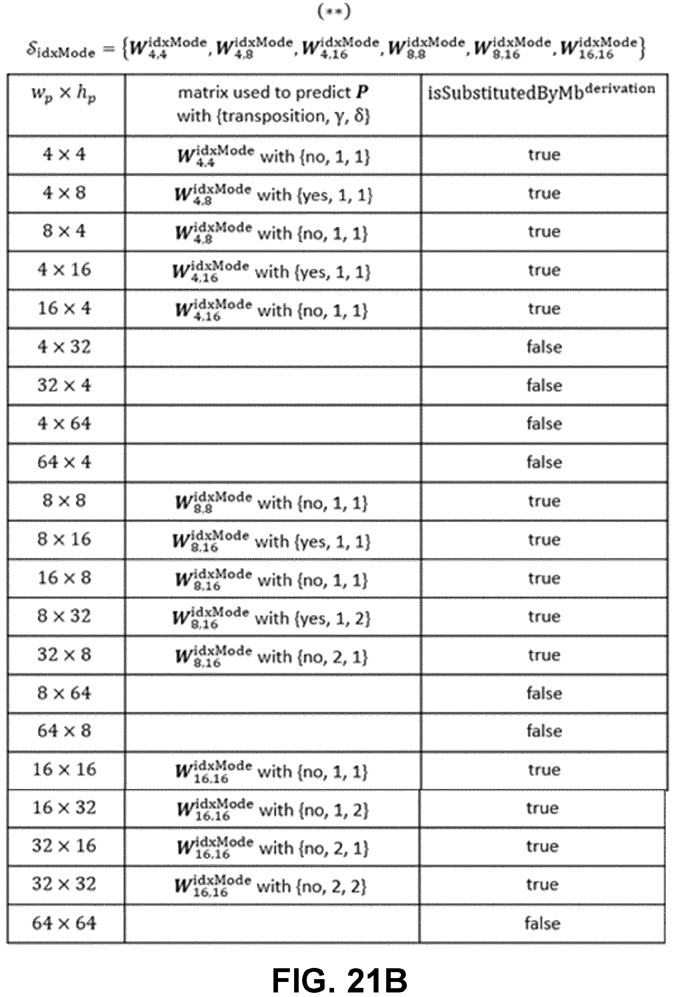

For (e.g., another) example, for a given w $\times$ h block *Y* predicted via a given template-based prediction tool, during its derivation operation, using $\mathcal{S}_{\mathrm{idxMode}}$ = $\{\boldsymbol{W}_{4,4}^{\mathrm{idxMode}}, \boldsymbol{W}_{4,8}^{\mathrm{idxMode}}, \boldsymbol{W}_{4,16}^{\mathrm{idxMode}}, \boldsymbol{W}_{8,8}^{\mathrm{idxMode}}, \boldsymbol{W}_{8,16}^{\mathrm{idxMode}}, \boldsymbol{W}_{16,16}^{\mathrm{idxMode}}\}$ , in FIG. 17B at 1521, isSubstitutedByMb$^{\mathrm{derivation}}$ may be given by the table-based definition in FIGS. 21A-21B. In FIGS. 21A-21B, the statement "$\mathcal{S}_{\mathrm{idxMode}}$ exists ?" may be true if, for example, in the hybrid block-based codec of interest, there exists a set $\mathcal{S}_{\mathrm{idxMode}}$ of matrices for replacing the intra prediction mode of index idxMode, for given block sizes.

FIGS. 21A-21B illustrate an example definition of isSubstitutedByMb$^{\mathrm{derivation}}$ shown in FIG. 17B.

In examples, e.g., in FIGS. 20A-20B and FIGS. 21A-21B, one or more (e.g., several possible) values of $w_p \times h_p$ may not be displayed. In examples, for a (e.g., each) missing value, isSubstitutedByMb$^{\mathrm{derivation}}$ may be false, for example, as the intra prediction mode of index idxMode may not be replaced by matrix-based intra prediction for predicting a $w_p \times h_p$ portion **P** of a template of ***Y.***

Application of the examples in FIGS. 20A-20B and FIGS. 21A-21B to a given w $\times$ h block ***Y*** predicted via a given template-based prediction tool, during its prediction operation, as shown in FIG. 17C at 1551, may be straightforward, for example, by replacing $w_p \times h_p$ with $w \times h$, **P** with ***Y,*** and isSubstitutedByMb$^{\mathrm{derivation}}$ shown in FIG. 17B with isSubstitutedByMb$^{\mathrm{prediction}}$ shown in FIG. 17C.

Examples may be applied to template-based prediction tools. Examples (e.g., any examples) or combinations of examples (e.g., any combination of examples), e.g., as described herein may be (e.g., straightforwardly) applied to a template-based prediction tool, e.g., DIMD, TIMD, SGPM, TMRL, Combined Intra Inter Prediction (CIIP), Intra Block Copy (IBC), etc.

Examples may be applied to DIMD. For example, the replacement of hybrid block-based intra prediction modes with matrix-based intra prediction may be combined with DIMD. The matrix-based intra prediction may be (e.g., systematically) deactivated during the derivation operation of DIMD. A complexity budget may be introduced. For example, for a given block ***Y*** predicted via DIMD, a complexity budget may be the cumulated number of MACs due to the application of the matrix-based intra prediction and/or the computations of gradients during the derivation operation of DIMD, e.g., from the beginning of the reconstruction of the current CTU including *Y* to the beginning of the reconstruction of ***Y,*** denoted macMbDimdCtu . In FIGS. 17A-17C, $\mathcal{J}$ may include, e.g., among others, $\{\mathrm{idxModeDimd}_i, \mathrm{dimdLocDep}_i\}_{i \in [\![0,5]\!]}$ and/or the weights involved in the blending. As shown in FIG. 17B, at 1521, isSubstitutedByMb$^{\mathrm{derivation}}$ = false. As shown in FIG. 17C, at 1551,

$$\mathrm{isSubstitutedByMb}^{\mathrm{prediction}} = \boldsymbol{W}_{h,w}^{\mathrm{idxMode}} \in \mathcal{S}_{\mathrm{idxMode}} \ '$$

&& macMbDimdCtu < nbPixelsCtbLuma/$\alpha$, where $\alpha$ may be a configuration parameter.

Examples may be applied to TIMD. For example, the replacement of hybrid block-based intra prediction modes with matrix-based intra prediction may be combined with TIMD, such as by using the option of downsampling the context of a given block (e.g., or a given portion of template) vertically (e.g., by $\delta$) and/or down-sampling horizontally (e.g., by $\gamma$) and/or transposing the context before the matrix-based computations and introducing a complexity budget. For example, for a given block ***Y*** predicted via TIMD in the current frame, this complexity budget may be the cumulated number of MACs due to the application of the matrix-based intra prediction and/or the predictions happening during the derivation and prediction operations of TIMD from the beginning of the reconstruction of the current CTU including ***Y*** to the beginning of

the reconstruction of $\boldsymbol{Y}$, denoted macMbTimdCtu. In FIGS. 17A-17C, $\mathcal{J}$ may include, e.g., among others, timdIsBlend, the indices of the first and second retained intra prediction modes, the weights involved in the blending, and/or $idx_{NA}$ and

$$\{\text{timdLocDep}_i\}_{i \in [\![0,2]\!]} .$$

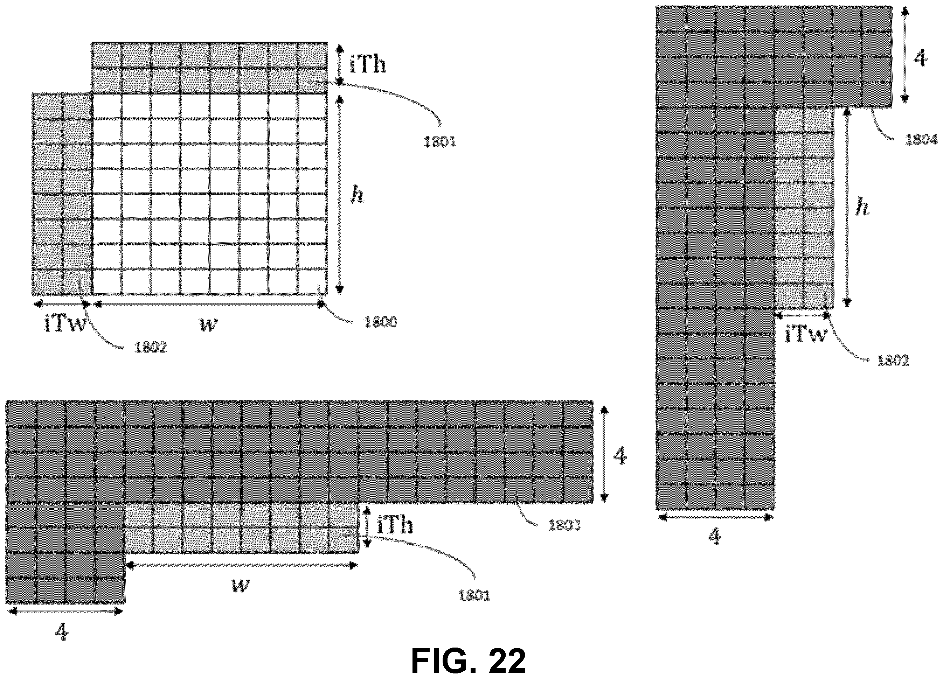

In examples (e.g., it may be assumed that), for a given $w \times h$ block (1800) predicted via TIMD, e.g., as shown in FIG. 22, during the derivation operation of TIMD, for a given mode of index idxMode replaced by matrix-based intra prediction for predicting the template (1801, 1802) of (1800), a (e.g., each) template portion may be predicted separately. As shown in FIG. 22, the application of a matrix to the context (1803) of (1801) may yield a prediction of (1801). The application of a matrix to the context (1804) of (1802) may give a prediction of (1802).

FIG. 22 illustrates an example of the prediction of a template of a given $w \times h$ block via matrix-based intra prediction during the derivation operation of TIMD.

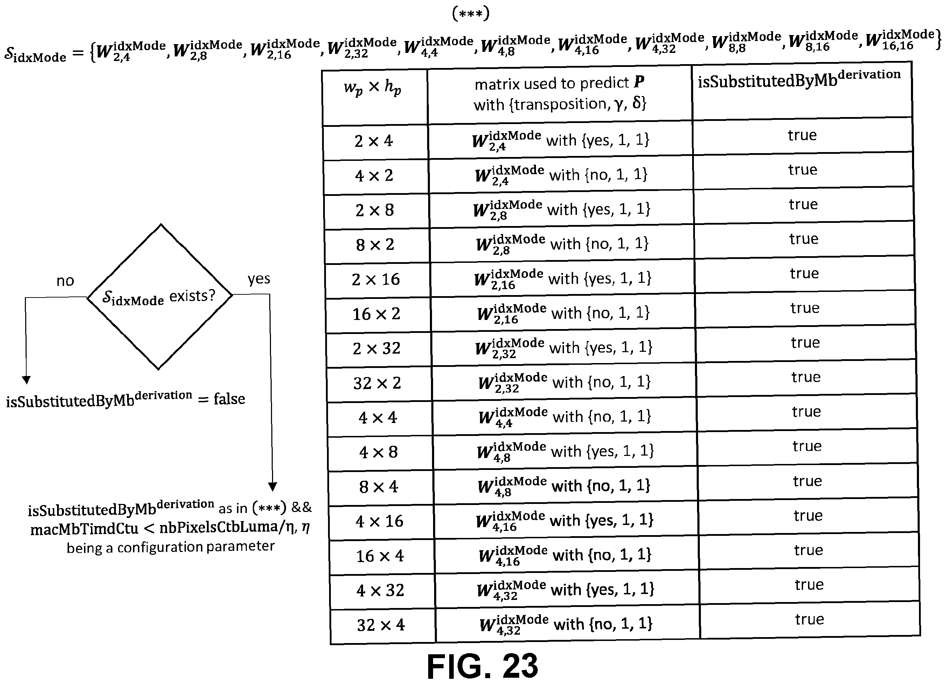

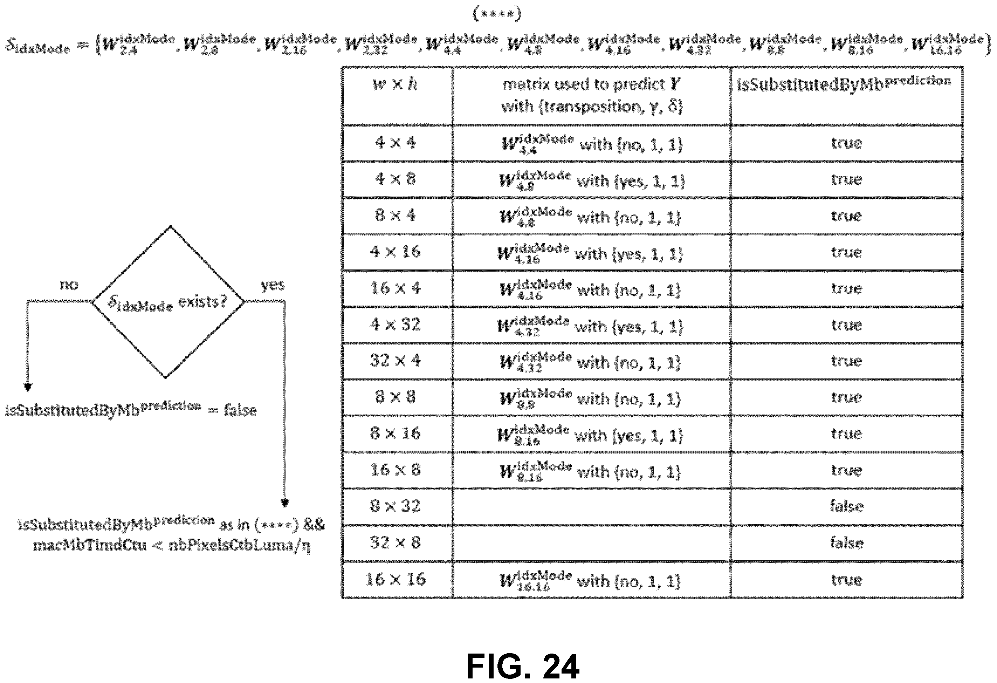

For example, using $\mathcal{S}_{idxMode}$ = $\{\boldsymbol{W}_{2,4}^{idxMode}, \boldsymbol{W}_{2,8}^{idxMode}, \boldsymbol{W}_{2,16}^{idxMode}, \boldsymbol{W}_{2,32}^{idxMode}, \boldsymbol{W}_{4,4}^{idxMode}, \boldsymbol{W}_{4,8}^{idxMode}, \boldsymbol{W}_{4,16}^{idxMode},$ $\boldsymbol{W}_{4,32}^{idxMode}, \boldsymbol{W}_{8,8}^{idxMode}, \boldsymbol{W}_{8,16}^{idxMode}, \boldsymbol{W}_{16,16}^{idxMode}\}$, in FIG. 17B at 1521, isSubstitutedByMb$^{derivation}$ may be given by the table-based definition in FIG. 23. In FIG. 17C at 1551, isSubstitutedByMb$^{prediction}$ may be provided by the table-based definition in FIG. 24.

FIG. 23 illustrates an example definition of isSubstitutedByMb$^{derivation}$ shown in FIG. 17B.

FIG. 24 illustrates an example definition of isSubstitutedByMb$^{prediction}$ shown in FIG. 17C.

In examples, e.g., in FIG. 23, one or more (e.g., several possible) values of $w_p \times h_p$ may not be listed. In examples, for a (e.g., each) missing value, isSubstitutedByMb$^{derivation}$ may be false. In FIG. 24, one or more (e.g., several possible) values of $w \times h$ may not be displayed. In examples, for a (e.g., each) missing value, isSubstitutedByMb$^{prediction}$ may be false.

For example, for a given $8 \times 8$ block $\boldsymbol{Y}$ predicted via TIMD, assuming that macMbTimdCtu < nbPixelsCtbLuma/$\eta$, during the derivation operation of TIMD, for a given intra prediction mode of index idxMode replaced by matrix-based intra prediction for template prediction ( $\mathcal{S}_{idxMode}$ exists), the $8 \times 2$ portion above $\boldsymbol{Y}$ may be predicted via $\boldsymbol{W}_{2,8}^{idxMode}$ without transposition, $\gamma = 1, \delta = 1$. The $2 \times 8$ portion on the left side of $\boldsymbol{Y}$ may be predicted via $\boldsymbol{W}_{2,8}^{idxMode}$ with transposition, $\gamma = 1, \delta = 1$. Then, during the prediction operation of TIMD, Y may be predicted via $\boldsymbol{W}_{8,8}^{idxMode}$ without transposition, $\gamma = 1, \delta = 1$.

Examples may be applied to SGPM. The application to TIMD (e.g., as described herein) may be applied (e.g., straightforwardly generalized) to SGPM, for example, by considering that iTh and iTw may become (e.g., have a value of) one (1) in SGPM.

Examples may be applied to TMRL. The application to TIMD (e.g., as decribed herein) may be applied (e.g., straightforwardly generalized) to TMRL, for example, by considering that iTh and iTw may become (e.g., have a value of) one (1) in TMRL.

Examples may be applied to CIIP and IBC. For a given block predicted via CIIP (e.g., CliP may apply TIMD to the block in order to obtain a prediction (intra prediction) of the block), the application to TIMD (e.g., as described herein) may be applied (e.g., straightforwardly generalized) to CIIP. Similarly, for a given block predicted via IBC-CIIP (e.g., IBC-CIIP may apply TIMD to the block in order to obtain a prediction (intra prediction) of the block), the application to TIMD (e.g., as described herein) may be applied (e.g., straightforwardly generalized) to IBC-CIIP.

The matrix-based computations may be truncated inside a template-based prediction tool.

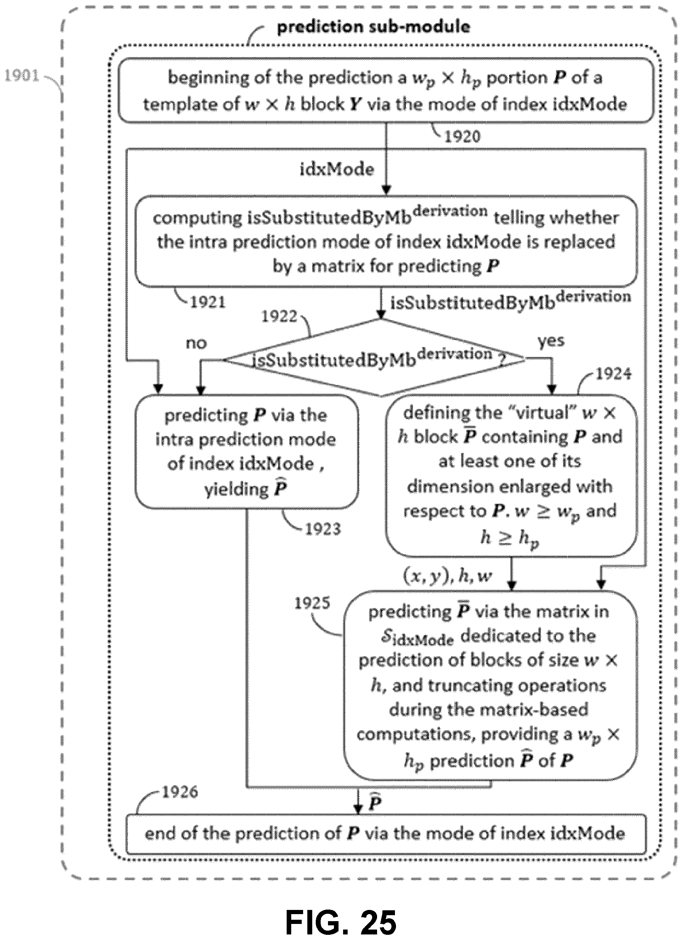

In some examples, if matrix-based intra prediction replaces hybrid block-based intra prediction modes, inside the derivation/prediction operation of the hybrid block-based (e.g., including template-based) prediction tool, matrix-based computations may be truncated. For example, based on a truncation of computations, the same matrix may be used during the derivation and prediction operations. For example, at the decoder side of a hybrid block-based video codec, the process for obtaining the reconstruction $\tilde{\boldsymbol{Y}}$ of a given $w \times h$ block $\boldsymbol{Y}$ in FIG. 17A may be adapted by replacing 1501 by 1901 in FIG. 25.

As shown in FIG. 25, at 1920, the prediction of a $w_p \times h_p$ portion $\boldsymbol{P}$ of a template of $\boldsymbol{Y}$ via the mode of index idxMode may start.

At 1921, isSubstitutedByMb$^{derivation}$ may be computed.

At 1922, if isSubstitutedByMb$^{derivation}$ is true, the process may move to {1924, 1925}. Otherwise, the process may go to 1923.

At 1923, $\boldsymbol{P}$ may be predicted by the intra prediction mode of index idxMode, which may yield $\hat{\boldsymbol{P}}$.

At 1924, the "virtual" $w \times h$ block $\overline{\boldsymbol{P}}$ including $\boldsymbol{P}$ may be defined. At least one of the dimensions of $\overline{\boldsymbol{P}}$ may be

enlarged with respect to $P$. $w \geq w_p$ and $h \geq h_p$.

At 1925, $\overline{P}$ may be predicted via the matrix in $\mathcal{S}_{\mathrm{idxMode}}$ dedicated to the prediction of blocks of size $w \times h$ and the matrix-based computations may be truncated, which may yield a $w_p \times h_p$ prediction $\hat{P}$ of $P$.

At 1926, the prediction of $P$ via the mode of index idxMode may end.

FIG. 25 illustrates an example of the prediction of a $w_p \times h_p$ portion $P$ of a template of a $w \times h$ block $Y$ via the mode of index idxMode.

In examples (e.g., as described herein), in the hybrid block-based video codec of interest, if the matrix-based intra prediction replacing hybrid block-based intra prediction modes become NNs (e.g., as described herein), replacing hybrid block-based intra prediction modes, a truncation of matrix-based computations for prediction may become a truncation of computations in the last layer of the used NN.

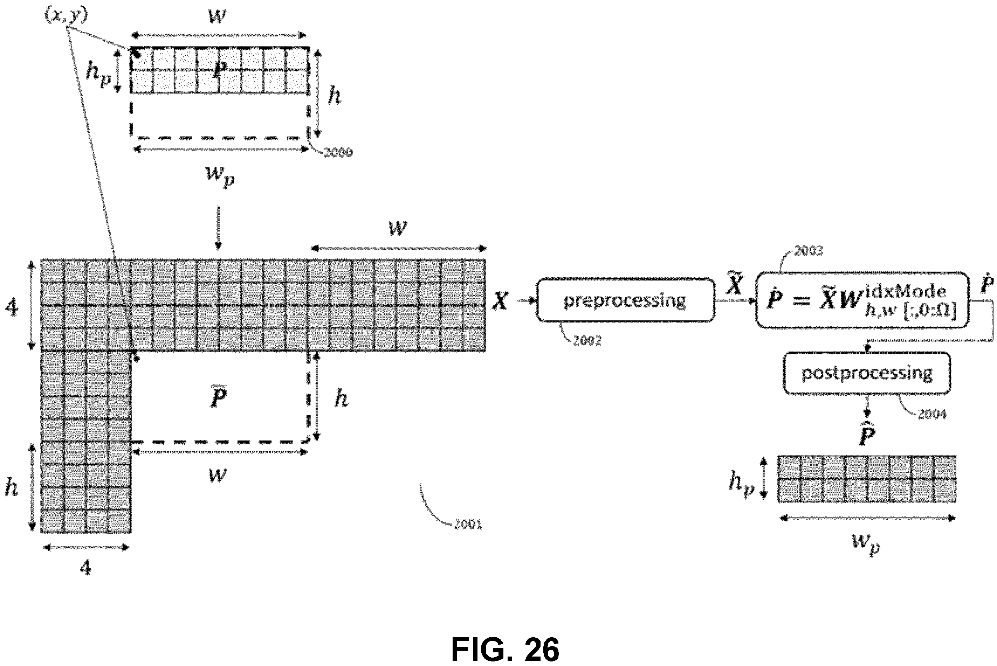

In examples, truncation may depend on the definition of the matrix-based computations. For example, the truncation may depend on how the matrix-based computations may be defined. For example, FIG. 26 shows an example of the prediction of a given $w_p \times h_p$ portion $P$ of template using a matrix $W_{h,w}^{\mathrm{idxMode}}$ of hw columns dedicated to the prediction of blocks of size $w \times h$, $w \geq w_p$ and $h > h_p$, via the truncation of the vector-matrix multiplication, e.g., assuming row vectors.

As shown in FIG. 26, at 2000, the "virtual" $w \times h$ block $\overline{P}$ including $P$ and at least one dimension enlarged with respect to $P$, e.g., $w \geq w_p$ and $h \geq h_p$, may be defined.

At 2001, the context $X$ of **4** rows of reconstructed pixels above the "virtual" $w \times h$ block $\overline{P}$ and four (4) columns of reconstructed pixels on the left side of $\overline{P}$ may be extracted.

At 2002, a preprocessing may be applied to $X$, which may yield $\hat{X}$. In examples, it may be assumed that the preprocessing includes at least a flattening of $X$ into a row vector.

$$\dot{P} = \widetilde{X} W_{h,w\,[:,0:\Omega]}^{\mathrm{idxMode}}$$

At 2003, . $\Omega$ may denote a set of $h_p w_p$ indices of columns in $W_{h,w}^{\mathrm{idxMode}}$ .

At 2004, a postprocessing may be applied to $\dot{P}$, which may yield the final $w_p \times h_p$ prediction $\hat{P}$ of $P$. In examples, (e.g., it may be assumed that) the postprocessing may include at least a reshaping of $\dot{P}$ into a rectangle of height $h_p$ and width $w_p$.

FIG. 26 illustrates an example prediction of a given $w_p \times h_p$ portion $P$ of template using a matrix $W_{h,w}^{\mathrm{idxMode}}$ of hw columns dedicated to the prediction of blocks of size $w \times h$, $w \geq w_p$ and $h > h_p$, via truncation of the vector-matrix multiplication according to a variant embodiment. In examples, $h_p = 2$, $w_p = 8$, $h = 4$, and $w = 8$.

In examples, truncation may depend on the preprocessing and postprocessing that may happen before and after, respectively, the matrix-based computations. For example, the truncation may depend on how the preprocessing and/or the postprocessing that may happen before and/or after, respectively, the matrix-based computations may be defined.

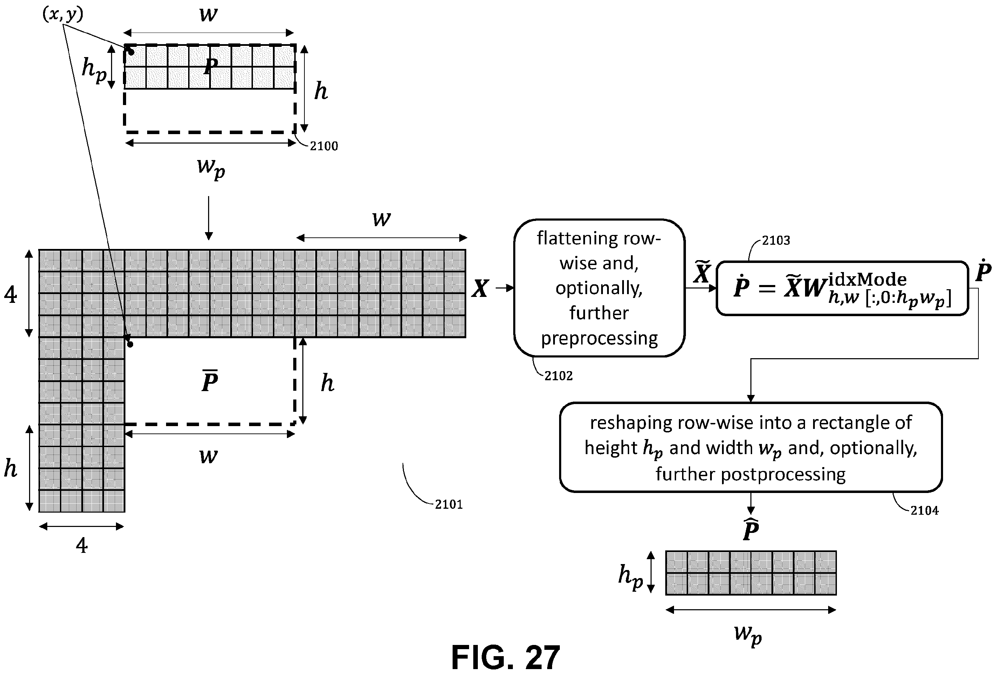

For example (e.g., reusing the example shown in FIG. 26), the definition of $\Omega$ may depend on the shown "preprocessing" in 2002 and "postprocessing" in 2004. For example, if the "preprocessing" in 2002 includes at least a flattening row-wise of $X$ into a vector and the "postprocessing" in 2004 includes at least a reshaping row-wise of $\dot{P}$ into a rectangle of height $h_p$ and width $w_p$, $\Omega$ may become $[0, h_p w_p - 1]$, which may indicate the set of (e.g., all) the indices from 0 to $h_p w_p - 1$ included. This way, FIG. 26 may become FIG. 27.

FIG. 27 illustrates an example of the prediction of a given $w_p \times h_p$ portion $P$ of template using a matrix $W_{h,w}^{\mathrm{idxMode}}$ of hw columns dedicated to the prediction of blocks of size $w \times h$, $w \geq w_p$ and $h > h_p$, via truncation of the vector-matrix multiplication. In examples, $h_p = 2$, $w_p = 8$, $h = 4$, and $w = 8$.

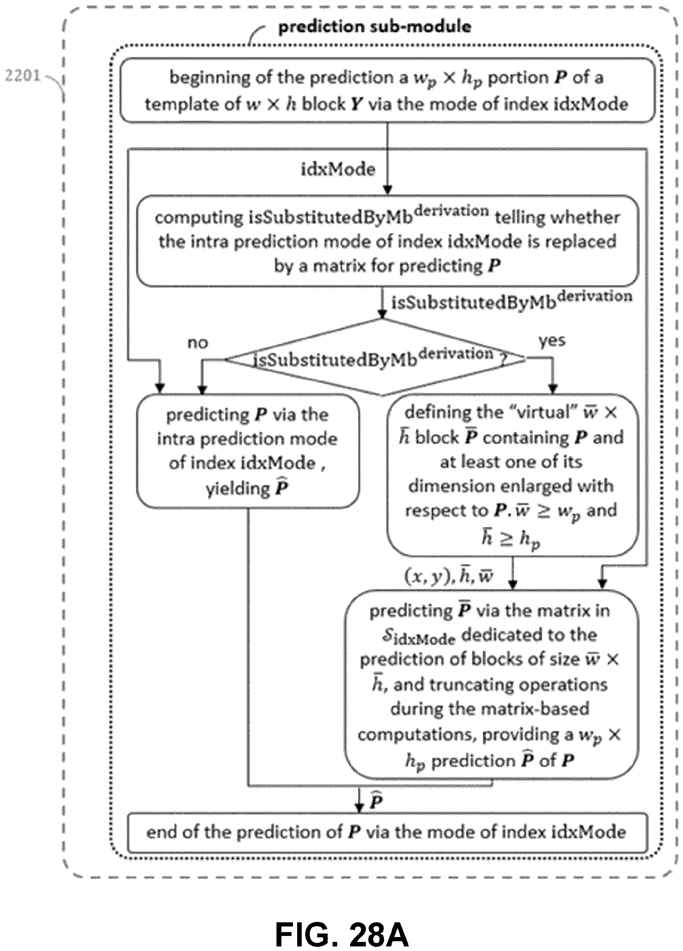

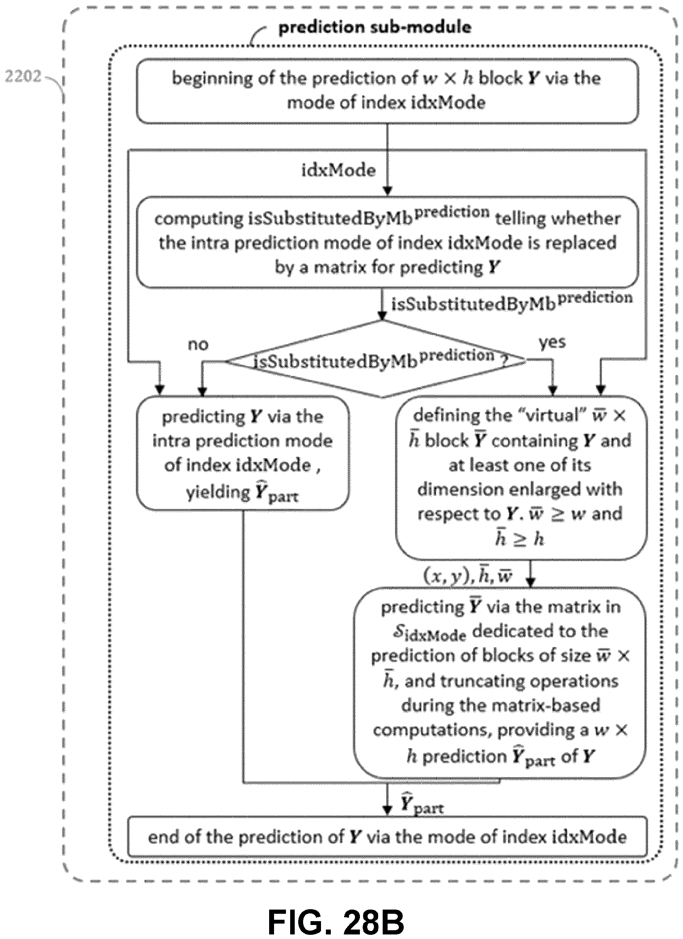

In examples, truncation of the matrix-based computations may occur during the derivation and/or prediction operations of a template-based tool. For example, at the decoder side of a hybrid block-based video codec, e.g., where the truncation of matrix-based computations may happen during the derivation and/or prediction operations of a template-based tool, the process for obtaining the reconstruction $\widetilde{Y}$ of a given $w \times h$ block $Y$ in FIG. 17A may be adapted by replacing 1501 and 1502 by 2201 and 2202, respectively, as shown in FIGS. 28A-28B.

FIG. 28A-28B illustrate an example of the prediction of a $w_p \times h_p$ portion P of a template of a given $w \times h$ block $Y$ via the mode of index idxMode during the derivation operation of a template-based tool and prediction of $Y$ via the mode of index idxMode during its prediction operation.

Examples may be applied to template-based prediction tools. Examples (e.g., any example) or combinations of examples (e.g., any combination of examples) described herein may be (e.g., straightforwardly) applied to a template-based prediction tool, e.g., DIMD, TIMD, SGPM, TMRL, CliP, IBC, etc.

Examples may be applied to SGPM. For example, the replacement of hybrid block-based intra prediction modes with matrix-based intra prediction may be combined with SGPM, e.g., using the truncation of matrix-based computations during the derivation operation of SGPM. In FIGS. 17A-17C, $\mathcal{J}$ may include, among others, IL. In some examples, it may be assumed that, for a given $w \times h$ block $\boldsymbol{Y}$ predicted via SGPM, during the derivation operation of SGPM, for a given mode of index idxMode replaced by matrix-based intra prediction for predicting the template of $\boldsymbol{Y}$, a (e.g., each) template portion may be predicted separately, e.g., as shown in FIG. 22 where iTh = iTw = 1. For example, it may be decided that the same matrix may predict the template portion $\boldsymbol{P_a}$ above $\boldsymbol{Y}$ and the template portion $\boldsymbol{P_l}$ on the left side of $\boldsymbol{Y}$ during the derivation operation and predict $\boldsymbol{Y}$ during the prediction operation. Then, using $\mathcal{S}_{\mathbf{idxMode}}$ =

$$\{W_{4,4}^{\mathrm{idxMode}}, W_{4,8}^{\mathrm{idxMode}}, W_{4,16}^{\mathrm{idxMode}}, W_{4,32}^{\mathrm{idxMode}}, W_{8,8}^{\mathrm{idxMode}}, W_{8,16}^{\mathrm{idxMode}}, W_{16,16}^{\mathrm{idxMode}}\}$$, as shown in FIG.

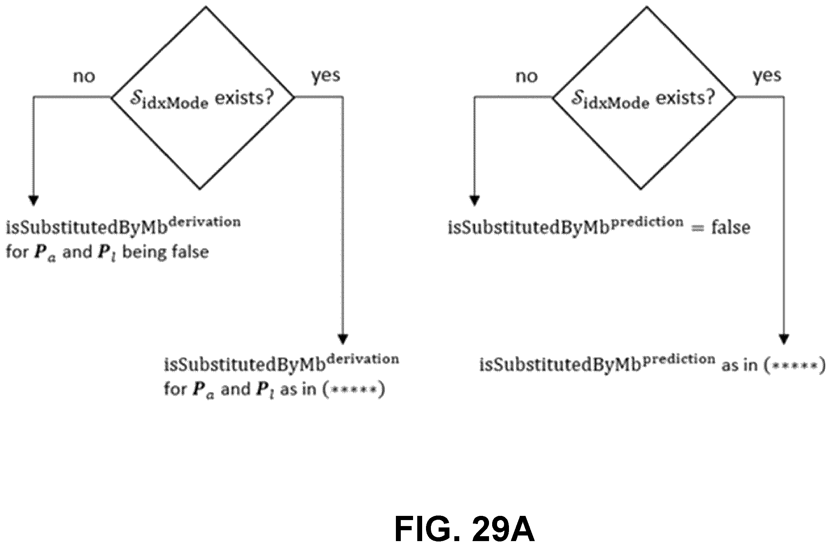

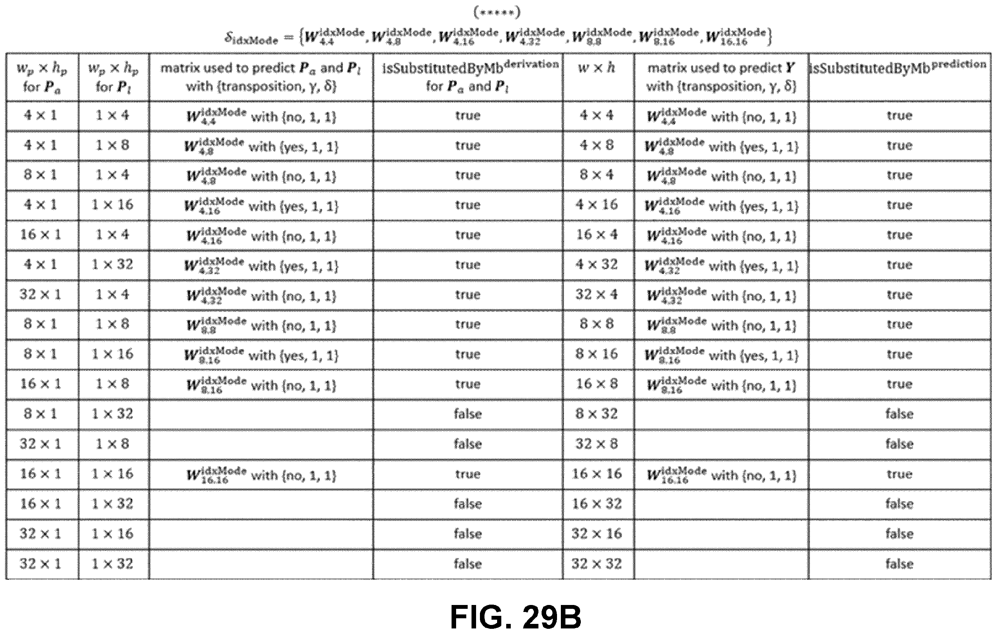

25 at 1921, isSubstitutedByMb$^{\mathrm{derivation}}$ may be given by the table-based definition in FIGS. 29A-29B. In FIG. 17C, at 1551, isSubstitutedByMb$^{\mathrm{prediction}}$ may be specified by the table-based definition in FIGS. 29A-29B. In FIGS. 29A-29B, a (e.g., each) table row may group $\boldsymbol{Y}$ of a given size and its (e.g., two) associated template portions $\boldsymbol{P_a}$ and $\boldsymbol{P_l}$ in SGPM. For example, in a (e.g., each) table row, during the derivation operation, the parametrization of the truncation of computations during the prediction of $\boldsymbol{P_a}$ may be (e.g., entirely) defined by, for example, applying FIG. 27 with $w_p \times h_p$ for $\boldsymbol{P_a}$ and $w \times h$. Similarly, in a (e.g., each) table row, during the derivation operation, the parametrization of the truncation of computations during the prediction $\boldsymbol{P_l}$ may be (e.g., entirely) defined by, for example, applying FIG. 27 with $w_p \times h_p$ for $\boldsymbol{P_l}$ and $w \times h$.

FIGS. 29A-29B illustrate an example definition of isSubstitutedByMb$^{\mathrm{derivation}}$ and isSubstitutedByMb$^{\mathrm{prediction}}$.

Examples may be applied to TIMD. The application to SGPM (e.g., as described herein) may be (e.g., straightforwardly generalized) to TIMD, for example, by defining iTh and iTw as in FIGS. 12A-12C, e.g., instead setting them to a value of one (1).

Examples may be applied to TMRL. For example, the replacement of hybrid block-based intra prediction modes with matrix-based intra prediction may be combined with TMRL, e.g., using the truncation of matrix-based computations during the derivation and/or prediction operations of TMRL. In FIGS. 17A-17C, $\mathcal{J}$ may include, among others, $\overline{\mathbb{IL}}$. In some examples, it may be assumed that, for a given $w \times h$ block $\boldsymbol{Y}$ predicted via TMRL, during the derivation operation of TMRL, for a given mode of index idxMode replaced by matrix-based intra prediction for predicting the template of $\boldsymbol{Y}$, each template portion may be predicted separately. For example, it may be decided that the same matrix may predict the template portion $\boldsymbol{P_a}$ above $\boldsymbol{Y}$ and the template portion $\boldsymbol{P_l}$ on the left side of $\boldsymbol{Y}$ during the derivation operation and predict $\boldsymbol{Y}$ during the prediction operation.

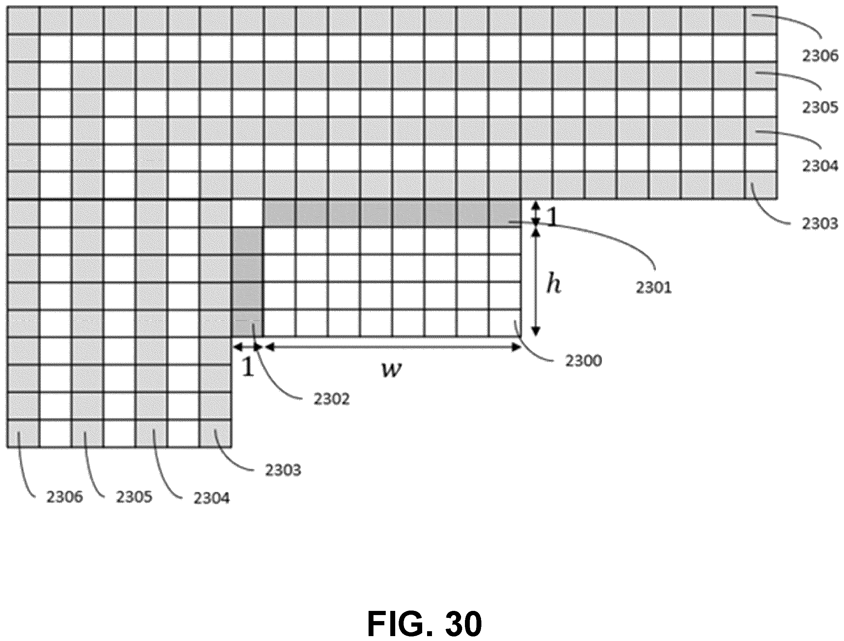

The context position may depend on the used extended reference line. For example, during the derivation and prediction operations, the position of the context may depend on the used extended reference line. For example, FIG. 30 shows an example of a given $w \times h$ block $\boldsymbol{Y}$ (2300), the $w \times 1$ TMRL template portion $\boldsymbol{P_a}$ (2301) above (2300), the $1 \times h$ TMRL template portion $\boldsymbol{P_l}$ (2302) on the left side of (2300), and the extended reference lines of indices 1, 3, 5, and 7, respectively (2303), (2304), (2305), and (2306).

FIG. 30 illustrates an example of extended reference lines of a given $w \times h$ block predicted via TMRL.

As shown in FIG. 30, during a derivation operation, during the test on the template (2301, 2302) of (2300) of the pair of the extended reference line of index $j$, e.g., $j \in \{1, 3, 5, 7, 12\}$, and the intra prediction mode of index idxMode, if the intra prediction of index idxMode is replaced by matrix-based intra prediction, to predict a template portion $\boldsymbol{P}$, the shift of position of the context may be equal to the shift of position of the extended reference line of index $j$. During the prediction of (2300), using the extended reference line of index $j$ and the intra prediction mode of index idxMode, if the intra prediction of index idxMode is replaced by matrix-based intra prediction, the shift of position of the context may be equal to the shift of position of the extended reference line of index $j$.

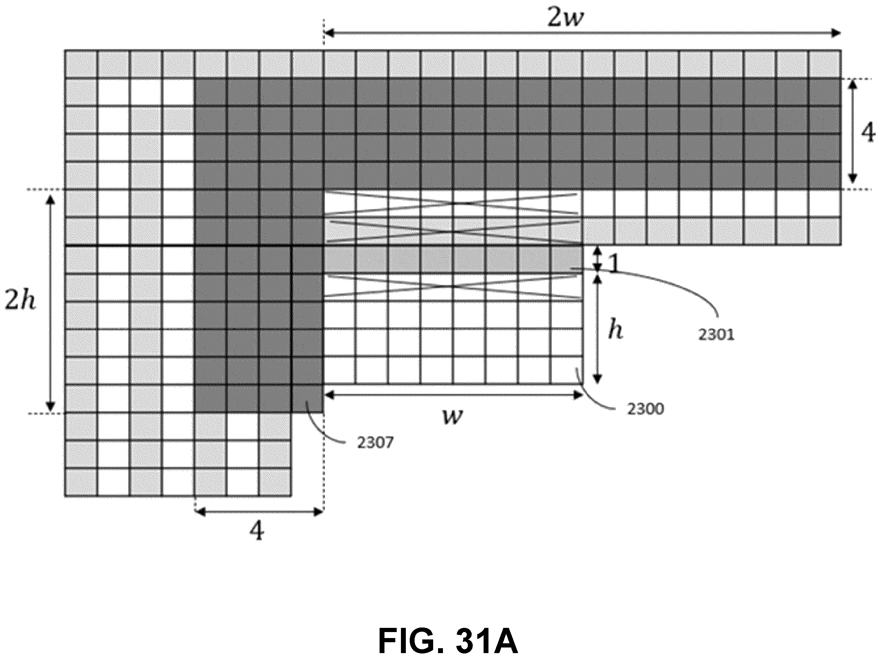

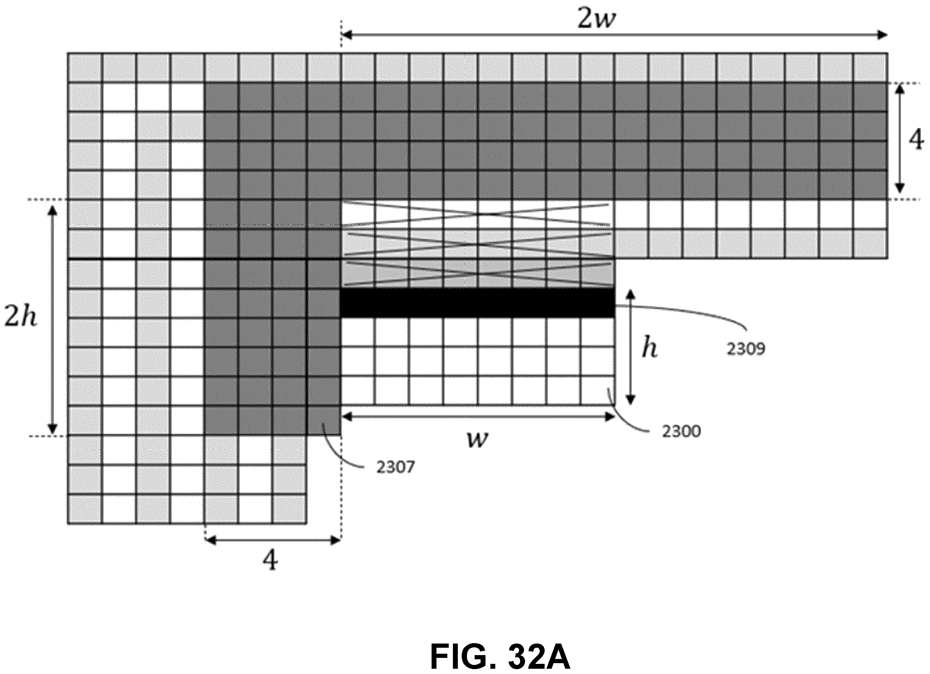

The example described with respect to FIG. 30 may be further described (e.g., specified) by FIGS. 31A-31B and FIGS. 32A-32C, e.g., if/when $j = 3$.

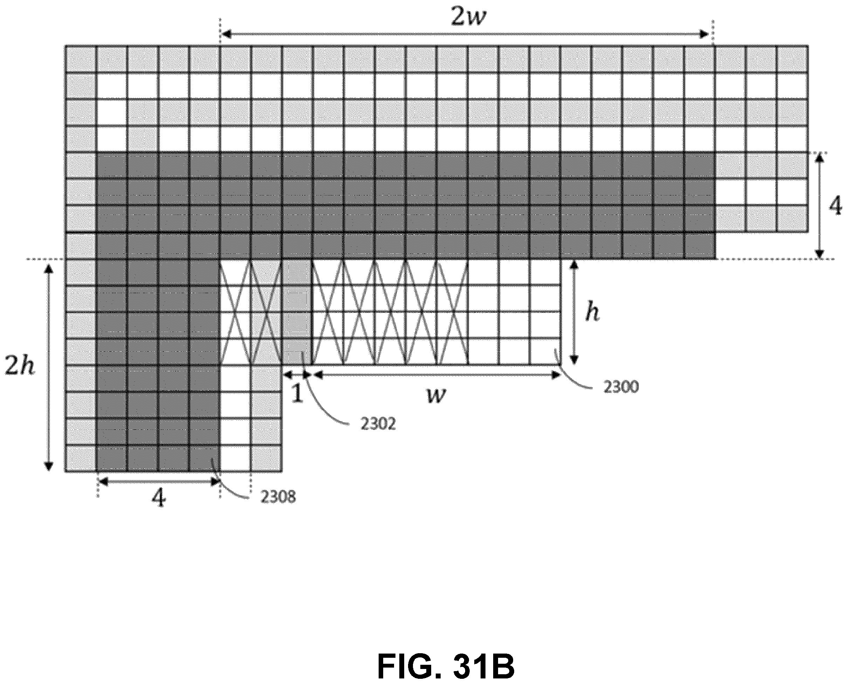

As shown in FIG. 31A, during the derivation operation, for predicting the template portion (2301) above (2300), the context (2307), which is shown in dark gray in FIG. 31A, may be placed at the position shifted by $j = 3$ rows to the top with respect to the position of the reference line of index 0, e.g., the reference line of (2300). The vector-matrix multiplication may be truncated, for example, by skipping (e.g., all) the multiplications and/or additions returning predicting samples outside the area of (2301). In FIG. 31A, this may indicate that (e.g., all) the multiplications and/or additions returning predicting samples positioned within the crossed cells may be skipped. For predicting the template portion (2302) on the left side of (2300), the context (2308), which is shown in dark gray in FIG. 31B, may be placed at the position shifted by $j = 3$ columns to the left with respect to the position of the reference line of index 0. The vector-matrix multiplication may be truncated, for example, by skipping (e.g., all) the multiplications and/or additions returning predicting samples outside the area of (2302). In FIG. 31B, this may indicate that (e.g., all) the multiplications and/or additions returning predicting samples positioned within the crossed cells may be skipped.

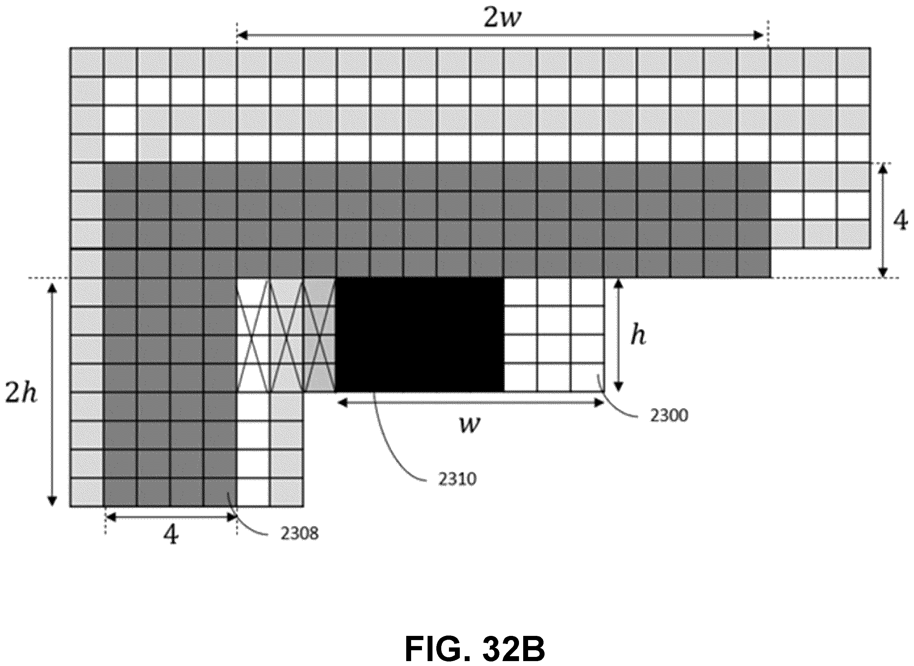

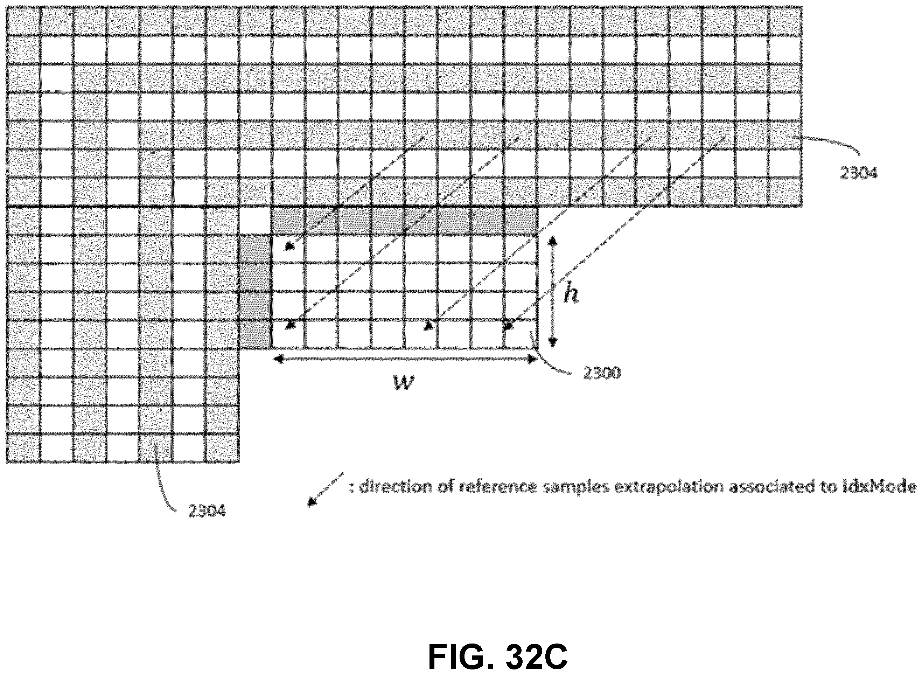

As shown in FIG. 32A, during the prediction of (2300), the context (2307), which is shown in dark gray in FIG. 32A, may be placed at the position shifted by $j = 3$ rows to the top with respect to the position of the reference line of index 0. The vector-matrix multiplication may be truncated, for example, by skipping (e.g., all) the multiplications and additions returning predicting samples outside the area of (2300). In FIG. 32A, this may indicate that (e.g., all) the multiplications and/or additions returning predicting samples positioned within the crossed cells may be skipped. The vector matrix-multiplication may (e.g., then) produce the piece (2309) of prediction of (2300). The context (2308), which is shown in dark gray in FIG. 32B, may be placed at the position shifted by $j = 3$ columns to the left with respect to the position of the reference line of index 0. The vector-matrix multiplication may be truncated, for example, by skipping (e.g., all) the multiplications and/or additions returning predicting samples outside the area of (2300). In FIG. 32B, this may indicate that (e.g., all) the multiplications and/or additions returning predicting samples positioned within the crossed cells may be skipped. The vector matrix-multiplication may (e.g., then) produce the piece (2310) of prediction of (2300). The prediction of (2300) from the extended reference line (2304) of index $j = 3$ via the intra prediction mode of index idxMode may generate $\hat{Y}_{part,reg}$, for example, as shown in FIG. 32C. The final prediction of (2300) may be created, for example, by blending (2309), (2310), and $\hat{Y}_{part,reg}$ using given weights. For example, weights at 0 may be associated with the missing predicted samples. For example, in FIG. 32A, missing predicted samples may be missing predicted samples inside the area of (2300), e.g., and not missing predicted samples inside the area of (2309). For example, in FIG. 32B, missing predicted samples may be missing predicted samples inside the area of (2300) and not missing predicted samples inside the area of (2310). In examples, given the above-mentioned blending, the term "replacement of the intra prediction mode of index idxMode by matrix-based intra prediction" may be referred to as "partial replacement of the intra prediction mode of index idxMode by matrix-based intra prediction," for examples, since the mode of index idxMode may still be involved in the prediction of (2300).

In examples, applying the (e.g., generic) flowchart of the truncation of matrix-based computations in FIGS. 28A-28B to FIGS. 31A-31B, e.g., for predicting a given portion $P$ ((2301) or (2302)) of template of (2300), $\overline{P}$ may include $P$, but the position of the pixel at the top-left of $P$ in the current channel may be different from the position of the pixel at the top-left of $\overline{P}$ in the current channel. In examples, applying the (e.g., generic) flowchart of the truncation of matrix-based computations in FIGS. 28A-28B to FIGS. 32A or 32B, e.g., for predicting a piece of the given $w \times h$ block $Y$ (2300), $\overline{Y}$ may include this piece, but the position of the pixel at the top-left of this piece in the current channel may be different from the position of the pixel at the top-left of $\overline{Y}$ in the current channel.

FIGS 31A-31B illustrate an example of the prediction of each portion of the template of a given $w \times h$ block when the pair of the extended reference line of index 3 and the intra prediction mode of index idxMode are being tested on the template of the block and the intra prediction mode of index idxMode is replaced by matrix-based intra prediction, during the TMRL derivation operation.

FIGS. 32A-32C illustrate an example of the prediction of a given $w \times h$ block via TMRL when the pair of the extended reference line of index 3 and the intra prediction mode of index idxMode are selected for prediction and the intra prediction mode of index idxMode is replaced by matrix-based intra prediction.

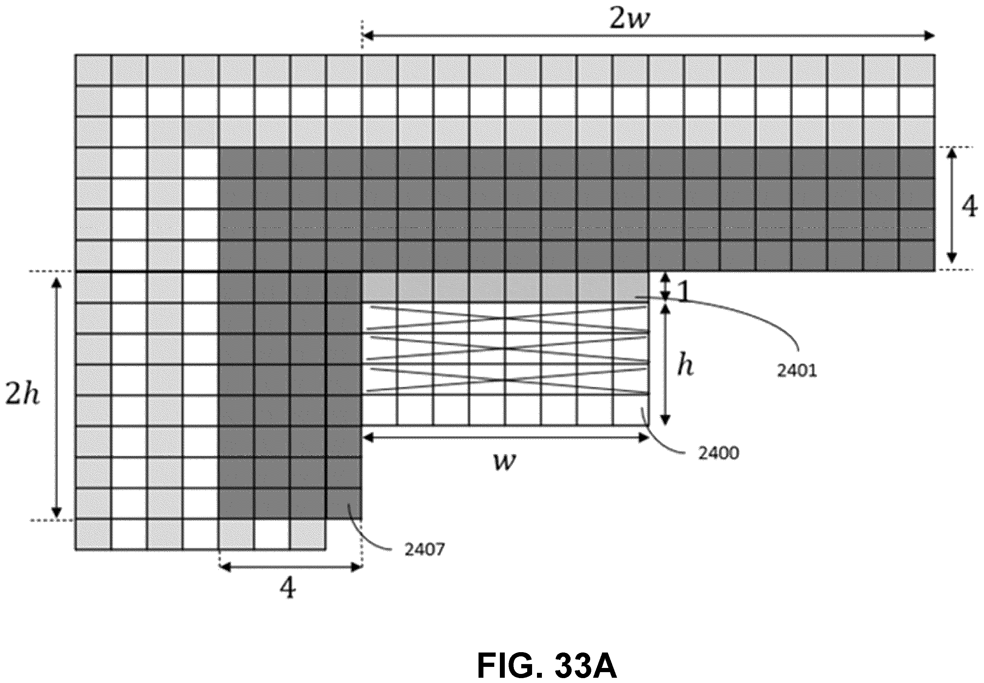

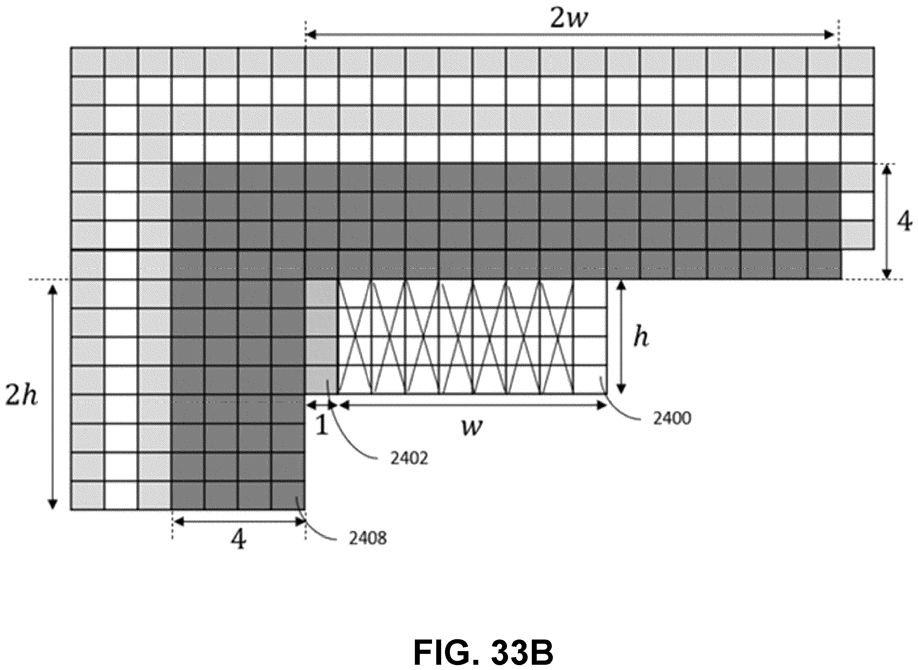

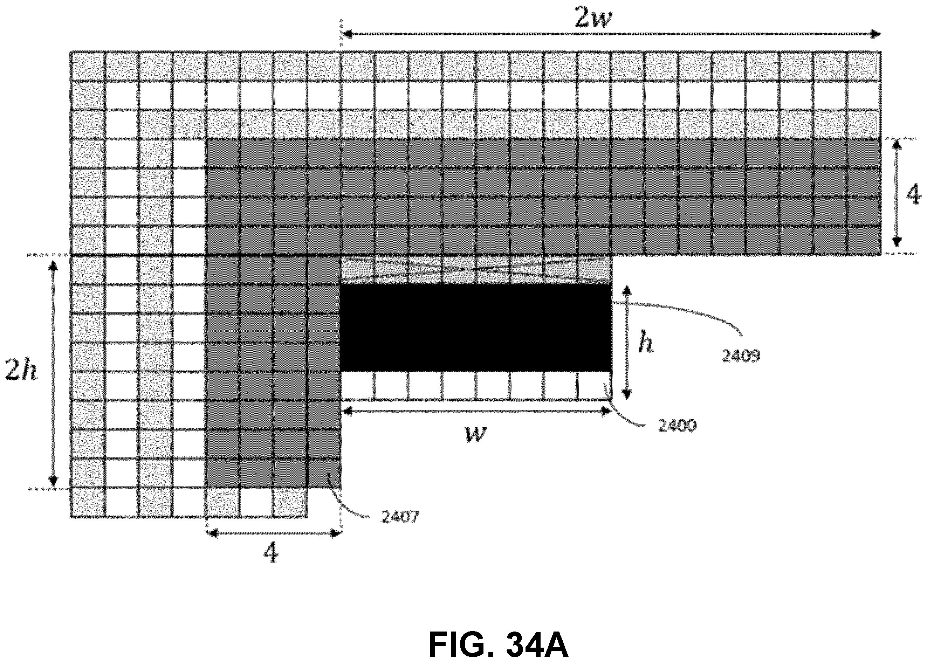

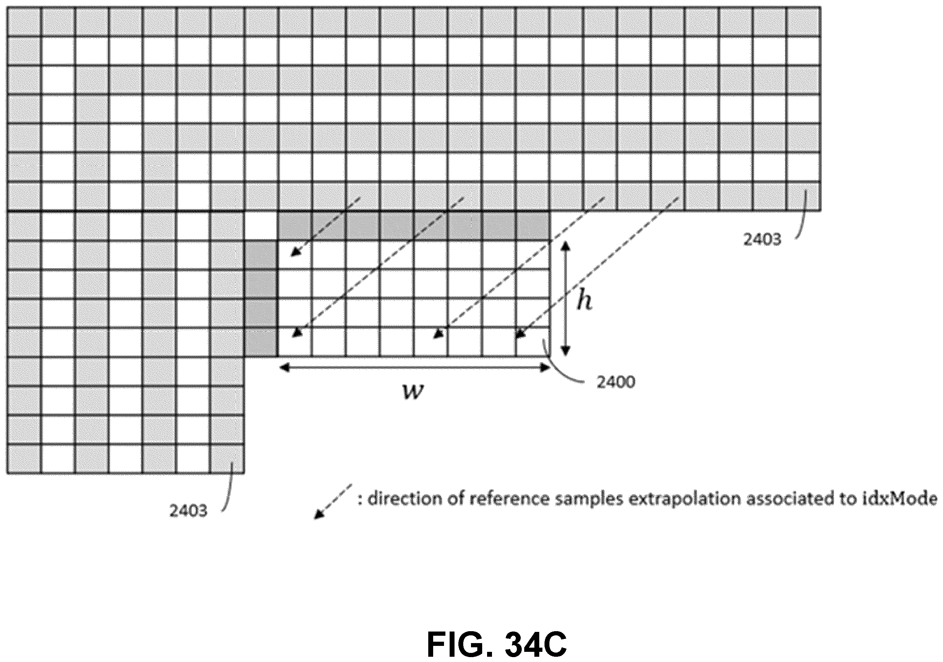

The example described with respect to FIG. 30 may be further described (e.g., specified) with respect to FIGS 33A-33B and FIGS. 34A-34C, e.g., if $j = 1$. The description of FIGS. 31A-31B and FIGS. 32A-32C may be re-used for explaining FIGS. 33A-33B and FIGS. 34A-34C, e.g., by replacing $j = 3$, (2300), (2301), (2302), (2307), (2308), (2309), (2310) with $j = 1$, (2400), (2401), (2402), (2407), (2408), (2409), (2410), respectively. In the description, reference line (2304) may become reference line (2403).

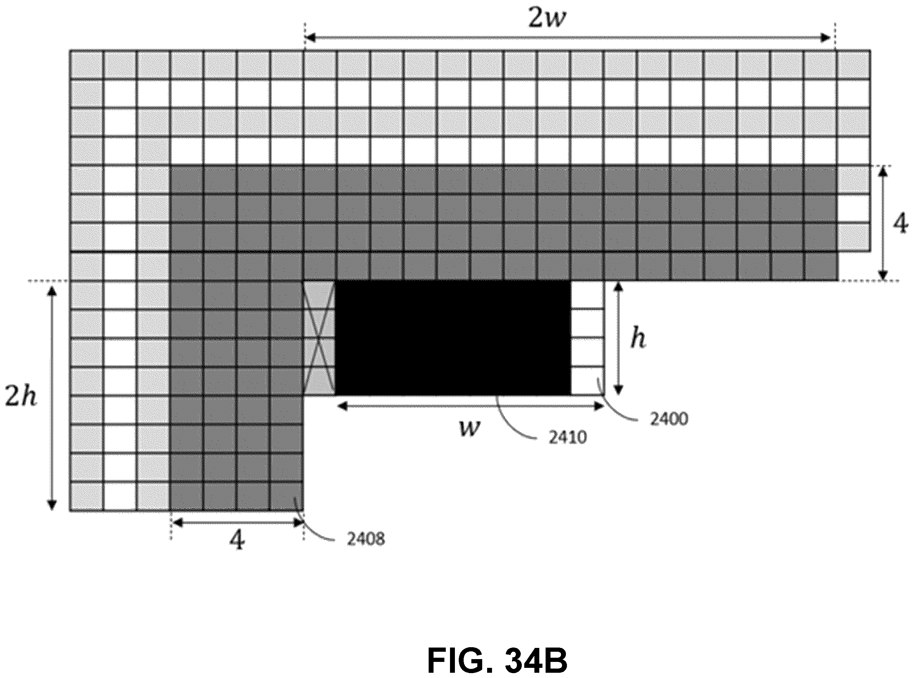

In examples, applying the (e.g., generic) flowchart of the truncation of matrix-based computations in FIGS. 28A-28B to FIGS. 33A-33B, e.g., for predicting a given portion $P$ ((2401) or (2402)) of template of (2400), $\overline{P}$ may include $P$ and the position of the pixel at the top-left of $P$ in the current channel may be identical to the position of the pixel at the top-left of $\overline{P}$ in the current channel. In examples, applying the (e.g., generic) flowchart of the truncation of matrix-based computations in FIGS. 28A-28B to FIG. 34A or 34B, e.g., for predicting a piece of the given $w \times h$ block $Y$ (2400), $\overline{Y}$ may include this piece, but the position of the pixel at the top-left of this piece in the current channel may be different from the position of the pixel at the top-left of $\overline{Y}$ in the current channel.

FIGS. 33A-33B illustrate an example of the prediction of each portion of the template of a given $w \times h$ block when the pair of the extended reference line of index 1 and the intra prediction mode of index idxMode are being tested on the template of the block and the intra prediction mode of index idxMode is replaced by matrix-based intra prediction, during the TMRL derivation operation.

FIGS. 34A-34C illustrate an example of the prediction of a given $w \times h$ block via TMRL when the pair of the extended reference line of index 1 and the intra prediction mode of index idxMode are selected for prediction and the intra prediction mode of index idxMode is replaced by matrix-based intra prediction.

An (e.g., a first) example expression of blending may be used during the prediction operation. For example, re-using the prediction of the given $w \times h$ block $Y$ (2300) via TMRL illustrated in FIGS. 32A-32B, the (e.g., optional) blending may be, e.g., for $x \in [\![0, w - 1]\!], y \in [\![0, h - 1]\!]$, for example, in accordance with Eq. (1):

$$\hat{Y}(x,y) = \text{clip}\left(\left(w_{\text{mb},0}(x,y) * \hat{Y}_{\text{mb},0}(x,y) + w_{\text{mb},1}(x,y) * \hat{Y}_{\text{mb},1}(x,y) + w_{\text{part,reg}}(x,y) * \right.\right.$$

$$\left.\left. \hat{Y}_{\text{part,reg}}(x,y) + 16\right) \gg 5, 0, 1023\right) \tag{1}$$

Where parameter $\hat{Y}_{\text{mb},0}$ may denote the $w \times h$ predicted block covering the same area as (2300), e.g., including (2309), and whose predicted samples located outside (2309) may be filled with any value(s). Parameter $\hat{Y}_{\text{mb},1}$ may denote the $w \times h$ predicted block covering the same area as (2300), e.g., including (2310), and whose predicted samples located outside (2310) may be filled with any value(s). Parameters $w_{\text{mb},0}(x, y)$, $w_{\text{mb},1}(x, y)$, and $w_{\text{part,reg}}(x, y)$ may denote the blending weights associated with $\hat{Y}_{\text{mb},0}(x, y)$, $\hat{Y}_{\text{mb},1}(x, y)$, and $\hat{Y}_{\text{part,reg}}(x, y)$, respectively, at position $(x, y)$. For example, $w_{\text{mb},0}(x, y) \geq 0$, $w_{\text{mb},1}(x, y) \geq 0$, $w_{\text{part,reg}}(x, y) \geq 0$, $w_{\text{mb},0}(x, y) + w_{\text{mb},1}(x, y) + w_{\text{part,reg}}(x, y) = 32$. The final $w \times h$ prediction of $Y$ (2300) resulting from the (e.g., optional) blending may be denoted $\hat{Y}$.

For example, for a position $(x, y)$ located outside the area of (2309), $w_{\text{mb},0}(x, y) * \hat{Y}_{\text{mb},0}(x, y)$ may not be executed, e.g., since $w_{\text{mb},0}(x, y)$ may be equal to zero (0). For example, for a position $(x, y)$ located outside the area of (2310), $w_{\text{mb},1}(x, y) * \hat{Y}_{\text{mb},1}(x, y)$ may not be executed, e.g., since $w_{\text{mb},1}(x, y)$ may be equal to zero (0).

An (e.g., a second) example expression of blending may be used during the prediction operation. For example, re-using the prediction of the given $w \times h$ block $Y$ (2300) via TMRL depicted in FIGS. 32A-32B, the (e.g., optional) blending may be, e.g., for $x \in [\![0, w - 1]\!], y \in [\![0, h - 1]\!]$, for example, in accordance with Eq. (2):

$$\hat{Y}(x,y) = \text{clip}\left(\left(w_{\text{mb},0}(x,y) * \hat{Y}_{\text{mb},0}(x,y) + w_{\text{mb},1}(x,y) * \hat{Y}_{\text{mb},1}(x,y) + w_{\text{part,reg}}(x,y) * \right.\right.$$

$$\left.\left. \hat{Y}_{\text{part,reg}}(x,y)\right) \gg 6, 0, 1023\right)$$

$$\tag{2}$$

For example, $w_{\text{mb},0}(x, y) \geq 0$, $w_{\text{mb},1}(x, y) > 0$, $w_{\text{part,reg}}(x, y) \geq 0$, $w_{\text{mb},0}(x, y) + w_{\text{mb},1}(x, y) + w_{\text{part,reg}}(x, y) = 64$.

An (e.g., a third) example expression of blending may be used during the prediction operation. For example, re-using the prediction of the given $w \times h$ block $Y$ (2300) via TMRL shown in FIGS. 32A-32B, the (e.g., optional) blending may be, e.g., for $x \in [\![0, w - 1]\!], y \in [\![0, h - 1]\!]$, for example, in accordance with Eq. (3):

$$\hat{Y}(x,y) = \text{clip}\left(\left(w_{\text{mb},0}(x,y) * \hat{Y}_{\text{mb},0}(x,y) + w_{\text{mb},1}(x,y) * \hat{Y}_{\text{mb},1}(x,y) + w_{\text{part,reg}}(x,y) * \right.\right.$$

$$\left.\left. \hat{Y}_{\text{part,reg}}(x,y) + \left(1 \ll (\alpha - 1)\right)\right) \gg \alpha, 0, (1 \ll \beta) - 1\right)$$

$$\tag{3}$$

For example, $w_{\text{mb},0}(x, y) \geq 0$, $w_{\text{mb},1}(x, y) \geq 0$, $w_{\text{part,reg}}(x, y) \geq 0$, $w_{\text{mb},0}(x, y) + w_{\text{mb},1}(x, y) + w_{\text{part,reg}}(x, y) = 1 \ll \alpha$. For example, $\alpha \in \{5, 6, 7, 8\}$. For example, $\beta$ may denote the bitdepth. For example, $\beta \in \{8, 10, 12\}$.

For example, $w_{\text{mb},0}$, $w_{\text{mb},1}$, and $w_{\text{part,reg}}$ may depend on the SAD between (2301) and its prediction via the matrix-based intra prediction replacing the intra prediction mode of index idxMode, e.g., using the reference line of index $j$, and the SAD between (2302) and its prediction via the matrix-based intra prediction replacing the intra prediction mode of index idxMode, e.g., using the reference line of index $j$, during the TMRL derivation operation. In some examples, the relation of dependency on the SADs may be similar to the relation between template prediction SATDs and the blending weight values in TIMD.

For (e.g., another) example, $w_{\text{mb},0}$, $w_{\text{mb},1}$, and $w_{\text{part,reg}}$ may take on hardcoded values. For example, the choice of the used hardcoded values may depend on $h$, $w$, and/or $j$. In examples, the hardcoded values may be stored as tables, e.g., similar to the blending weight tables in SGPM, where entries may be given by the size of the block predicted via SGPM and the index of the selected split.

Other example expressions of blending may be used during the prediction operation. For example, the (e.g., three) example expressions of blending during the prediction operation labeled as (Eq. 1), (Eq. 2), and (Eq. 3), respectively, may be adapted to the prediction of the given $w \times h$ block $Y$ (2400) via TMRL in FIGS. 34A-34C, e.g., by turning (2300), (2301), (2302), (2309), and (2310) into (2400), (2401), (2402), (2409), and (2410), respectively.

Other (e.g., alternative) blending may be implemented during the prediction operation. Even though, in the example in FIGS. 31A-31B and FIGS. 32A-32B and in the example in FIGS. 33A-33B and FIGS. 34A-34C, during the prediction of the given $w \times h$ block via TMRL, example blending of predictions may be illustrated, any alternative blending may be employed. For example, during the prediction of the given $w \times h$ block via TMRL using the extended reference line of index $j \in \{1, 3, 5, 7, 12\}$ and the intra prediction mode of index idxMode, if the replacement by the matrix-based intra prediction is allowed, the blending may involve a (e.g., single) prediction via the matrix-based intra prediction and a (e.g., single) prediction via the intra prediction mode of index idxMode.

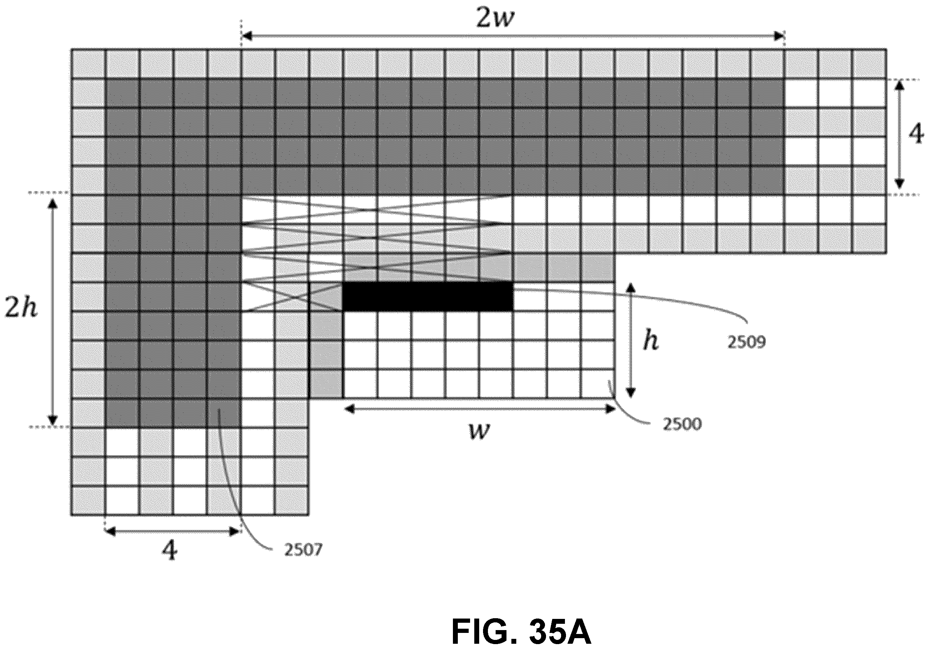

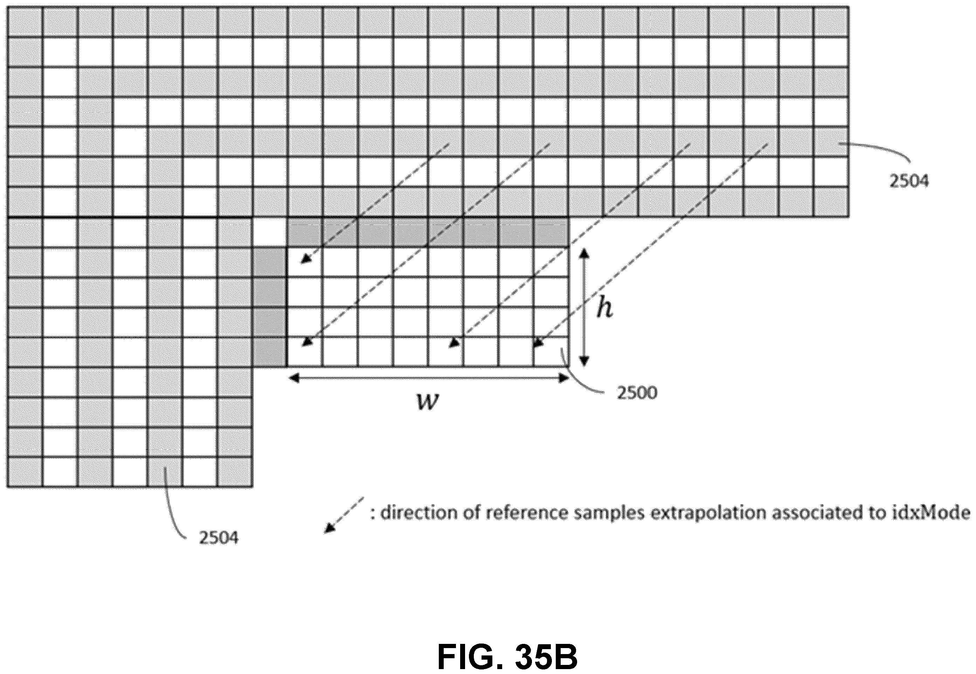

Continuing with the (e.g., alternative blending) example, re-using the example in FIGS. 31A-31B and FIGS. 32A-32B, FIGS. 32A-32B may become FIGS. 35A-35BFIGS. 35A-35B. As shown in FIGS. 35A-35B, during the prediction of (2500), the context (2507), which is shown in dark gray in FIGS. 35A, may be placed at the position shifted by $j = 3$ rows to the top and $j = 3$ columns to the left with respect to the position of the reference line of index 0. The vector-matrix multiplication may be truncated, for example, by skipping (e.g., all) the multiplications and/or additions returning predicting samples outside the area of (2500). In FIG. 35A, this may indicate that (e.g., all) the multiplications and/or additions returning predicting samples positioned within the crossed cells may be skipped. The vector matrix-multiplication may (e.g., then) produce the piece (2509), which is shown in black in FIG. 35A, of prediction of (2500). The prediction of (2500) from the extended reference line (2504) of index $j = 3$ via the intra prediction mode of index idxMode may generate $\hat{Y}_{\text{part,reg}}$, e.g., as shown in FIG. 35B. The final prediction of (2500) may be generated, for example, by blending (2509) and $\hat{Y}_{\text{part,reg}}$ using given weights.

FIGS. 35A-35B illustrate an example of the prediction of a given $w \times h$ block via TMRL when the pair of the extended reference line of index 3 and the intra prediction mode of index idxMode are selected for prediction and the intra prediction mode of index idxMode is replaced by matrix-based intra prediction.

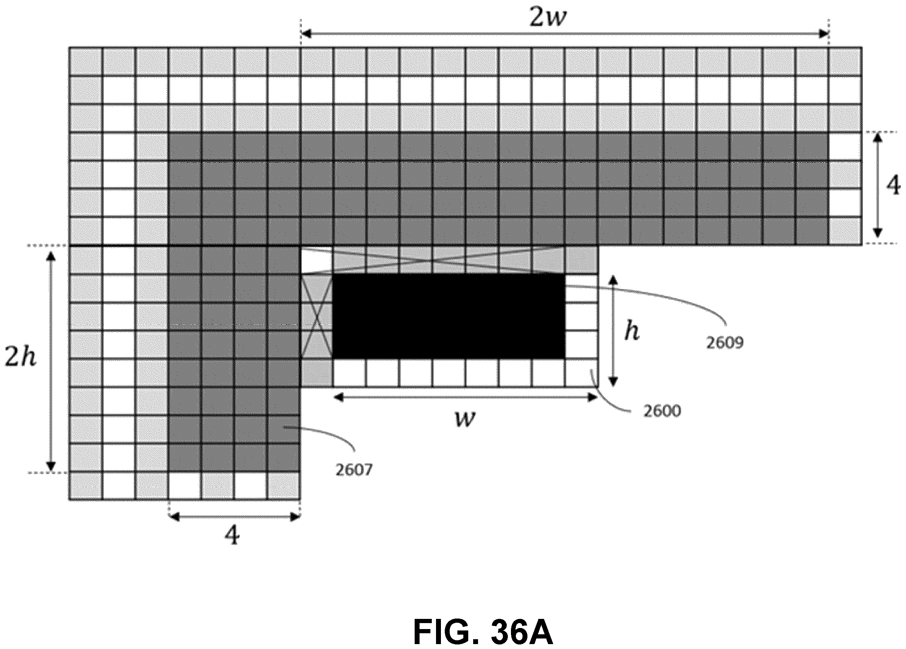

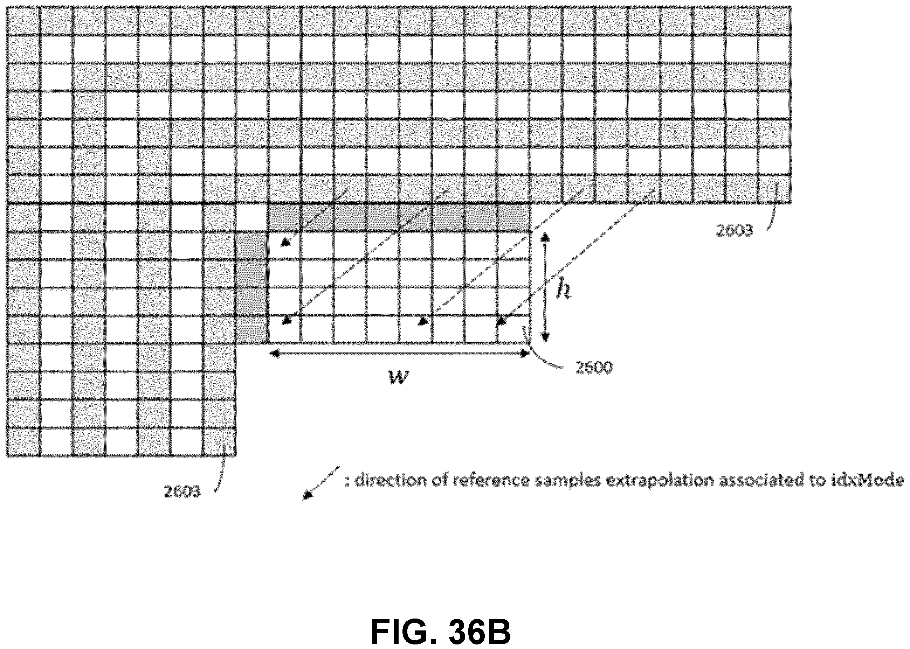

Continuing with the (e.g., alternative blending) example, re-using the example in FIGS. 33A-33B and FIGS. 34A-34C, FIGS. 34A-34C may become FIGS. 36A-36B. During the prediction of (2600), the context (2607), which is shown in dark gray in FIG. 36A, may be placed at the position shifted by $j = 1$ row to the top and $j = 1$ column to the left with respect to the position of the reference line of index 0. The vector-matrix multiplication may be truncated, for example, by skipping (e.g., all) the multiplications and/or additions returning predicting samples outside the area of (2600). In FIG. 36A, this may indicate that (e.g., all) the multiplications and/or additions returning predicting samples positioned within the crossed cells may be skipped. The vector matrix-multiplication may (e.g., then) produce the piece (2609), which is shown in black in FIG. 36A, of prediction of (2600). The prediction of (2600) from the extended reference line (2603) of index $j = 1$ via the intra prediction mode of index idxMode may generate $\hat{Y}_{\text{part,reg}}$, e.g., as shown in FIG. 36B. The final prediction of (2600) may be generated, for example, by blending (2609) and $\hat{Y}_{\text{part,reg}}$ using given weights.

FIGS. 36A-36B illustrate an example of the prediction of a given $w \times h$ block via TMRL when the pair of the extended reference line of index 1 and the intra prediction mode of index idxMode are selected for prediction and the intra prediction mode of index idxMode is replaced by matrix-based intra prediction.

An (e.g., a first) example expression of blending may be generated during the prediction operation. For example, e.g., re-using the prediction of the given $w \times h$ block $Y$ (2500) via TMRL presented in FIGS. 35A-35B, the blending may be, e.g., for $x \in [\![0, w - 1]\!], y \in [\![0, h - 1]\!]$, for example, in accordance with Eq. (4):

$$\hat{Y}(x, y) = \text{clip}\left(\left(w_{\text{mb}}(x, y) * \hat{Y}_{\text{mb}}(x, y) + \left(32 - w_{\text{mb}}(x, y)\right) * \hat{Y}_{\text{part,reg}}(x, y) + 16\right) \gg 5, 0, 1023\right)$$

$$(4)$$

Where the parameter $\hat{Y}_{\text{mb}}$ may denote the $w \times h$ predicted block covering the same area as (2500), e.g., including (2509), and whose predicted samples located outside (2509) may be filled with any value(s). For example, a value for filling may be zero (0). For example, a value for filling may be -32768. For example, a value for filling may be 32767. The parameter $w_{\text{mb}}(x, y)$ may denote the blending weight associated with $\hat{Y}_{\text{mb}}(x, y)$ at position $(x, y)$. For example, $w_{\text{mb}}(x, y) \geq 0$. The final $w \times h$ prediction of $Y$ (2500) resulting from the optional blending may be denoted $\hat{Y}$.

For example, for a position (x, y) located outside the area of (2509), $w_{mb}(x, y) * \hat{Y}_{mb}(x, y)$ may not be executed, e.g., since $w_{mb}(x, y)$ may be equal to zero (0).

An (e.g., a second) example expression of blending may be generated during the prediction operation. For example, e.g., re-using the prediction of the given $w \times h$ block **Y** (2500) via TMRL shown in FIGS. 35A-35B, the optional blending may be, e.g., for $x \in [\![0, w - 1]\!], y \in [\![0, h - 1]\!]$, for example, in accordance with Eq. (5):

$$\hat{Y}(x, y) = \text{clip}\left(\left(w_{mb}(x, y) * \hat{Y}_{mb}(x, y) + \left((1 \ll \alpha) - w_{mb}(x, y)\right) * \hat{Y}_{\text{part,reg}}(x, y) + \left(1 \ll (\alpha - 1)\right)\right) \gg \alpha, 0, (1 \ll \beta) - 1\right)$$

$$(5)$$

For example, $w_{mb}(x, y) \geq 0$. For example, $\alpha \in \{5, 6, 7, 8\}$. For example, $\beta$ may denote the bitdepth. For example, $\beta \in \{8, 10, 12\}$.

Other example expressions of blending may be used during the prediction operation. For example, the (e.g., two) example expressions of blending during the prediction operation labeled as (Eq. 4) and (Eq. 5), respectively, may be adapted to the prediction of the given $w \times h$ block **Y** (2600) via TMRL in FIGS. 36A-36B, e.g., by turning (2500) and (2509) into (2600) and (2609), respectively.

In some examples, the intra prediction mode may be replaced by matrix-based intra prediction depending on the used extended reference line. For a given $w \times h$ block **Y** predicted via TMRL, during the derivation operation and/or the prediction operation, for an extended reference line of index j and an intra prediction mode of index idxMode, the choice of replacing the intra prediction mode by the matrix-based intra prediction may depend on the used extended reference line.

In some examples, the intra prediction mode may be replaced by matrix-based intra prediction depending on the used extended reference line during the derivation operation. For example, during the derivation operation, if at least one portion of the template of **Y** cannot be fully predicted from the context via matrix-based intra prediction, the intra prediction mode of index idxMode may not be replaced by matrix-based intra prediction for predicting the (e.g., two) portions of the template of Y. For example, in the example in FIGS. 31A-31B involving $j = 3$, the mode of index idxMode may be replaced by the matrix-based intra prediction for predicting (2301) and (2302). For example, in the example in FIGS. 33A-33B involving $j = 1$, the mode of index idxMode may be replaced by the matrix-based intra prediction for predicting (2401) and (2402). For example, by adapting the example in FIGS. 31A-31B to $j \in \{5, 7, 12\}$, the mode of index idxMode may not be replaced by the matrix-based intra prediction for predicting (2301) and (2302).

In some examples, the intra prediction mode may be replaced by matrix-based intra prediction depending on the used extended reference line during the prediction operation. For example, during the prediction operation, if at least a given proportion of **Y** cannot be predicted from the context via matrix-based intra prediction (e.g., optionally) before applying a blending, the intra prediction mode of index idxMode may not be replaced (e.g., "partially replaced") by matrix-based intra prediction for predicting **Y.** For example, the given proportion may be half the area of **Y.** For (e.g., another) example, the given proportion may be three quarters of the area of **Y.** For example, using the proportion "half the area of **Y,**" in the example in FIGS. 32A-32C involving $j = 3$, using $h = 4$ and $w = 8$, (2309) and (2310) together may cover 23 predicted samples in the area of (2300). Thus, the intra prediction mode of index idxMode may be replaced (e.g., partially replaced) by matrix-based intra prediction for predicting (2300). For (e.g., another) example, using the proportion "half the area of **Y**", in the example in FIGS. 34A-34C involving $j = 1$, using $h = 4$ and $w = 8$, (2409) and (2410) together may cover 31 predicted samples in the area of (2400). Thus, the intra prediction mode of index idxMode may be replaced (e.g., partially replaced) by matrix-based intra prediction for predicting (2400). For (e.g., another) example, using the proportion "half the area of **Y**", in the example in FIGS. 35A-35B involving $j = 3$, using $h = 4$ and $w = 8$, (2509) may cover five (5) predicted samples in the area of (2500). Thus, the intra prediction mode of index idxMode may not be replaced (e.g., partially replaced) by matrix-based intra prediction for predicting (2500). For (e.g., another) example, using the proportion "half the area of **Y**", in the example in FIGS. 36A-36B involving $j = 1$, using $h = 4$ and $w = 8$, (2609) may cover 21 predicted samples in the area of (2600). Thus, the intra prediction mode of index idxMode may be replaced (e.g., partially replaced) by matrix-based intra prediction for predicting (2600).

In some examples, the intra prediction mode may be replaced by matrix-based intra prediction depending on the used extended reference line during the derivation and prediction operations. For example, during the derivation operation, if at least one portion of the template of **Y** cannot be fully predicted from the context via matrix-based intra prediction and, during the prediction operation, if at least a given proportion of **Y** cannot be predicted from the context via matrix-based intra prediction (e.g., optionally) before applying a blending, the intra prediction mode of index idxMode may not be replaced by matrix-based intra prediction, e.g., not for predicting the (e.g., two) portions of the template of $Y$ and/or not for predicting $Y$.

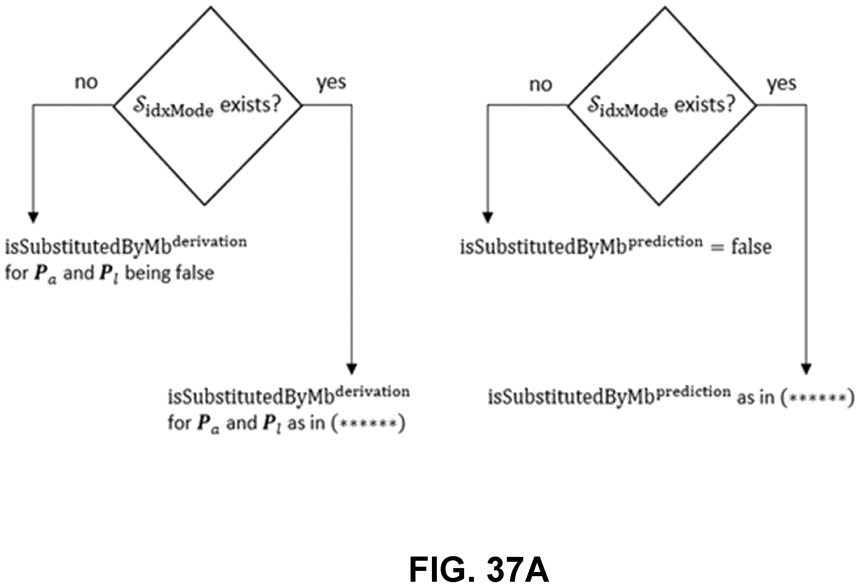

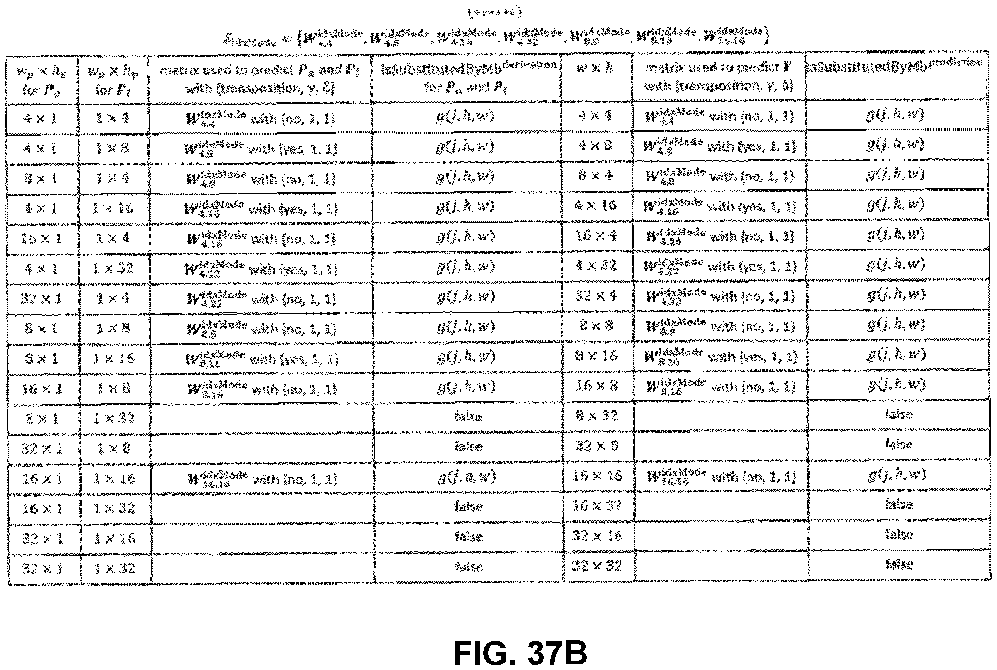

The example may be combined with the dependency of the context on the used extended reference line (e.g., as described herein) and the activation of the matrix-based intra prediction, for example, depending on the definition of the preprocessing and/or postprocessing shown in FIG. 18. Then, using $\mathcal{S}_{\mathrm{idxMode}}$ = $\{W_{4,4}^{\mathrm{idxMode}}, W_{4,8}^{\mathrm{idxMode}}, W_{4,16}^{\mathrm{idxMode}}, W_{4,32}^{\mathrm{idxMode}}, W_{8,8}^{\mathrm{idxMode}}, W_{8,16}^{\mathrm{idxMode}}, W_{16,16}^{\mathrm{idxMode}}\}$, in FIG. 25 at 1921, isSubstitutedByMb$^{\mathrm{derivation}}$ may be given by the table-based definition in FIGS. 37A-37B. In FIG. 17C, at 1551, isSubstitutedByMb$^{\mathrm{prediction}}$ may be specified by the table-based definition in FIGS. 37A-37B. In FIGS. 37A-37B, a (e.g., each) table row may group $Y$ of a given size and its (e.g., two) associated template portion $P_a$ and $P_l$ in TMRL. For example, in a (e.g., each) table row, during the derivation operation, the parametrization of the truncation of computations during the prediction of $P_a$ may be (e.g., fully) defined by, for example, applying FIG. 26 using $w_p \times h_p$ for $P_a$ and $w \times h$. Similarly, in a (e.g., each) table row, during the derivation operation, the parametrization of the truncation of computations during the prediction of $P_l$ may be (e.g., fully) specified, for example, by applying FIG. 26, e.g., using $w_p \times h_p$ for $P_l$ and $w \times h$. In FIGS. 37A-37B, $g(j, h, w)$ may return true if, during the derivation operation, each of the (e.g., two) portions of the template of $w \times h$ block $Y$ can be fully predicted from the context via matrix-based intra prediction, the extended reference line of index $j$ being used, and, during the prediction operation, more than $(1/\rho)$ of the area of $Y$ can be predicted from the context via matrix-based intra prediction, the extended reference line of index j being used, (e.g., optionally) before applying a blending. For example, $\rho$ = 2. For (e.g.., another) example, $\rho$ = 4. For (e.g., another) example, $\rho$ may be a configuration parameter.

FIGS. 37A-37B illustrate an example definition of isSubstitutedByMb$^{\mathrm{derivation}}$ and isSubstitutedByMb$^{\mathrm{prediction}}$.

The example illustrated in FIGS. 37A-37B may be combined with the complexity budget accessesMemMbCtu.

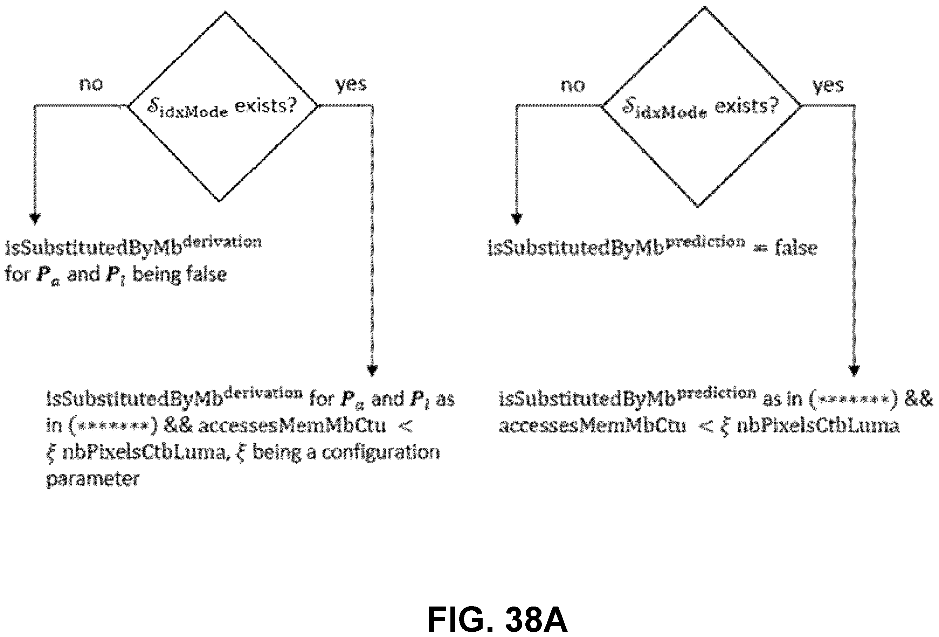

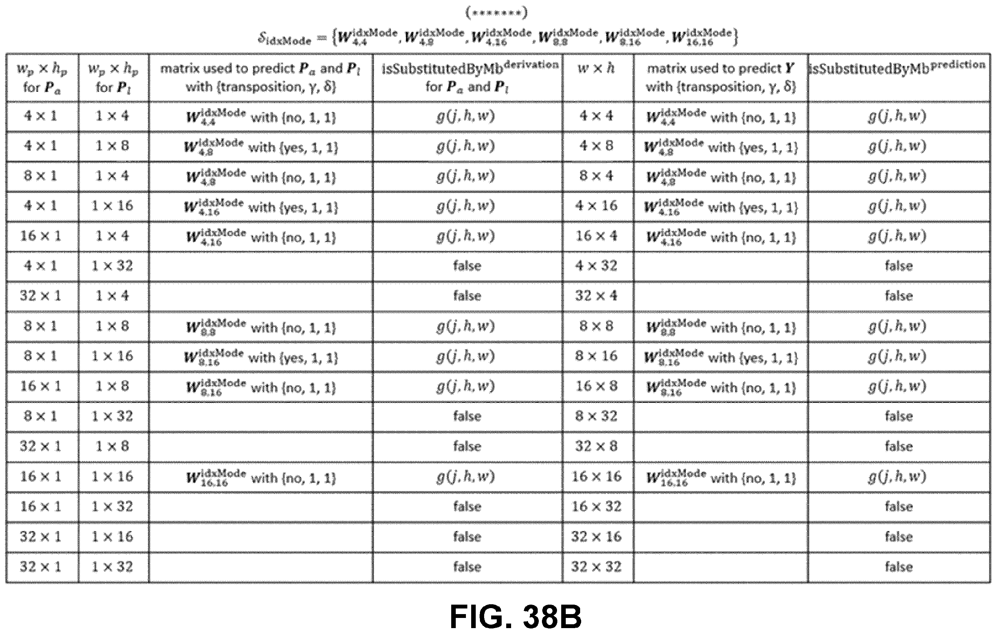

The example (e.g., latter example) may be re-used but turning $\mathcal{S}_{\mathrm{idxMode}}$ into $\mathcal{S}_{\mathrm{idxMode}}$ = $\{W_{4,4}^{\mathrm{idxMode}}, W_{4,8}^{\mathrm{idxMode}}, W_{4,16}^{\mathrm{idxMode}}, W_{8,8}^{\mathrm{idxMode}}, W_{8,16}^{\mathrm{idxMode}}, W_{16,16}^{\mathrm{idxMode}}\}$. Then, in FIG. 25 at 1921, isSubstitutedByMb$^{\mathrm{derivation}}$ may be given by the table-based definition in FIGS. 38A-38B. In FIG. 17C, at 1551, isSubstitutedByMb$^{\mathrm{prediction}}$ may be specified by the table-based definition in FIGS. 38A-38B.

FIGS. 38A-38B illustrate an example definition of isSubstitutedByMb$^{\mathrm{derivation}}$ and isSubstitutedByMb$^{\mathrm{prediction}}$.

TIMD (e.g., as described herein) may be applied to CIIP and IBC. For a given block predicted via CIIP (e.g., since CIiP applies TIMD to the block in order to obtain a prediction (intra) of the block), TIMD (e.g., as described herein) may be applied (e.g., straightforwardly generalized) to CIIP and/or IBC-CIIP.

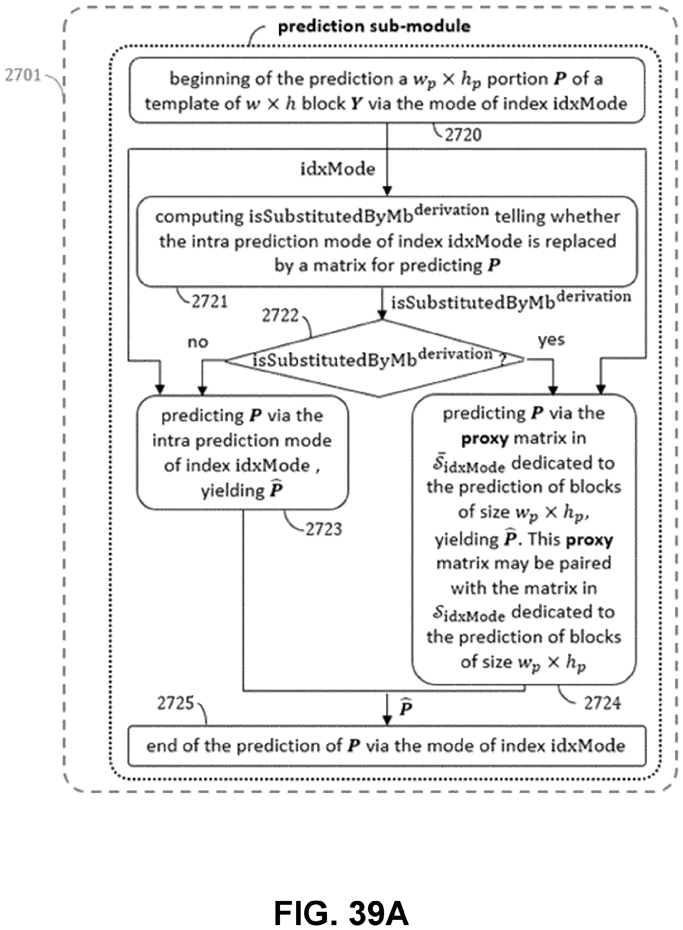

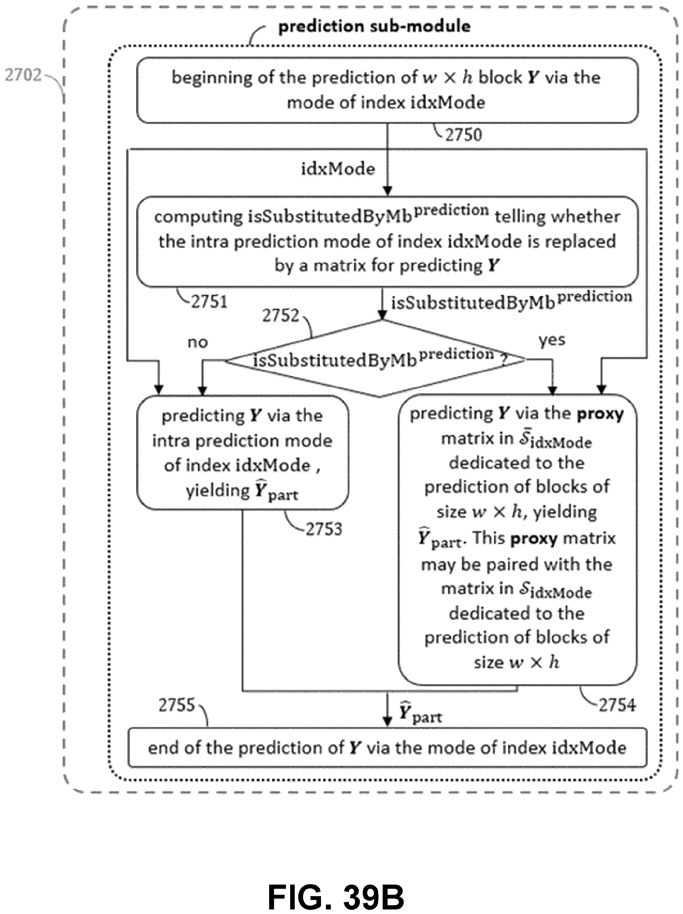

Proxy matrices may be used with (e.g., inside) a hybrid block-based (e.g., including template-based) prediction tool. For example, if matrix-based intra prediction replaces hybrid block-based intra prediction modes, inside the derivation/prediction operation of a hybrid block-based (e.g., including template-based) prediction tool, the matrix used for prediction, as described herein, may be replaced by a proxy matrix. For example, at the decoder side of a hybrid block-based video codec, the process for obtaining the reconstruction $\tilde{Y}$ of a given $w \times h$ block $Y$ in FIG. 17A may be modified, for example, by putting 2701 in FIGS. 39A-39B in place of 1501.

As shown in FIG. 39A, at 2720, the prediction of a $w_p \times h_p$ portion $P$ of a template of $Y$ via the mode of index idxMode may be triggered.

At 2721, isSubstitutedByMb$^{\mathrm{derivation}}$ may be computed.

At 2722, if isSubstitutedByMb$^{\mathrm{derivation}}$ is true, the process may move on to 2724. Otherwise, the process may advance to 2723.

At 2723, $P$ may be predicted by the intra prediction mode of index idxMode, which may yield $\hat{P}$.

At 2724, $P$ may be predicted via the proxy matrix in $\bar{\mathcal{S}}_{\mathrm{idxMode}}$ dedicated to the prediction of blocks of size $w_p \times h_p$, which may yield $\hat{P}$. The proxy matrix may be paired with the matrix in $\mathcal{S}_{\mathrm{idxMode}}$ dedicated to the prediction of blocks of size $w_p \times h_p$.

At 2725, the prediction of $P$ via the mode of index idxMode may end.

For example, at the decoder side of a hybrid block-based video codec, the process for obtaining the reconstruction $\tilde{Y}$ of a given $w \times h$ block $Y$ in FIGS. 17A-17C may be changed by putting 2702 in FIGS. 39A-39B in place of 1502.

At 2750, the prediction of $w \times h$ block $Y$ via the mode of index idxMode may begin.

At 2751, isSubstitutedByMb$^{\mathrm{prediction}}$ may be computed.

At 2752, if isSubstitutedByMb$^{\mathrm{prediction}}$ is true, the process may go to 2754. Otherwise, the process may get to 2753.

At 2753, $Y$ may be predicted by the intra prediction mode of index idxMode, which may yield $\hat{Y}_{\mathrm{part}}$.

At 2754, $Y$ may be predicted via the proxy matrix in $\bar{\mathcal{S}}_{\mathrm{idxMode}}$ dedicated to the prediction of blocks of size $w \times h$,

which may yield $\hat{Y}_{\text{part}}$. The proxy matrix may be paired with the matrix in $\mathcal{S}_{\text{idxMode}}$ dedicated to the prediction of blocks of size $w \times h$.

At 2755, the prediction of **Y** via the mode of index idxMode may end.

FIGS. 39A-39B illustrate an example of the prediction of a $w_p \times h_p$ portion **P** of a template of a $w \times h$ block **Y** via the mode of index **idxMode** during the derivation operation of a template-based tool and prediction of **Y** via the mode of index **idxMode** during its prediction operation.

In examples, a (e.g., each) matrix involved in the matrix-based intra prediction may be associated with a proxy matrix. For example, if matrix-based intra prediction replaces hybrid block-based intra prediction modes, inside the derivation/prediction operation of a template-based prediction tool, for a given index idxMode of intra prediction mode, a (e.g., each) matrix in $\mathcal{S}_{\text{idxMode}}$ may be associated with a proxy matrix in $\bar{\mathcal{S}}_{\text{idxMode}}$.

In examples, a subset of the matrices involved in the matrix-based intra prediction may be associated with proxy matrices. For example, if matrix-based intra prediction replaces hybrid block-based intra prediction modes, inside the derivation/prediction operation of a template-based prediction tool, for a given index idxMode of intra prediction mode, a (e.g., each) matrix belonging to a subset of $\mathcal{S}_{\text{idxMode}}$ may be associated with a proxy matrix in $\bar{\mathcal{S}}_{\text{idxMode}}$.

In examples, a matrix involved in the matrix-based intra prediction may be associated with multiple proxy matrices. Examples described herein may be extended to the case of a matrix involved in matrix-based intra prediction being associated with multiple proxy matrices. For example, if matrix-based intra prediction replaces hybrid block-based intra prediction modes, inside the derivation/prediction operation of a template-based prediction tool, for a given index idxMode of intra prediction mode, a (e.g., each) matrix belonging to a subset of $\mathcal{S}_{\text{idxMode}}$ may be associated with a proxy matrix in $\bar{\mathcal{S}}_{\text{idxMode}}$ and a proxy matrix in $\bar{\bar{\mathcal{S}}}_{\text{idxMode}}$. For (e.g., another) example, if matrix-based intra prediction replaces hybrid block-based intra prediction modes, inside the derivation/prediction operation of a template-based prediction tool, for a given index idxMode of intra prediction mode, a (e.g., each) matrix belonging to a subset of $\mathcal{S}_{\text{idxMode}}$ may be associated with a proxy matrix in $\bar{\mathcal{S}}_{\text{idxMode}}$, a proxy matrix in $\bar{\bar{\mathcal{S}}}_{\text{idxMode}}$, and/or a proxy matrix in $\bar{\mathcal{S}}_{\text{idxMode}}$.

The type of proxy matrix may be accounted for. For example, if matrix-based intra prediction replaces hybrid block-based intra prediction modes, inside the derivation/prediction operation of a template-based prediction tool, for a given index idxMode of intra prediction mode, the proxy matrix in $\bar{\mathcal{S}}_{\text{idxMode}}$ associated with a given matrix in $\mathcal{S}_{\text{idxMode}}$ may be designed to decrease the computational complexity of the matrix-based intra prediction with respect to the given matrix $\mathcal{S}_{\text{idxMode}}$.

A proxy matrix may be a sparse proxy matrix. For example, for a given index idxMode of intra prediction mode, the matrix $W_{h,w}^{\text{idxMode}}$ in $\mathcal{S}_{\text{idxMode}}$ dedicated to the prediction of blocks of size $w \times h$ may be associated with the matrix $\overline{W}_{h,w}^{\text{idxMode}}$ in $\bar{\mathcal{S}}_{\text{idxMode}}$, $\overline{W}_{h,w}^{\text{idxMode}}$ being a sparse approximation of $W_{h,w}^{\text{idxMode}}$. This may indicate that at least a given proportion of the weights in $\overline{W}_{h,w}^{\text{idxMode}}$ may be equal to zero (0). For example, at least 90% of the weights in $\overline{W}_{h,w}^{\text{idxMode}}$ may be equal to zero (0). As another example, at least 95% of the weights in $\overline{W}_{h,w}^{\text{idxMode}}$ may be equal to zero (0). For example, the vector-matrix multiplication between the preprocessed context row vector $\tilde{X}$ of a given $w \times h$ block Y and $\overline{W}_{h,w}^{\text{idxMode}}$ may be determined, for example, as follows:

$$\dot{Y} = \tilde{X}\overline{W}_{h,w}^{\text{idxMode}}$$

which may be re-expressed as, for example, as follows:

$$\dot{y}_j = \sum_{i \in I(j)} \tilde{x}_i \overline{w}_{i,j}^{\text{idxMode}} \text{ if } I(j) \text{ non empty}; 0 \text{ otherwise}$$

where $\tilde{x}_i$ may denote the coefficient of index $i$ in $\tilde{X}$, $\overline{w}_{i,j}^{\text{idxMode}}$ may denote the weight at $(i, j)$ in $\overline{W}_{h,w}^{\text{idxMode}}$, $\dot{y}_j$ may denote the coefficient of index $j$ in $\dot{Y}$ $j \in [\![0, hw - 1]\!]$, and $I(j)$ may denote the set of indices of non-zero weights in the column of $\overline{W}_{h,w}^{\text{idxMode}}$ of index $j$.

In examples, a proxy matrix may have power-of-2 weights. For example, for a given index idxMode of intra prediction mode, the matrix $W_{h,w}^{\text{idxMode}}$ in $\mathcal{S}_{\text{idxMode}}$ dedicated to the prediction of blocks of size $w \times h$ may be associated with the matrix $\overline{W}_{h,w}^{\text{idxMode}}$ in $\bar{\mathcal{S}}_{\text{idxMode}}$, $\overline{W}_{h,w}^{\text{idxMode}}$ being an approximation of $W_{h,w}^{\text{idxMode}}$, where $\overline{W}_{h,w}^{\text{idxMode}}$ may store power-of-2 weights. For example, the vector-matrix multiplication between the preprocessed context row vector $\tilde{X}$ of a given $w \times h$ block $Y$ and $\overline{W}_{h,w}^{\text{idxMode}}$ may be determined, for example, as follows:

$$\dot{Y} = \widetilde{X}\overline{W}_{h,w}^{\text{idxMode}}$$

which may be re-expressed, for example, as follows:

$$\dot{y}_j = \sum_{i=0}^{k-1} \tilde{x}_i \overline{w}_{i,j}^{\text{idxMode}} = \left( \sum_{i=0}^{k-1} \left( \tilde{x}_i \ll \bar{v}_{i,j}^{\text{idxMode}} \right) \right) \gg \sigma$$

where $\tilde{x}_i$ may denote the coefficient of index $i$ in $\tilde{X}$, $i \in [\![0, k - 1]\!]$, $\overline{w}_{i,j}^{\text{idxMode}} = 2^{\bar{v}_{i,j}^{\text{idxMode}} - \sigma}$ may denote the weight at $(i, j)$ in $\overline{W}_{h,w}^{\text{idxMode}}$, $\bar{v}_{i,j}^{\text{idxMode}} \in \mathbb{N}, \sigma \in \mathbb{N}$, and $\dot{y}_j$ may denote the coefficient of index $j$ in $Y$, $j \in [\![0, hw - 1]\!]$.

In examples, a proxy matrix may be a low-rank proxy matrix. For example, for a given index idxMode of intra prediction mode, the matrix $W_{h,w}^{\text{idxMode}}$ in $\mathcal{S}_{\text{idxMode}}$ dedicated to the prediction of blocks of size $w \times h$ may be associated with the matrix $\overline{W}_{h,w}^{\text{idxMode}}$ in $\bar{\mathcal{S}}_{\text{idxMode}}$, where $\overline{W}_{h,w}^{\text{idxMode}}$ may be a low-rank approximation of $W_{h,w}^{\text{idxMode}}$. For example, $\overline{W}_{h,w}^{\text{idxMode}} = \overline{W}_{h,w}^{\text{idxMode}}{}_l \left( \overline{W}_{h,w}^{\text{idxMode}}{}_r \right)^{\text{T}}$, where $\overline{W}_{h,w}^{\text{idxMode}}{}_l \in \mathbb{Z}^{k \times t}$ and $\overline{W}_{h,w}^{\text{idxMode}}{}_r \in \mathbb{Z}^{hw \times t}$. For example, $t = 1$. For (e.g., another) example, $t = 4$. For (e.g., another) example, $t = \min(k, hw) \gg 2$.

The use of a proxy matrix may be reduce computation complexity and/or accelerate computation speeds. For example, when a sparse proxy matrix (or a proxy matrix with power-of-2 or low-rank weights) is used, the vector-matrix multiplication described herein may be faster (e.g., for weights that are power-of-2, the multiplication may involve only bit shifts, which may be fast on dedicated hardware).

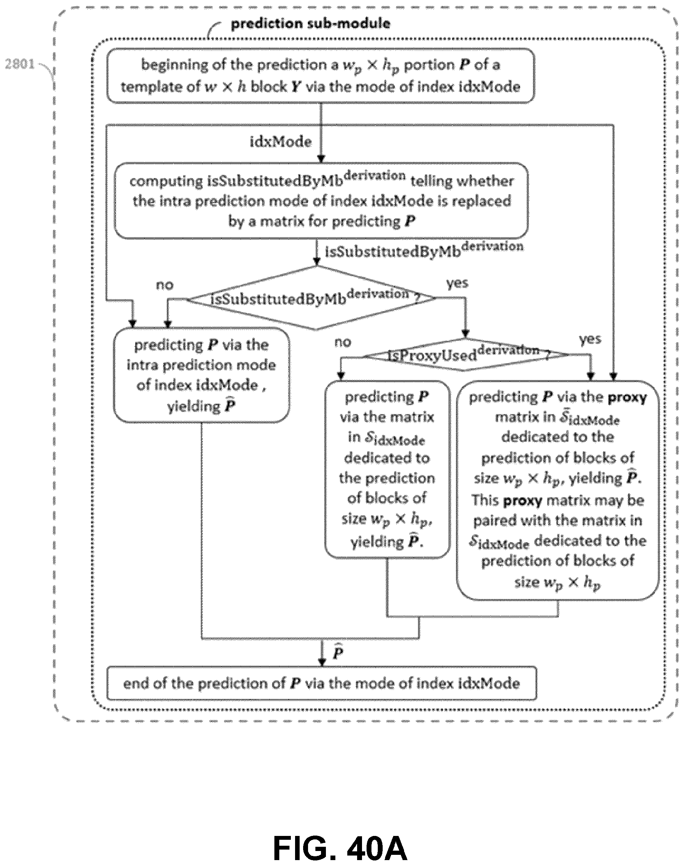

In examples, a decision may be made whether to use a matrix or a proxy matrix. For example, if matrix-based intra prediction replaces hybrid block-based intra prediction modes, inside the derivation/prediction operation of a template-based prediction tool, for a given index idxMode of intra prediction mode for which the replacement with matrix-based intra prediction occurs, the decision of using either a matrix in $\mathcal{S}_{\text{idxMode}}$ or its associated proxy matrix in $\bar{\mathcal{S}}_{\text{idxMode}}$ may depend on any parameter(s). For example, at the decoder side of a hybrid block-based video codec, the process for obtaining the reconstruction $\tilde{Y}$ of a given $w \times h$ block $Y$ in FIG. 17A may be changed by putting 2801 in FIG. 40A in place of 1501. During the prediction of a $w_p \times h_p$ portion $P$ of a template of $Y$ via the mode of index idxMode, if isSubstituted-

ByMb$^{\text{derivation}}$ is true, isProxyUsed$^{\text{derivation}}$ may indicate whether the proxy matrix in $\bar{\mathcal{S}}_{\text{idxMode}}$ dedicated to the prediction of blocks of size $w_p \times h_p$ may be used.

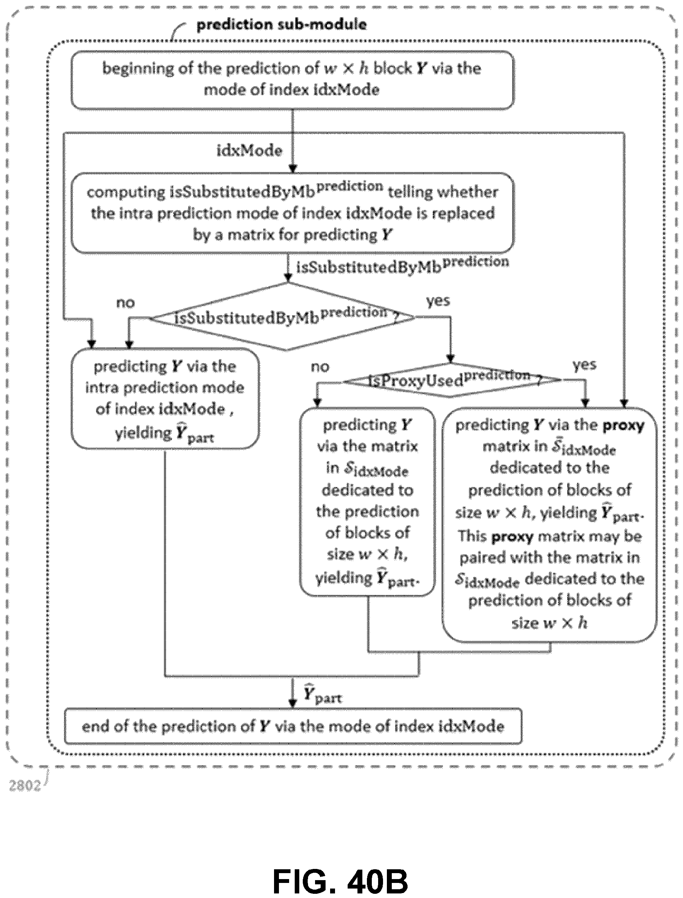

For example, the process for obtaining the reconstruction $\tilde{Y}$ of a given $w \times h$ block $Y$ in FIG. 17A may be adapted by putting 2802 in FIG. 40B in place of 1502. During the prediction of $Y$ via the mode of index idxMode, if isSubstitutedByMb$^{\text{prediction}}$ is true, isProxyUsed$^{\text{prediction}}$ may indicate whether the proxy matrix in $\bar{\mathcal{S}}_{\text{idxMode}}$ dedicated to the prediction of blocks of size $w \times h$ is used.

FIGS. 40A-40B illustrate an example of the prediction of a $w_p \times h_p$ portion $P$ of a template of a $w \times h$ block $Y$ via the mode of index idxMode during the derivation operation of a template-based tool and/or prediction of $Y$ via the mode of index idxMode during its prediction operation.

In examples, a decision to use a proxy matrix may depend on a measure of the complexity of the current prediction. For example, the decision of using a proxy matrix may depend on a measure of the complexity of the current prediction.

In examples, the complexity of the current prediction may depend on a number of MACs of the current prediction. For example, a measure of the complexity of the current prediction may be the number of MACs of the current prediction via the matrix-based intra prediction using the non-proxy matrix.

For example, the measure of complexity based on the number of MACs may be applied to the case shown in FIGS. 40A-40B at 2801. Then, during the prediction of a $w_p \times h_p$ portion $P$ of a template of a given $w \times h$ block $Y$ via the mode of index idxMode, if isSubstitutedByMb$^{\text{derivation}}$ is true, isProxyUsed$^{\text{derivation}}$ = macMb > macMbMax, where macMb may denote the number of MACs of the current prediction. In examples,

$$W_{h_p, w_p}^{\text{idxMode}} \in \mathcal{S}_{\text{idxMode}}$$

may be the non-proxy matrix. In examples, macMb may be $8(2 + h_p + w_p)h_p w_p$. For example, macMbMax = 512. For (e.g., another) example, macMbMax = $\varphi h_p w_p$, $\varphi \in \mathbb{N}^*$. For example, $\varphi$ = 128. For (e.g., another) example, $\varphi$ = 100.

For example, the measure of complexity based on the number of MACs may be applied to the case detailed in FIGS. 40A-40B at 2802. Then, during the prediction of a given $w \times h$ block $Y$ via the mode of index idxMode, if isSubstitutedByMb$^{\text{prediction}}$ is true, isProxyUsed$^{\text{prediction}}$ = macMb > macMbMax, where macMb may denote the number of MACs of the current prediction. In examples,

$$W_{h, w}^{\text{idxMode}} \in \mathcal{S}_{\text{idxMode}}$$

may be the non-proxy matrix. In examples, macMb may be $8(2 + h + w)hw$. For example, macMbMax = 800. For (e.g., another) example, macMbMax = $\varphi hw$, $\varphi \in \mathbb{N}^*$.

In examples, the complexity of the current prediction may depend on a number of MACs per pixel of the current prediction. For example, a measure of the complexity of the current prediction may be the number of MACs per pixel of the current prediction via the matrix-based intra prediction using the non-proxy matrix.

For example, a measure of complexity based on a number of MACs per pixel may be selected for FIGS. 40A-40B at 2801. Then, during the prediction of a $w_p \times h_p$ portion $P$ of a template of a given $w \times h$ block $Y$ via the mode of index idxMode, if isSubstitutedByMb$^{\text{derivation}}$ is true, isProxyUsed$^{\text{derivation}}$ = macMbPerPixel > macMbPerPixelMax, where macMbPerPixel denotes the number of MACs per pixel of the current prediction. In examples,

$$W_{h_p, w_p}^{\text{idxMode}} \in \mathcal{S}_{\text{idxMode}}$$

may be the non-proxy matrix. In examples, macMbPerPixel may be $8(2 + h_p + w_p)$. For example, macMbPerPixelMax = 128. For (e.g., another) example, macMbPerPixelMax may be a configuration parameter.

For example, the latter measure of complexity may be chosen for FIGS. 40A-40B at 2802. Then, during the prediction of a given $w \times h$ block $Y$ via the mode of index idxMode, if isSubstitutedByMb$^{\text{prediction}}$ is true, isProxyUsed$^{\text{prediction}}$ = macMbPerPixel $\geq$ macMbPerPixelMax, where macMbPerPixel denotes the number of MACs per pixel of the current prediction. In examples,

$$W_{h,w}^{\text{idxMode}} \in \mathcal{S}_{\text{idxMode}}$$

may be the non-proxy matrix. In examples, macMbPerPixel may be $8(2 + h + w)$. For example, macMbPerPixelMax = 384. For (e.g., another) example, macMbPerPixelMax may be a configuration parameter.

In examples, the complexity of the current prediction may depend on a number of accesses to memories of weights during the current prediction. For example, a measure of the complexity of the current prediction may be the number of accesses to memories of weights during the current prediction via the matrix-based intra prediction using the non-proxy matrix.

For example, a measure of complexity based on a number of accesses to memories of weights may be chosen in the case presented in FIGS. 40A-40B at 2801. Then, during the prediction of a $w_p \times h_p$ portion $P$ of a template of a given $w \times h$ block $Y$ via the mode of index idxMode, if isSubstitutedByMb$^{\text{derivation}}$ is true, isProxyUsed$^{\text{derivation}}$ = accessesMemMb > accessesMemMbMax, where accessesMemMb may denote the number of accesses to memories of weights during the current prediction. For example, accessesMemMbMax may be a configuration parameter.

For example, a measure of complexity based on a number of accesses to memories of weights may be selected in the case detailed in FIGS. 40A-40B at 2802. Then, during the prediction of a given $w \times h$ block $Y$ via the mode of index idxMode , if isSubstitutedByMb$^{\text{prediction}}$ is true, isProxyUsed$^{\text{prediction}}$ = accessesMemMb > accessesMemMbMax, where accessesMemMb denotes the number of accesses to memories of weights during the current prediction. For example, accessesMemMbMax may be a configuration parameter.

In examples, the complexity of the current prediction may depend on a number of accesses to memories of weights per pixel during the current prediction. For example, a measure of the complexity of the current prediction may be the number of accesses to memories of weights divided by the number of predicted pixels during the current prediction via the matrix-based intra prediction using the non-proxy matrix.

In examples, a measure of the complexity of the current prediction may involve the proxy matrix. For example, the examples may be applied (e.g., straightforwardly adapted) by turning "non-proxy matrix" into "proxy matrix."

For example, a measure of the complexity of the current prediction involving the proxy matrix may be the number of MACs of the current prediction via the matrix-based intra prediction using the proxy matrix.

For example, a measure of complexity involving the proxy matrix based on a number of MACs may be applied to the case shown in FIGS. 40A-40B at 2801. Then, during the prediction of a $w_p \times h_p$ portion $P$ of a template of a given $w \times h$ block $Y$ via the mode of index idxMode , if isSubstitutedByMb$^{\text{derivation}}$ is true, isProxyUsed$^{\text{derivation}}$ = macMbProxy < macMbProxyMax, where macMbProxy may denote the number of MACs of the current prediction using the proxy matrix. In examples,

$$\overline{W}_{h_p,w_p}^{\text{idxMode}} \in \bar{\mathcal{S}}_{\text{idxMode}}$$

may be the low-rank proxy matrix. In examples, macMbProxy may be $8(2 + h_p + w_p)t + th_p w_p$. For example, macMbProxyMax = 64. For (e.g., another) example, macMbProxyMax = $\varphi h_p w_p$, $\varphi \in \mathbb{N}^*$ . For example, $\varphi$ = 48. For (e.g., another) example, $\varphi$ = 32.

For example, a measure of complexity involving the proxy matrix based on a number of MACs may be picked for FIGS. 40A-40B at 2802. Then, during the prediction of a given $w \times h$ block $Y$ via the mode of index idxMode, if isSubstitutedByMb$^{\text{prediction}}$ is true, isProxyUsed$^{\text{prediction}}$ = macMbProxy ≤ macMbProxyMax, where macMbProxy may denote the number of MACs of the current prediction using the proxy matrix. In examples,

$$\overline{W}_{h,w}^{\text{idxMode}} \in \bar{\mathcal{S}}_{\text{idxMode}}$$

may be the low-rank proxy matrix. In examples, macMbProxy may be $8(2 + h + w)t + thw$. For example, macMbProxyMax = 96. For (e.g., another) example, macMbProxyMax = $\varphi hw$, $\varphi \in \mathbb{N}^*$ .

In examples, a measure of the complexity of the current prediction may involve the non-proxy matrix and its associated proxy matrix. For example, the examples may be applied (e.g., straightforwardly adapted) to the case where both the non-proxy matrix and its associated proxy matrix are involved.

For example, a measure of the complexity of the current prediction may involve both the number of MACs of the current prediction via the matrix-based intra prediction using the non-proxy matrix and the number of MACs of the current prediction via the matrix-based intra prediction using the associated proxy matrix.

For example, a measure of complexity involving the non-proxy matrix and its associated proxy matrix may be chosen for FIGS. 40A-40B at 2801. Then, during the prediction of a $w_p \times h_p$ portion **P** of a template of a given $w \times h$ block **Y** via the mode of index idxMode , if isSubstitutedByMb$^{derivation}$ is true, isProxyUsed$^{derivation}$ = macMb - macMbProxy > $\Delta$, where macMb may denote the number of MACs of the current prediction using the non-proxy matrix and macMbProxy may denote the number of MACs of the current prediction using the proxy matrix. In examples,

$$W^{\mathrm{idxMode}}_{h_p,w_p} \in \mathcal{S}_{\mathrm{idxMode}}$$

may be the non-proxy matrix,

$$\overline{W}^{\mathrm{idxMode}}_{h_p,w_p} \in \bar{\mathcal{S}}_{\mathrm{idxMode}}$$

may be the low-rank proxy matrix, macMb may be $8(2 + h_p + w_p)h_p w_p$, and macMbProxy may be $8(2 + h_p + w_p)t + t h_p w_p$. For example, $\Delta$ = 256 if the current slice is intra; $\Delta$ = 512 otherwise. For (e.g., another) example, $\Delta = \varphi h_p w_p$, $\varphi \in \mathbb{N}^*$ .

For example, a measure of complexity involving the non-proxy matrix and its associated proxy matrix may be selected for FIGS. 40A-40B at 2802. Then, during the prediction of a given $w \times h$ block **Y** via the mode of index idxMode , if isSubstitutedByMb$^{prediction}$ is true, isProxyUsed$^{prediction}$ = macMb - macMbProxy > $\Delta$, where macMb may denote the number of MACs of the current prediction using the non-proxy matrix and macMbProxy may denote the number of MACs of the current prediction using the proxy matrix. In examples,

$$W^{\mathrm{idxMode}}_{h,w} \in \mathcal{S}_{\mathrm{idxMode}}$$

may be the non-proxy matrix,

$$\overline{W}^{\mathrm{idxMode}}_{h,w} \in \bar{\mathcal{S}}_{\mathrm{idxMode}}$$

may be the low-rank proxy matrix, macMb may be $8(2 + h + w)hw$, and macMbProxy may be $8(2 + h + w)t + thw$. For example, $\Delta$ = 256 if QP < 27; $\Delta$ = 768 otherwise. For (e.g., another) example, $\Delta$ may be a configuration parameter.

For example, a measure of complexity involving the non-proxy matrix and its associated proxy matrix may be used for FIGS. 40A-40B at 2801. Then, during the prediction of a $w_p \times h_p$ portion **P** of a template of a given $w \times h$ block **Y** via the mode of index idxMode, if isSubstitutedByMb$^{derivation}$ is true, isProxyUsed$^{derivation}$ = (macMb/macMbProxy) $\geq \Delta$, where macMb may denote the number of MACs of the current prediction using the non-proxy matrix and macMbProxy may denote the number of MACs of the current prediction using the proxy matrix. In examples, $W^{\mathrm{idxMode}}_{h_p,w_p} \in \mathcal{S}_{\mathrm{idxMode}}$ may be the non-proxy matrix,

$$\overline{W}^{\mathrm{idxMode}}_{h_p,w_p} \in \bar{\mathcal{S}}_{\mathrm{idxMode}}$$

may be the low-rank proxy matrix, macMb may be $8(2 + h_p + w_p)h_p w_p$, and macMbProxy may be $8(2 + h_p + w_p)t + t h_p w_p$. For example, $\Delta$ = 2 if the current slice is intra; $\Delta$ = 8 otherwise. For (e.g., another) example, $\Delta$ may be a configuration parameter.

For example, a measure of complexity involving the non-proxy matrix and its associated proxy matrix may be selected for FIGS. 40A-40B at 2802. Then, during the prediction of a given $w \times h$ block **Y** via the mode of index idxMode , if isSubstitutedByMb$^{prediction}$ is true, isProxyUsed$^{prediction}$ = (macMb/macMbProxy) > $\Delta$, where macMb may denote the number of MACs of the current prediction using the non-proxy matrix and macMbProxy may denote the number of MACs of the current prediction using the proxy matrix. In examples,

$$W^{\mathrm{idxMode}}_{h,w} \in \mathcal{S}_{\mathrm{idxMode}}$$

may be the non-proxy matrix,

$$\overline{W}_{h,w}^{\mathrm{idxMode}} \in \bar{\mathcal{S}}_{\mathrm{idxMode}}$$

may be the low-rank proxy matrix, macMb may be 8(2 + *h* + *w)hw,* and macMbProxy may be 8(2 + *h* + *w)t + thw.* For example, Δ = 2 if QP < 27; Δ = 8 otherwise. For (e.g., another) example, Δ may be a configuration parameter.

In examples, a decision to use a proxy matrix may depend on a complexity budget. For example, a (e.g., any) cumulated complexity score of the matrix-based intra prediction (e.g., as described herein) may define isProxyUsed<sup>derivation</sup> and/or isProxyUsed<sup>prediction</sup>.

For example, in FIGS. 40A-40B at 2802, during the prediction of a given *w* × *h* block *Y* via the mode of index idxMode, if isSubstitutedByMb<sup>prediction</sup> is true, isProxyUsed<sup>prediction</sup> = macMbCtu < 2 × nbPixelsCtbLuma.

In examples, a decision to use a proxy matrix may depend on the temporal ID of the current frame. For example, the definition of isProxyUsed<sup>derivation</sup> and/or the definition of isProxyUsed<sup>prediction</sup> may depend on the Temporal ID of the current frame.

For example, in FIGS. 40A-40B at 2801, during the prediction of a *w<sub>p</sub>* × *h<sub>p</sub>* portion *P* of a template of a given *w* × *h* block *Y* via the mode of index idxMode, if isSubstitutedByMb<sup>derivation</sup> is true, isProxyUsed<sup>derivation</sup> = macMbCtu < 16 × nbPixelsCtbLuma, for example, if TID ≤ 1; and isProxyUsed<sup>derivation</sup> = macMbCtu < τ × nbPixelsCtbLuma, for example, if otherwise. τ may be a configuration parameter.

For (e.g., another) example, in FIGS. 40A-40B at 2801, during the prediction of a *w<sub>p</sub>* × *h<sub>p</sub>* portion *P* of a template of a given *w* × *h* block *Y* via the mode of index idxMode , if isSubstitutedByMb<sup>derivation</sup> is true, isProxyUsed<sup>derivation</sup> = macMbCtu < 16 × nbPixelsCtbLuma, for example, if TID < TIDLim; isProxyUsed<sup>derivation</sup> = macMbCtu < 2 × nbPixelsCtbLuma, for example, if otherwise. TIDLim may be a configuration parameter.

Examples may be applied to template-based prediction tools. Examples (e.g., any example) or combination of examples (e.g., any combination of examples), e.g., as described herein, may be (e.g., straightforwardly) applied to a template-based prediction tool in ECM, e.g., DIMD, TIMD, SGPM, TMRL, CliP, IBC, etc.

Examples may be applied to DIMD. For example, the replacement of hybrid block-based intra prediction modes with matrix-based intra prediction may be combined with DIMD, for example, by deactivating (e.g., systematically) the matrix-based intra prediction during the derivation operation of DIMD. In examples, using FIG. 40B at 2802, isSubstitutedByMb<sup>prediction</sup> may depend on a complexity budget. isProxyUsed<sup>prediction</sup> may depend on a measure of the complexity of the current prediction. For example, for a given *w* × *h* block *Y* predicted via DIMD, the complexity budget may be the cumulated number of MACs due to the application of the matrix-based intra prediction from the beginning of the reconstruction of the current CTU including *Y* to the beginning of the reconstruction of *Y,* denoted macMbDimdCtu. For example, the measure of the complexity of the prediction of *Y* may be the number of MACs per pixel for predicting *Y* via the non-proxy matrix $W_{h,w}^{\mathrm{idxMode}}$, which may be 8(2 + *h* + *w*). Then, isSubstitutedByMb$^{\mathrm{prediction}}$ = $W_{h,w}^{\mathrm{idxMode}}$ ∈ $\mathcal{S}_{\mathrm{idxMode}}$ && macMbDimdCtu < 32 × nbPixelsCtbLuma. isProxyUsed<sup>prediction</sup> = 8(2 + *h* + *w*) > 256.

Examples may be applied to TIMD. For example, the replacement of hybrid block-based intra prediction modes with matrix-based intra prediction may be combined with TIMD, e.g., using the truncation of matrix-based computations during the derivation operation of TIMD. In examples, it may be assumed that, for a given *w* × *h* block *Y* predicted via TIMD, during the derivation operation of TIMD, for a given mode of index idxMode replaced by matrix-based intra prediction for predicting the template of *Y*, each template portion may be predicted separately, e.g., as shown in FIG. 22. For example, it may be decided that the same matrix may predict the template portion *P<sub>a</sub>* above *Y* and the template portion *P<sub>l</sub>* on the left side of *Y* during the derivation operation and predict *Y* during the prediction operation. Using FIG. 40A at 2801, isProxyUsed<sup>derivation</sup> may depend on a first measure of the prediction complexity. Using FIG. 40B at 2802, isProxyUsed<sup>prediction</sup> may depend on a second measure of the prediction complexity. For example, this first measure of the prediction complexity may be the maximum of the number of MACs per pixel for predicting the template portion *P<sub>a</sub>* above *Y* via the non-proxy matrix and the number of MACs per pixel for predicting the template portion *P<sub>l</sub>* on the left side of *Y* via the non-proxy matrix. For example, the second measure of the prediction complexity may be the number of MACs per pixel for predicting *Y* via the non-proxy matrix. Then, using $\mathcal{S}_{\mathrm{idxMode}}$ = $\{W_{4,4}^{\mathrm{idxMode}}, W_{4,8}^{\mathrm{idxMode}}, W_{4,16}^{\mathrm{idxMode}}, W_{4,32}^{\mathrm{idxMode}}, W_{8,8}^{\mathrm{idxMode}}, W_{8,16}^{\mathrm{idxMode}}, W_{16,16}^{\mathrm{idxMode}}\}$ and

$$\bar{\mathcal{S}}_{\text{idxMode}} = \{\overline{W}_{4,4}^{\text{idxMode}}, \overline{W}_{4,8}^{\text{idxMode}}, \overline{W}_{4,16}^{\text{idxMode}}, \overline{W}_{4,32}^{\text{idxMode}}, \overline{W}_{8,8}^{\text{idxMode}}, \overline{W}_{8,16}^{\text{idxMode}}, \overline{W}_{16,16}^{\text{idxMode}}\},$$

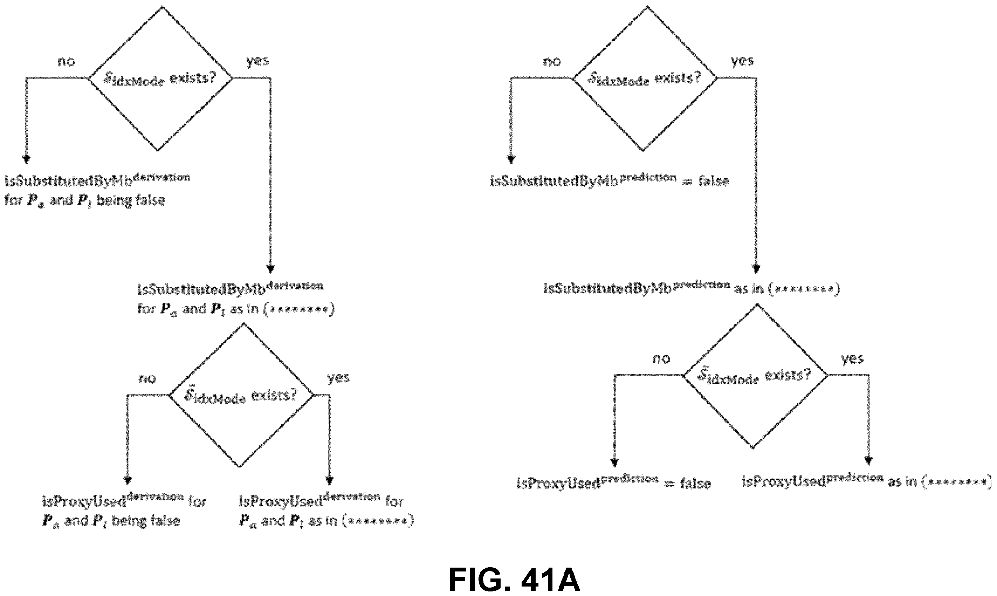

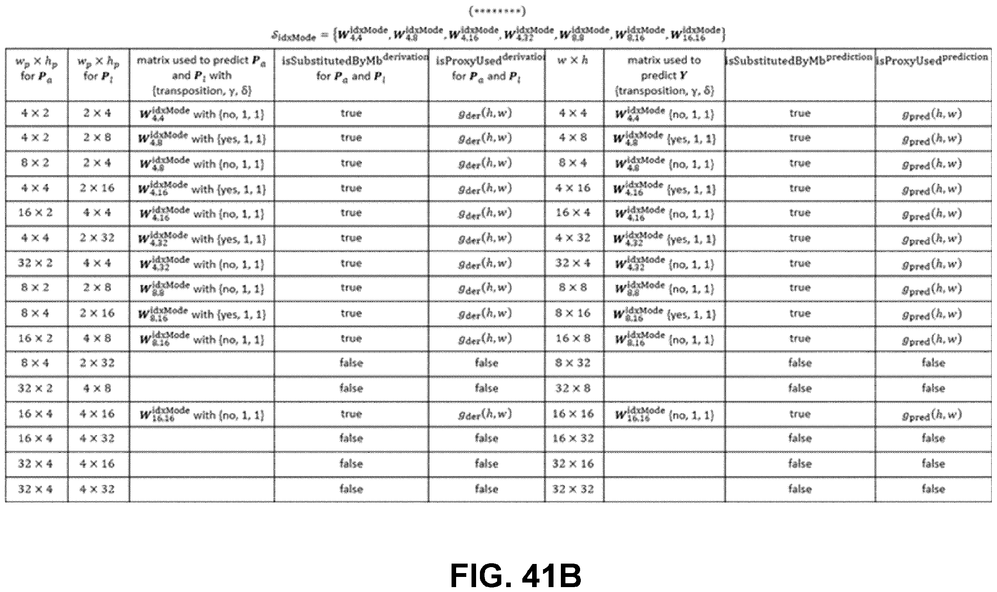

in FIGS. 40A-40B, isSubstitutedByMb$^{\text{derivation}}$, isSubstitutedByMb$^{\text{prediction}}$, isProxyUsed$^{\text{derivation}}$, and isProxyUsed$^{\text{prediction}}$ may be provided by the table-based definition in FIGS. 41A-41B. In FIGS. 41A-41B, a (e.g., each) table row may group $Y$ of a given size and its (e.g., two) associated template portion $P_a$ and $P_l$ in TIMD. For example, in a (e.g., each) table row, during the derivation operation, the parametrization of the truncation of computations during the prediction of $P_a$ may be (e.g., entirely) specified by applying FIG. 27 with $w_p \times h_p$ for $P_a$ and $w \times h$. Similarly, in a (e.g., each) table row, during the derivation operation, the parametrization of the truncation of computations during the prediction $P_l$ may be (e.g., entirely) defined by, for example, applying FIG. 27 with $w_p \times h_p$ for $P_l$ and $w \times h$.

FIGS. 41A-41B illustrate example definitions of isSubstitutedByMb$^{\text{derivation}}$, isSubstitutedByMb$^{\text{prediction}}$, isProxyUsed$^{\text{derivation}}$, and isProxyUsed$^{\text{prediction}}$.

As shown in FIGS. 41A-41B, during the derivation operation of TIMD, given that the prediction of $P_a$ may cost $8(2 + h + w)$ MACs per predicted pixel and the prediction of $P_l$ may cost $8(2 + h + w)$ MACs per predicted pixel, e.g., due to the truncation of computations, $g_{\text{der}}(h, w) = 8(2 + h + w) < \xi_0$, where $\xi_0$ may be a configuration parameter. During the prediction operation of TIMD, $g_{pred}(h, w) = 8(2 + h + w) < \xi_1$, where $\xi_1$ may be a configuration parameter.

For example, at the fourth table row, $h = 16$ and $w = 4$. During the derivation operation of TIMD, $g_{\text{der}}(h, w) = 176 < \xi_0$. During the prediction operation, $g_{pred}(h, w) = 176 < \xi_1$.

For (e.g., another) example, at the seventh table row, $h = 4$ and $w = 32$. During the derivation operation of TIMD, $g_{\text{der}}(h, w) = 304 <$ . During the prediction operation, $g_{\text{pred}}(h, w) = 304 < \xi_1$.

Examples may be applied to SGPM. The application to TIMD (e.g., as described herein) may be applied (e.g., straightforwardly generalized) to SGPM, for example, by adjusting the template dimensions.

Examples may be applied to TMRL. For example, the replacement of hybrid block-based intra prediction modes with matrix-based intra prediction may be combined with TMRL, e.g., using the truncation of matrix-based computations during the derivation and prediction operations of TMRL. In examples, it may be assumed that, for a given $w \times h$ block $Y$ predicted via TMRL, during the derivation operation of TMRL, for a given mode of index idxMode replaced by matrix-based intra prediction for predicting the template of $Y$, each template portion may be predicted separately. For example, it may be decided that the same matrix may predict the template portion $P_a$ above $Y$ and the template portion $P_l$ on the left side of $Y$ during the derivation operation and predict $Y$ during the prediction operation. Moreover, the replacement of intra prediction mode by matrix-based intra prediction (e.g., depending on the used extended reference line) during the TMRL derivation operation and the TRML prediction operation, e.g., as shown in FIGS. 37A-37B, may be re-used. In examples, using FIG. 40A at 2801, for example, isProxyUsed$^{\text{derivation}}$ may depend on the value of macMbCtu after the prediction of $P_a$ and $P_l$ via the non-proxy matrix. Using FIG. 40B at 2802, isProxyUsed$^{\text{prediction}}$ may (e.g., also) depend on the value of macMbCtu after the prediction of $Y$ via the non-proxy matrix. Then, using $\mathcal{S}_{\text{idxMode}} = \{W_{4,4}^{\text{idxMode}}, W_{4,8}^{\text{idxMode}}, W_{4,16}^{\text{idxMode}}, W_{4,32}^{\text{idxMode}}, W_{8,8}^{\text{idxMode}}, W_{8,16}^{\text{idxMode}}, W_{16,16}^{\text{idxMode}}\}$ and

$$\bar{\mathcal{S}}_{\text{idxMode}} = \{\overline{W}_{4,4}^{\text{idxMode}}, \overline{W}_{4,8}^{\text{idxMode}}, \overline{W}_{4,16}^{\text{idxMode}}, \overline{W}_{4,32}^{\text{idxMode}}, \overline{W}_{8,8}^{\text{idxMode}}, \overline{W}_{8,16}^{\text{idxMode}}, \overline{W}_{16,16}^{\text{idxMode}}\},$$

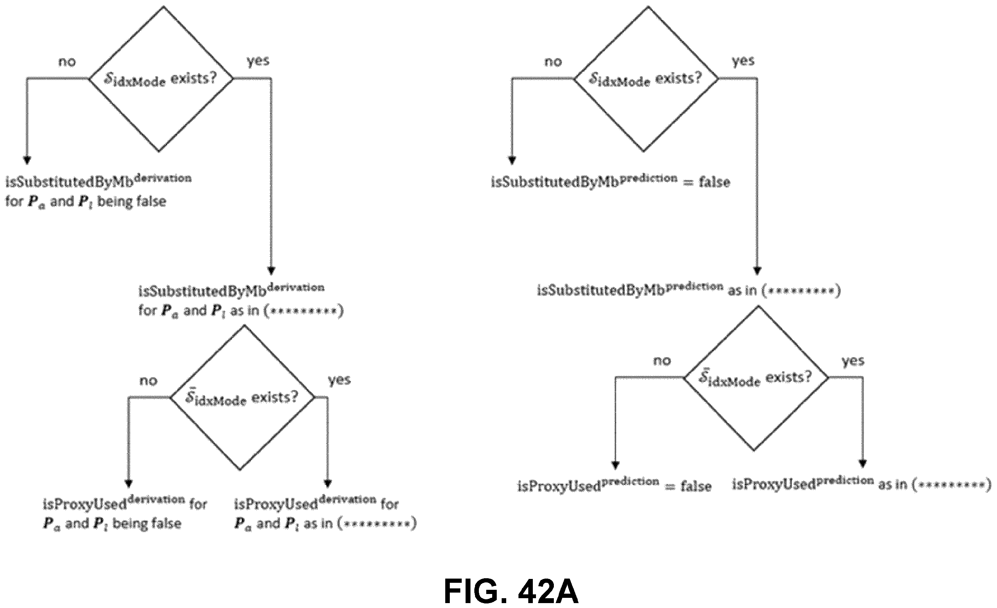

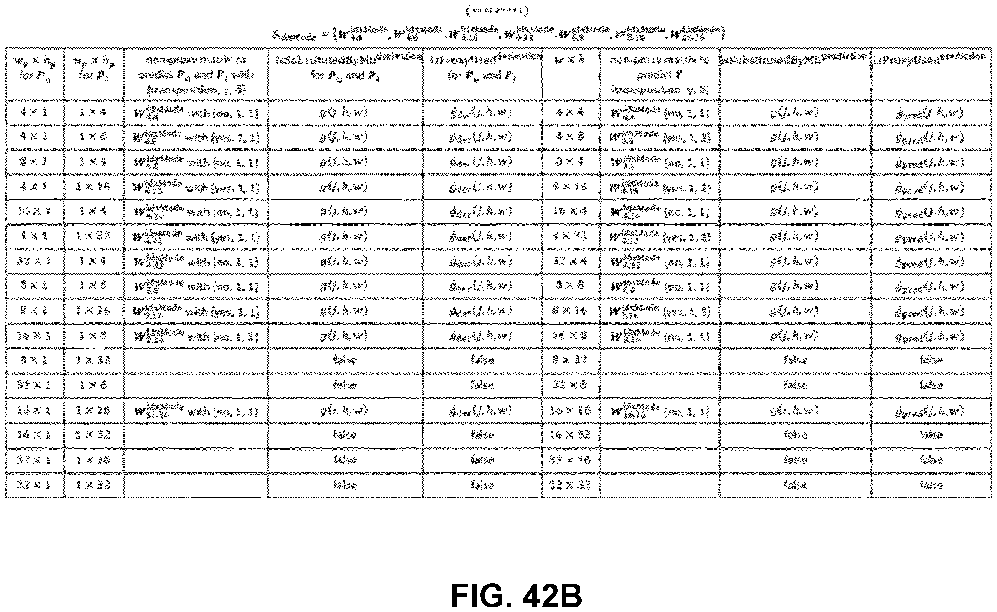

in FIGS. 40A-40B, isSubstitutedByMb$^{\text{derivation}}$, isSubstitutedByMb$^{\text{prediction}}$, isProxyUsed$^{\text{derivation}}$, and isProxyUsed$^{\text{prediction}}$ may be given by the table-based definition in FIGS. 42A-42B. As shown in FIGS. 42A-42B, a (e.g., each) table row may group $Y$ of a given size and its (e.g., two) associated template portion $P_a$ and $P_l$ in TMRL. For example, in a (e.g., each) table row, during the derivation operation, the parametrization of the truncation of computations during the prediction of $P_a$ may be (e.g., fully) specified, for example, by applying FIG. 26 using $w_p \times h_p$ for $P_a$ and $w \times h$. Similarly, in a (e.g., each) table row, during the derivation operation, the parametrization of the truncation of computations during the prediction of $P_l$ may be (e.g., fully) defined by, for example, by applying FIG. 26 using $w_p \times h_p$ for $P_l$ and $w \times h$.

FIG. 42A-42B illustrate example definitions of isSubstitutedByMb$^{\text{derivation}}$, isSubstitutedByMb$^{\text{prediction}}$, isProxyUsed$^{\text{derivation}}$, and isProxyUsed$^{\text{prediction}}$.

As shown in FIGS. 42A-42B, during the derivation operation of TMRL, given that the prediction of $P_a$ may cost $8(2 + h + w)w$ MACs and the prediction of $P_l$ may cost $8(2 + h + w)h$ MACs, e.g., due to the truncation of computations, as may be given by $\dot{g}_{\text{der}}(j, h, w) = g(j, h, w)$ && $(\text{macMbCtu} + 8(2 + h + w)(h + w) < \xi_0)$, where $\xi_0$ may be a configuration parameter. During the prediction operation of TMRL, the prediction of $Y$ may have an upper-bound cost of $16(2 + h + w)hw$ MACs, where the upper-bound may occur during the blending involving (e.g., two) full predictions of $Y$ via the non-proxy matrix, as may be given by $\dot{g}_{\text{pred}}(j, h, w) = g(j, h, w)$ && $(\text{macMbCtu} + 16(2 + h + w)hw < \xi_1)$, where $\xi_1$ may be a configuration parameter.

Examples may be applied to CIIP and IBC. For a given block predicted via CIIP, e.g., given that CIIP may apply TIMD to the block to obtain a prediction (intra) of the block, the application to TIMD (e.g., as described herein) may be applied (e.g., straightforwardly generalized) to CIIP. For a given block predicted via IBC-CIIP, e.g., given that IBC-CIIP may apply TIMD to the block to obtain a prediction (intra) of the block, the application to TIMD (e.g., as described herein) may be applied (e.g., straightforwardly generalized) to IBC-CIIP.

The examples (e.g., any examples) described herein, alone and in any combination, may be applied to the case where a proxy matrix associated to a given (e.g., default) matrix may be used for inferring coding parameters from reference samples around a current block. These coding parameters may be used for further coding the residue of prediction, such as, e.g. transform coding and entropy coding of the quantization transform coefficients. For instance, for a given $w \times h$ block $Y$, for a given intra prediction mode of index idxMode replaced by matrix-based intra prediction, the multiplication between the matrix

$$W_{h,w}^{\mathrm{idxMode}} \in \mathcal{S}_{\mathrm{idxMode}}$$

and a version (e.g., a preprocessed version) $\tilde{X}$ of a context $X$ of reference samples around $Y$ may yield a prediction of $Y$. The multiplication between the proxy matrix $\overline{W}_{h_p,w_p}^{\mathrm{idxMode}} \in \bar{\mathcal{S}}_{\mathrm{idxMode}}$ associated to $W_{h,w}^{\mathrm{idxMode}}$ and a version (e.g., a preprocessed version) $\tilde{X}'$ of a context $X'$ of reference samples around $Y$ may yield LFNST set index(ices). This(ese) LFNST set index(ices) may be used to define LFNST for further coding the residue arising from the difference between $Y$ and its prediction. For instance, for a given $w \times h$ block $Y$, for a given intra prediction mode of index idxMode replaced by matrix-based intra prediction, the multiplication between the matrix

$$W_{h,w}^{\mathrm{idxMode}} \in \mathcal{S}_{\mathrm{idxMode}}$$

and a version (e.g., a preprocessed version) $\tilde{X}$ of a context $X$ of reference samples around $Y$ may yield a prediction of $Y$. The multiplication between the proxy matrix

$$\overline{W}_{h_p,w_p}^{\mathrm{idxMode}} \in \bar{\mathcal{S}}_{\mathrm{idxMode}}$$

associated to $W_{h,w}^{\mathrm{idxMode}}$ and a version (e.g., a preprocessed version) $\tilde{X}''$ of a context $X''$ of reference samples around $Y$ may yield Multiple Transform Set (MTS) index(ices). This(ese) MTS index(ices) may be used to define MTS for further coding the residue arising from the difference between $Y$ and its prediction.

Examples may be applied beyond the replacement of conventional intra prediction modes by matrix-based intra prediction (e.g., as an example of NN-based intra prediction). Although examples regarding the replacement of an intra prediction mode by matrix-based intra prediction (e.g., as an example of NN-based intra prediction) have referred to the replacement of a "hybrid block-based" or "conventional" intra prediction mode (e.g., PLANAR, DC, directional intra prediction modes) by matrix-based intra prediction, the examples may be applied (e.g., generalized) to the replacement of any prediction mode (e.g., including advanced coding mode such as template-based coding mode) by matrix-based (e.g., NN-based) prediction.

The examples described herein may be applied to a video encoder and/or a video decoder. The video encoder and/or the video decoder may obtain a current video block, which may be associated with a block-based prediction tool (e.g., a block-based intra prediction tool). The video encoder and/or the video decoder may determine whether a condition for applying a neural network-based prediction to the current video block is met. The video encoder and/or the video decoder may perform a prediction for the current video block based at least on whether the condition for applying the neural network-based prediction to the current video block is met. For example, if the condition is met, the prediction may be performed using at least a first neural network, and, if the condition is not met, the prediction may be performed using the block-based prediction tool. The video encoder and/or the video decoder may encode/decode the current video block based at least on the prediction.

In examples, if the condition for applying the neural network-based prediction to the current video block is met, the prediction may be performed using a matrix that includes a set of weights of the first neural network.

In examples, the video encoder and/or the video decoder may determine a virtual block for predicting a portion of the current video block. For example, the portion of the current video block may have a first size and the virtual block may have a second size that is bigger than the first size. The video encoder and/or the video decoder may determine a prediction block for the virtual block using the matrix described herein, which may be dedicated to blocks of the second size. The video encoder and/or the video decoder may truncate the prediction block determined for the virtual block to the first size to obtain a prediction block for the portion of the current video block that has the first size.

In examples, the block-based prediction tool may include a template-based multiple reference line (TMRL) prediction tool.

In examples, the current video block may be associated with a default matrix comprising a first set of weights and a proxy matrix comprising a second set of weights. The first set of weights included in the default matrix may differ at least partially from the second set of weights included in the proxy matrix (e.g., the second set of weights may include zero-valued weights or weights having power-of-2 values), and the matrix may be used to perform the prediction for the current video block may be the proxy matrix.

In examples, the video encoder and/or the video decoder may determine whether the condition for applying the neural network-based prediction to the current video block is met by determining a complexity associated with the application of the neural network-based prediction and determine whether the condition is met based on whether the complexity exceeds a threshold value.

In examples, the video encoder and/or the video decoder may determine the complexity associated with the application of the neural network-based prediction based on a number of instructions to be executed, a number of multiplications to be performed, or a number of memory accesses to be carried out in association with the application of the neural network-based prediction.

In examples, the video encoder and/or the video decoder may perform the prediction for the current video block by deriving prediction information associated with the current video block based at least on whether a condition for deriving the prediction information using a second neural network is met. For example, if the condition for deriving the prediction information using the second neural network is met, the video encoder and/or the video decoder may derive the prediction information using the second neural network.

In examples, the block-based prediction tool may include a decoder side intra mode derivation (DIMD) tool, a template-based intra mode derivation (TIMD) tool, a spatial geometric partitioning mode (SGPM) tool, a template-based multiple reference line (TMRL) tool, a combined intra inter prediction (CIIP) tool, or an intra block copy (IBC) tool.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A video decoder, comprising:
   a processor configured to:

   obtain a current video block, wherein the current video block is associated with a block-based prediction tool;
   determine whether a condition for applying a neural network-based prediction to the current video block is met;
   perform a prediction for the current video block based at least on whether the condition for applying the neural network-based prediction to the current video block is met, wherein, if the condition is met, the prediction is performed using at least a first neural network, and, if the condition is not met, the prediction is performed using the block-based prediction tool; and
   decode the current video block based at least on the prediction.

2. The video decoder of claim 1, wherein, if the condition for applying the neural network-based prediction to the current video block is met, the prediction is performed using a matrix that comprises a set of weights of the first neural network.

3. The video decoder of claim 2, wherein the processor being configured to perform the prediction using the matrix comprises the processor being configured to:

   determine a virtual block for predicting a portion of the current video block, wherein the portion of the current video block has a first size, and wherein the virtual block has a second size that is bigger than the first size; determine a prediction block for the virtual block using the matrix, wherein the prediction block has the second size and wherein the matrix is dedicated to predicting blocks of the second size; and truncate the prediction block determined for the virtual block to the first size to obtain a prediction block for the portion of the current video block.

4. The video decoder of claim 3, wherein the block-based prediction tool includes a template-based multiple reference line (TMRL) prediction tool.

5. The video decoder of claim 2, wherein the current video block is associated with a default matrix and a proxy matrix, the default matrix comprises a first set of weights, the proxy matrix comprises a second set of weights that is at least partially different than the first set of weights, and the matrix used to perform the prediction for the current video block is the proxy matrix.

6. The video decoder of claim 5, at least a portion of the weights comprised in the proxy matrix are zero-valued weights or weights having power-of-2 values.

7. The video decoder of any of claims 1-6, wherein the processor being configured to determine whether the condition for applying the neural network-based prediction to the current video block is met comprises the processor being configured to determine a complexity associated with the application of the neural network-based prediction and determine whether the condition is met based on whether the complexity exceeds a threshold value.

8. The video decoder of claim 7, wherein the processor is configured to determine the complexity associated with the application of the neural network-based prediction based on a number of instructions to be executed, a number of multiplications to be performed, or a number of memory accesses to be carried out in association with the application of the neural network-based prediction.

9. The video decoder of any of claims 1-8, wherein the processor being configured to perform the prediction for the current video block comprises the processor being configured to derive prediction information associated with the current video block based at least on whether a condition for deriving the prediction information using a second neural network is met, wherein, if the condition for deriving the prediction information using the second neural network is met, the processor is configured to derive the prediction information using the second neural network.

10. The video decoder of any of claims 1-9, wherein the block-based prediction tool includes a decoder side intra mode derivation (DIMD) tool, a template-based intra mode derivation (TIMD) tool, a spatial geometric partitioning mode (SGPM) tool, a template-based multiple reference line (TMRL) tool, a combined intra inter prediction (CIIP) tool, or an intra block copy (IBC) tool.

11. A video decoding method, comprising:

obtaining a current video block, wherein the current video block is associated with a block-based prediction tool; determining whether a condition for applying a neural network-based prediction to the current video block is met; performing a prediction for the current video block based at least on whether the condition for applying the neural network-based prediction to the current video block is met, wherein, if the condition is met, the prediction is performed using at least a first neural network, and, if the condition is not met, the prediction is performed using the block-based prediction tool; and decoding the current video block based at least on the prediction.

12. The video decoding method of claim 11, wherein, if the condition for applying the neural network-based prediction to the current video block is met, the prediction is performed using a matrix that comprises a set of weights of the first neural network.

13. The video decoding method of claim 12, wherein performing the prediction using the matrix comprises:

determining a virtual block for predicting a portion of the current video block, wherein the portion of the current video block has a first size, and wherein the virtual block has a second size that is bigger than the first size; determining a prediction block for the virtual block using the matrix, wherein the prediction block has the second size and wherein the matrix is dedicated to predicting blocks of the second size; and

truncating the prediction block determined for the virtual block to the first size to obtain a prediction block for the portion of the current video block.

14. The video decoding method of claim 12, wherein the current video block is associated with a default matrix comprising a first set of weights and a proxy matrix comprising a second set of weights, the first set of weights differs at least partially from the second set of weights, at least a portion of the second set of weights zero-valued weights or weights having power-of-2 values, and the matrix used to perform the prediction for the current video block is the proxy matrix.

15. The video decoding method of any of claims 11-14, wherein determining whether the condition for applying the neural network-based prediction to the current video block is met comprises determining a complexity associated with the application of the neural network-based prediction and determining whether the condition is met based on whether the complexity exceeds a threshold value.

**FIG. 1A**

EP 4 633 144 A1

116

122

102

120
Transceiver

124
Speaker/
Microphone

134
Power
Source

126
Keypad

118
Processor

136
GPS
Chipset

128
Display/
Touchpad

138
Peripherals

130
Non-
Removable
Memory

132
Removable
Memory

# FIG. 1B

**FIG. 1C**

EP 4 633 144 A1

**FIG. 1D**

**FIG. 2**

EP 4 633 144 A1

**300**

**FIG. 3**

FIG. 4

**FIG. 5**

EP 4 633 144 A1

In the framework of ECM using the VVC directional intra prediction modes

- (1) : target intra prediction mode index belonging to $[\![2, 17]\!]$
- (2) : target intra prediction mode index belonging to $[\![19, 33]\!]$
- (3) : target intra prediction mode index belonging to $[\![34, 49]\!]$
- (4) : target intra prediction mode index belonging to $[\![51, 66]\!]$
- if $G_{VER} == 0$, target intra prediction mode is vertical, i.e. its index is 50
- if $G_{HOR} == 0$, target intra prediction mode is horizontal, i.e. its index is 18.

**FIG. 6**

EP 4 633 144 A1

EP 4 633 144 A1

direction of positive
horizontal gradient

direction of positive
vertical gradient

$G_{VER}$

$G$

(1)

$G_{HOR}$

90°

$\theta$

$\theta$

reference
horizontal axis

direction of the target
intra prediction mode

(2)

(4)

(3)

$$\tan(\theta) = \frac{|G_{HOR}|}{|G_{VER}|}$$

**FIG. 7**

direction of positive
horizontal gradient

direction of positive
vertical gradient

$G_{VER}$

$G_{HOR}$

$G$ (1)

90°

$\theta$

$\theta$

(2)

(4) (3)

direction of the target
intra prediction mode

reference vertical axis

$$\tan(\theta) = \frac{|G_{VER}|}{|G_{HOR}|}$$

**FIG. 8**

FIG. 9

FIG. 10

**FIG. 11**

**FIG. 12A**

**FIG. 12B**

**FIG. 12C**

FIG. 13

FIG. 14

FIG. 15

$$w \times h \in T$$
$$\&\& \; x \geq n_l$$
$$\&\& \; y \geq n_a?$$

FIG. 16

EP 4 633 144 A1

**FIG. 17A**

**prediction sub-module** 1501

beginning of the prediction a $w_p \times h_p$ portion $P$ of a template of $w \times h$ block $Y$ via the mode of index idxMode — 1520

idxMode

computing isSubstitutedByMb$^{\text{derivation}}$ telling whether the intra prediction mode of index idxMode is replaced by a matrix for predicting $P$ — 1521

isSubstitutedByMb$^{\text{derivation}}$

isSubstitutedByMb$^{\text{derivation}}$ ? — 1522

no

yes

predicting $P$ via the intra prediction mode of index idxMode, yielding $\widehat{P}$ — 1523

predicting $P$ via the matrix in $\delta_{\text{idxMode}}$ dedicated to the prediction of blocks of size $w_p \times h_p$, yielding $\widehat{P}$ — 1524

$\widehat{P}$

end of the prediction of $P$ via the mode of index idxMode — 1525

**FIG. 17B**

FIG. 17C

FIG. 18

**FIG. 19**

EP 4 633 144 A1

no        $\mathcal{S}_{\text{idxMode}}$ exists?        yes

$$\text{isSubstitutedByMb}^{\text{derivation}} = \text{false}$$

$$\text{isSubstitutedByMb}^{\text{derivation}} \text{ as in } (*)$$

**FIG. 20A**

$$(*)$$

$$\delta_{\text{idxMode}} = \{W_{4,4}^{\text{idxMode}}, W_{4,8}^{\text{idxMode}}, W_{4,16}^{\text{idxMode}}, W_{4,32}^{\text{idxMode}}, W_{8,8}^{\text{idxMode}}, W_{8,16}^{\text{idxMode}}, W_{16,16}^{\text{idxMode}}\}$$

| $w_p \times h_p$ | matrix used to predict $P$ with {transposition, $\gamma$, $\delta$} | isSubstitutedByMb$^{\text{derivation}}$ |
|---|---|---|
| $4 \times 4$ | $W_{4,4}^{\text{idxMode}}$ with {no, 1, 1} | true |
| $4 \times 8$ | $W_{4,8}^{\text{idxMode}}$ with {yes, 1, 1} | true |
| $8 \times 4$ | $W_{4,8}^{\text{idxMode}}$ with {no, 1, 1} | true |
| $4 \times 16$ | $W_{4,16}^{\text{idxMode}}$ with {yes, 1, 1} | true |
| $16 \times 4$ | $W_{4,16}^{\text{idxMode}}$ with {no, 1, 1} | true |
| $4 \times 32$ | $W_{4,32}^{\text{idxMode}}$ with {yes, 1, 1} | true |
| $32 \times 4$ | $W_{4,32}^{\text{idxMode}}$ with {no, 1, 1} | true |
| $4 \times 64$ | | false |
| $64 \times 4$ | | false |
| $8 \times 8$ | $W_{8,8}^{\text{idxMode}}$ with {no, 1, 1} | true |
| $8 \times 16$ | $W_{8,16}^{\text{idxMode}}$ with {yes, 1, 1} | true |
| $16 \times 8$ | $W_{8,16}^{\text{idxMode}}$ with {no, 1, 1} | true |
| $8 \times 32$ | $W_{8,16}^{\text{idxMode}}$ with {yes, 1, 2} | true |
| $32 \times 8$ | $W_{8,16}^{\text{idxMode}}$ with {no, 2, 1} | true |
| $8 \times 64$ | | false |
| $64 \times 8$ | | false |
| $16 \times 16$ | $W_{16,16}^{\text{idxMode}}$ with {no, 1, 1} | true |

# FIG. 20B

$S_{idxMode}$ exists?

no

yes

isSubstitutedByMb$^{derivation}$ = false

isSubstitutedByMb$^{derivation}$ as in $(**)$

# FIG. 21A

$$(**)$$

$$\delta_{\text{idxMode}} = \{W_{4,4}^{\text{idxMode}}, W_{4,8}^{\text{idxMode}}, W_{4,16}^{\text{idxMode}}, W_{8,8}^{\text{idxMode}}, W_{8,16}^{\text{idxMode}}, W_{16,16}^{\text{idxMode}}\}$$

| $w_p \times h_p$ | matrix used to predict $P$ with {transposition, γ, δ} | isSubstitutedByMb$^{\text{derivation}}$ |
|---|---|---|
| $4 \times 4$ | $W_{4,4}^{\text{idxMode}}$ with {no, 1, 1} | true |
| $4 \times 8$ | $W_{4,8}^{\text{idxMode}}$ with {yes, 1, 1} | true |
| $8 \times 4$ | $W_{4,8}^{\text{idxMode}}$ with {no, 1, 1} | true |
| $4 \times 16$ | $W_{4,16}^{\text{idxMode}}$ with {yes, 1, 1} | true |
| $16 \times 4$ | $W_{4,16}^{\text{idxMode}}$ with {no, 1, 1} | true |
| $4 \times 32$ | | false |
| $32 \times 4$ | | false |
| $4 \times 64$ | | false |
| $64 \times 4$ | | false |
| $8 \times 8$ | $W_{8,8}^{\text{idxMode}}$ with {no, 1, 1} | true |
| $8 \times 16$ | $W_{8,16}^{\text{idxMode}}$ with {yes, 1, 1} | true |
| $16 \times 8$ | $W_{8,16}^{\text{idxMode}}$ with {no, 1, 1} | true |
| $8 \times 32$ | $W_{8,16}^{\text{idxMode}}$ with {yes, 1, 2} | true |
| $32 \times 8$ | $W_{8,16}^{\text{idxMode}}$ with {no, 2, 1} | true |
| $8 \times 64$ | | false |
| $64 \times 8$ | | false |
| $16 \times 16$ | $W_{16,16}^{\text{idxMode}}$ with {no, 1, 1} | true |
| $16 \times 32$ | $W_{16,16}^{\text{idxMode}}$ with {no, 1, 2} | true |
| $32 \times 16$ | $W_{16,16}^{\text{idxMode}}$ with {no, 2, 1} | true |
| $32 \times 32$ | $W_{16,16}^{\text{idxMode}}$ with {no, 2, 2} | true |
| $64 \times 64$ | | false |

## FIG. 21B

**FIG. 22**

$$(***)$$

$$\mathcal{S}_{\text{idxMode}} = \{W_{2,4}^{\text{idxMode}}, W_{2,8}^{\text{idxMode}}, W_{2,16}^{\text{idxMode}}, W_{2,32}^{\text{idxMode}}, W_{4,4}^{\text{idxMode}}, W_{4,8}^{\text{idxMode}}, W_{4,16}^{\text{idxMode}}, W_{4,32}^{\text{idxMode}}, W_{8,8}^{\text{idxMode}}, W_{8,16}^{\text{idxMode}}, W_{16,16}^{\text{idxMode}}\}$$

| $w_p \times h_p$ | matrix used to predict $P$ with {transposition, $\gamma$, $\delta$} | isSubstitutedByMb$^{\text{derivation}}$ |
|---|---|---|
| $2 \times 4$ | $W_{2,4}^{\text{idxMode}}$ with {yes, 1, 1} | true |
| $4 \times 2$ | $W_{2,4}^{\text{idxMode}}$ with {no, 1, 1} | true |
| $2 \times 8$ | $W_{2,8}^{\text{idxMode}}$ with {yes, 1, 1} | true |
| $8 \times 2$ | $W_{2,8}^{\text{idxMode}}$ with {no, 1, 1} | true |
| $2 \times 16$ | $W_{2,16}^{\text{idxMode}}$ with {yes, 1, 1} | true |
| $16 \times 2$ | $W_{2,16}^{\text{idxMode}}$ with {no, 1, 1} | true |
| $2 \times 32$ | $W_{2,32}^{\text{idxMode}}$ with {yes, 1, 1} | true |
| $32 \times 2$ | $W_{2,32}^{\text{idxMode}}$ with {no, 1, 1} | true |
| $4 \times 4$ | $W_{4,4}^{\text{idxMode}}$ with {no, 1, 1} | true |
| $4 \times 8$ | $W_{4,8}^{\text{idxMode}}$ with {yes, 1, 1} | true |
| $8 \times 4$ | $W_{4,8}^{\text{idxMode}}$ with {no, 1, 1} | true |
| $4 \times 16$ | $W_{4,16}^{\text{idxMode}}$ with {yes, 1, 1} | true |
| $16 \times 4$ | $W_{4,16}^{\text{idxMode}}$ with {no, 1, 1} | true |
| $4 \times 32$ | $W_{4,32}^{\text{idxMode}}$ with {yes, 1, 1} | true |
| $32 \times 4$ | $W_{4,32}^{\text{idxMode}}$ with {no, 1, 1} | true |

$\mathcal{S}_{\text{idxMode}}$ exists?

no → isSubstitutedByMb$^{\text{derivation}}$ = false

yes → isSubstitutedByMb$^{\text{derivation}}$ as in (***) && macMbTimdCtu < nbPixelsCtbLuma/$\eta$, $\eta$ being a configuration parameter

**FIG. 23**

$$(****)$$

$$\delta_{idxMode} = \{W_{2,4}^{idxMode}, W_{2,8}^{idxMode}, W_{2,16}^{idxMode}, W_{2,32}^{idxMode}, W_{4,4}^{idxMode}, W_{4,8}^{idxMode}, W_{4,16}^{idxMode}, W_{4,32}^{idxMode}, W_{8,8}^{idxMode}, W_{8,16}^{idxMode}, W_{16,16}^{idxMode}\}$$

$\delta_{idxMode}$ exists?

no → isSubstitutedByMb$^{prediction}$ = false

yes → isSubstitutedByMb$^{prediction}$ as in $(****)$ && macMbTimdCtu < nbPixelsCtbLuma/$\eta$

| $w \times h$ | matrix used to predict $Y$ with {transposition, γ, δ} | isSubstitutedByMb$^{prediction}$ |
|---|---|---|
| $4 \times 4$ | $W_{4,4}^{idxMode}$ with {no, 1, 1} | true |
| $4 \times 8$ | $W_{4,8}^{idxMode}$ with {yes, 1, 1} | true |
| $8 \times 4$ | $W_{4,8}^{idxMode}$ with {no, 1, 1} | true |
| $4 \times 16$ | $W_{4,16}^{idxMode}$ with {yes, 1, 1} | true |
| $16 \times 4$ | $W_{4,16}^{idxMode}$ with {no, 1, 1} | true |
| $4 \times 32$ | $W_{4,32}^{idxMode}$ with {yes, 1, 1} | true |
| $32 \times 4$ | $W_{4,32}^{idxMode}$ with {no, 1, 1} | true |
| $8 \times 8$ | $W_{8,8}^{idxMode}$ with {no, 1, 1} | true |
| $8 \times 16$ | $W_{8,16}^{idxMode}$ with {yes, 1, 1} | true |
| $16 \times 8$ | $W_{8,16}^{idxMode}$ with {no, 1, 1} | true |
| $8 \times 32$ | | false |
| $32 \times 8$ | | false |
| $16 \times 16$ | $W_{16,16}^{idxMode}$ with {no, 1, 1} | true |

**FIG. 24**

EP 4 633 144 A1

**prediction sub-module**

beginning of the prediction a $w_p \times h_p$ portion $P$ of a template of $w \times h$ block $Y$ via the mode of index idxMode

— 1920

idxMode

computing isSubstitutedByMb$^{derivation}$ telling whether the intra prediction mode of index idxMode is replaced by a matrix for predicting $P$

— 1921

isSubstitutedByMb$^{derivation}$

— 1922

isSubstitutedByMb$^{derivation}$ ?

no       yes

— 1924

predicting $P$ via the intra prediction mode of index idxMode , yielding $\widehat{P}$

— 1923

defining the "virtual" $w \times h$ block $\overline{P}$ containing $P$ and at least one of its dimension enlarged with respect to $P$. $w \geq w_p$ and $h \geq h_p$

$(x, y), h, w$

1925

predicting $\overline{P}$ via the matrix in $S_{idxMode}$ dedicated to the prediction of blocks of size $w \times h$, and truncating operations during the matrix-based computations, providing a $w_p \times h_p$ prediction $\widehat{P}$ of $P$

$\widehat{P}$

— 1926

end of the prediction of $P$ via the mode of index idxMode

# FIG. 25

**FIG. 26**

EP 4 633 144 A1

$$\dot{P} = \tilde{X} W_{h,w}^{\mathrm{idxMode}}[:,0:h_p w_p]$$

flattening row-wise and, optionally, further preprocessing

reshaping row-wise into a rectangle of height $h_p$ and width $w_p$ and, optionally, further postprocessing

**FIG. 27**

**prediction sub-module**

2201

beginning of the prediction a $w_p \times h_p$ portion $P$ of a template of $w \times h$ block $Y$ via the mode of index idxMode

idxMode

computing isSubstitutedByMb$^{\text{derivation}}$ telling whether the intra prediction mode of index idxMode is replaced by a matrix for predicting $P$

isSubstitutedByMb$^{\text{derivation}}$

no — isSubstitutedByMb$^{\text{derivation}}$ ? — yes

predicting $P$ via the intra prediction mode of index idxMode , yielding $\widehat{P}$

defining the "virtual" $\bar{w} \times \bar{h}$ block $\bar{P}$ containing $P$ and at least one of its dimension enlarged with respect to $P$. $\bar{w} \geq w_p$ and $\bar{h} \geq h_p$

$(x, y), \bar{h}, \bar{w}$

predicting $\bar{P}$ via the matrix in $\mathcal{S}_{\text{idxMode}}$ dedicated to the prediction of blocks of size $\bar{w} \times \bar{h}$, and truncating operations during the matrix-based computations, providing a $w_p \times h_p$ prediction $\widehat{P}$ of $P$

$\widehat{P}$

end of the prediction of $P$ via the mode of index idxMode

## FIG. 28A

FIG. 28B

no $\quad\mathcal{S}_{\mathrm{idxMode}}$ exists? $\quad$ yes

isSubstitutedByMb$^{\mathrm{derivation}}$ for $P_a$ and $P_l$ being false

isSubstitutedByMb$^{\mathrm{derivation}}$ for $P_a$ and $P_l$ as in (∗∗∗∗∗)

no $\quad\mathcal{S}_{\mathrm{idxMode}}$ exists? $\quad$ yes

isSubstitutedByMb$^{\mathrm{prediction}}$ = false

isSubstitutedByMb$^{\mathrm{prediction}}$ as in (∗∗∗∗∗)

**FIG. 29A**

$$(*****)$$

$$\delta_{idxMode} = \{W_{4.4}^{idxMode}, W_{4.8}^{idxMode}, W_{4.16}^{idxMode}, W_{4.32}^{idxMode}, W_{8.8}^{idxMode}, W_{8.16}^{idxMode}, W_{16.16}^{idxMode}\}$$

| $w_p \times h_p$ for $P_a$ | $w_p \times h_p$ for $P_l$ | matrix used to predict $P_a$ and $P_l$ with {transposition, γ, δ} | isSubstitutedByMb$^{derivation}$ for $P_a$ and $P_l$ | $w \times h$ | matrix used to predict $Y$ with {transposition, γ, δ} | isSubstitutedByMb$^{prediction}$ |
|---|---|---|---|---|---|---|
| $4 \times 1$ | $1 \times 4$ | $W_{4.4}^{idxMode}$ with {no, 1, 1} | true | $4 \times 4$ | $W_{4.4}^{idxMode}$ with {no, 1, 1} | true |
| $4 \times 1$ | $1 \times 8$ | $W_{4.8}^{idxMode}$ with {yes, 1, 1} | true | $4 \times 8$ | $W_{4.8}^{idxMode}$ with {yes, 1, 1} | true |
| $8 \times 1$ | $1 \times 4$ | $W_{4.8}^{idxMode}$ with {no, 1, 1} | true | $8 \times 4$ | $W_{4.8}^{idxMode}$ with {no, 1, 1} | true |
| $4 \times 1$ | $1 \times 16$ | $W_{4.16}^{idxMode}$ with {yes, 1, 1} | true | $4 \times 16$ | $W_{4.16}^{idxMode}$ with {yes, 1, 1} | true |
| $16 \times 1$ | $1 \times 4$ | $W_{4.16}^{idxMode}$ with {no, 1, 1} | true | $16 \times 4$ | $W_{4.16}^{idxMode}$ with {no, 1, 1} | true |
| $4 \times 1$ | $1 \times 32$ | $W_{4.32}^{idxMode}$ with {yes, 1, 1} | true | $4 \times 32$ | $W_{4.32}^{idxMode}$ with {yes, 1, 1} | true |
| $32 \times 1$ | $1 \times 4$ | $W_{4.32}^{idxMode}$ with {no, 1, 1} | true | $32 \times 4$ | $W_{4.32}^{idxMode}$ with {no, 1, 1} | true |
| $8 \times 1$ | $1 \times 8$ | $W_{8.8}^{idxMode}$ with {no, 1, 1} | true | $8 \times 8$ | $W_{8.8}^{idxMode}$ with {no, 1, 1} | true |
| $8 \times 1$ | $1 \times 16$ | $W_{8.16}^{idxMode}$ with {yes, 1, 1} | true | $8 \times 16$ | $W_{8.16}^{idxMode}$ with {yes, 1, 1} | true |
| $16 \times 1$ | $1 \times 8$ | $W_{8.16}^{idxMode}$ with {no, 1, 1} | true | $16 \times 8$ | $W_{8.16}^{idxMode}$ with {no, 1, 1} | true |
| $8 \times 1$ | $1 \times 32$ | | false | $8 \times 32$ | | false |
| $32 \times 1$ | $1 \times 8$ | | false | $32 \times 8$ | | false |
| $16 \times 1$ | $1 \times 16$ | $W_{16.16}^{idxMode}$ with {no, 1, 1} | true | $16 \times 16$ | $W_{16.16}^{idxMode}$ with {no, 1, 1} | true |
| $16 \times 1$ | $1 \times 32$ | | false | $16 \times 32$ | | false |
| $32 \times 1$ | $1 \times 16$ | | false | $32 \times 16$ | | false |
| $32 \times 1$ | $1 \times 32$ | | false | $32 \times 32$ | | false |

**FIG. 29B**

FIG. 30

**FIG. 31A**

**FIG. 31B**

FIG. 32A

EP 4 633 144 A1

**FIG. 32B**

: direction of reference samples extrapolation associated to idxMode

**FIG. 32C**

FIG. 33A

**FIG. 33B**

**FIG. 34A**

FIG. 34B

2w

2h

4

4

h

w

2400

2410

2408

EP 4 633 144 A1

: direction of reference samples extrapolation associated to idxMode

**FIG. 34C**

**FIG. 35A**

2504

2500

h

w

2504

: direction of reference samples extrapolation associated to idxMode

## FIG. 35B

**FIG. 36A**

EP 4 633 144 A1

: direction of reference samples extrapolation associated to idxMode

**FIG. 36B**

$\mathcal{S}_{idxMode}$ exists?

no        yes

isSubstitutedByMb$^{derivation}$ for $P_a$ and $P_l$ being false

isSubstitutedByMb$^{derivation}$ for $P_a$ and $P_l$ as in (******)

$\mathcal{S}_{idxMode}$ exists?

no        yes

isSubstitutedByMb$^{prediction}$ = false

isSubstitutedByMb$^{prediction}$ as in (******)

**FIG. 37A**

$$(******)$$

$$\delta_{idxMode} = \{W_{4,4}^{idxMode}, W_{4,8}^{idxMode}, W_{4,16}^{idxMode}, W_{4,32}^{idxMode}, W_{8,8}^{idxMode}, W_{8,16}^{idxMode}, W_{16,16}^{idxMode}\}$$

| $w_p \times h_p$ for $P_a$ | $w_p \times h_p$ for $P_l$ | matrix used to predict $P_a$ and $P_l$ with {transposition, γ, δ} | isSubstitutedByMb^derivation for $P_a$ and $P_l$ | $w \times h$ | matrix used to predict $Y$ with {transposition, γ, δ} | isSubstitutedByMb^Prediction |
|---|---|---|---|---|---|---|
| $4 \times 1$ | $1 \times 4$ | $W_{4,4}^{idxMode}$ with {no, 1, 1} | $g(j, h, w)$ | $4 \times 4$ | $W_{4,4}^{idxMode}$ with {no, 1, 1} | $g(j, h, w)$ |
| $4 \times 1$ | $1 \times 8$ | $W_{4,8}^{idxMode}$ with {yes, 1, 1} | $g(j, h, w)$ | $4 \times 8$ | $W_{4,8}^{idxMode}$ with {yes, 1, 1} | $g(j, h, w)$ |
| $8 \times 1$ | $1 \times 4$ | $W_{4,8}^{idxMode}$ with {no, 1, 1} | $g(j, h, w)$ | $8 \times 4$ | $W_{4,8}^{idxMode}$ with {no, 1, 1} | $g(j, h, w)$ |
| $4 \times 1$ | $1 \times 16$ | $W_{4,16}^{idxMode}$ with {yes, 1, 1} | $g(j, h, w)$ | $4 \times 16$ | $W_{4,16}^{idxMode}$ with {yes, 1, 1} | $g(j, h, w)$ |
| $16 \times 1$ | $1 \times 4$ | $W_{4,16}^{idxMode}$ with {no, 1, 1} | $g(j, h, w)$ | $16 \times 4$ | $W_{4,16}^{idxMode}$ with {no, 1, 1} | $g(j, h, w)$ |
| $4 \times 1$ | $1 \times 32$ | $W_{4,32}^{idxMode}$ with {yes, 1, 1} | $g(j, h, w)$ | $4 \times 32$ | $W_{4,32}^{idxMode}$ with {yes, 1, 1} | $g(j, h, w)$ |
| $32 \times 1$ | $1 \times 4$ | $W_{4,32}^{idxMode}$ with {no, 1, 1} | $g(j, h, w)$ | $32 \times 4$ | $W_{4,32}^{idxMode}$ with {no, 1, 1} | $g(j, h, w)$ |
| $8 \times 1$ | $1 \times 8$ | $W_{8,8}^{idxMode}$ with {no, 1, 1} | $g(j, h, w)$ | $8 \times 8$ | $W_{8,8}^{idxMode}$ with {no, 1, 1} | $g(j, h, w)$ |
| $8 \times 1$ | $1 \times 16$ | $W_{8,16}^{idxMode}$ with {yes, 1, 1} | $g(j, h, w)$ | $8 \times 16$ | $W_{8,16}^{idxMode}$ with {yes, 1, 1} | $g(j, h, w)$ |
| $16 \times 1$ | $1 \times 8$ | $W_{8,16}^{idxMode}$ with {no, 1, 1} | $g(j, h, w)$ | $16 \times 8$ | $W_{8,16}^{idxMode}$ with {no, 1, 1} | $g(j, h, w)$ |
| $8 \times 1$ | $1 \times 32$ | | false | $8 \times 32$ | | false |
| $32 \times 1$ | $1 \times 8$ | | false | $32 \times 8$ | | false |
| $16 \times 1$ | $1 \times 16$ | $W_{16,16}^{idxMode}$ with {no, 1, 1} | $g(j, h, w)$ | $16 \times 16$ | $W_{16,16}^{idxMode}$ with {no, 1, 1} | $g(j, h, w)$ |
| $16 \times 1$ | $1 \times 32$ | | false | $16 \times 32$ | | false |
| $32 \times 1$ | $1 \times 16$ | | false | $32 \times 16$ | | false |
| $32 \times 1$ | $1 \times 32$ | | false | $32 \times 32$ | | false |

**FIG. 37B**

EP 4 633 144 A1

no $\mathcal{S}_{\text{idxMode}}$ exists? yes

isSubstitutedByMb$^{\text{derivation}}$ for $P_a$ and $P_l$ being false

isSubstitutedByMb$^{\text{derivation}}$ for $P_a$ and $P_l$ as in (*******) && accessesMemMbCtu $<$ $\xi$ nbPixelsCtbLuma, $\xi$ being a configuration parameter

no $\mathcal{S}_{\text{idxMode}}$ exists? yes

isSubstitutedByMb$^{\text{prediction}}$ = false

isSubstitutedByMb$^{\text{prediction}}$ as in (*******) && accessesMemMbCtu $<$ $\xi$ nbPixelsCtbLuma

**FIG. 38A**

$$(\ast\ast\ast\ast\ast\ast\ast)$$
$$\delta_{idxMode} = \{W_{4,4}^{idxMode}, W_{4,8}^{idxMode}, W_{4,16}^{idxMode}, W_{8,8}^{idxMode}, W_{8,16}^{idxMode}, W_{16,16}^{idxMode}\}$$

| $w_p \times h_p$ for $P_a$ | $w_p \times h_p$ for $P_l$ | matrix used to predict $P_a$ and $P_l$ with {transposition, $\gamma$, $\delta$} | isSubstitutedByMb$^{derivation}$ for $P_a$ and $P_l$ | $w \times h$ | matrix used to predict $Y$ with {transposition, $\gamma$, $\delta$} | isSubstitutedByMb$^{prediction}$ |
|---|---|---|---|---|---|---|
| $4 \times 1$ | $1 \times 4$ | $W_{4,4}^{idxMode}$ with {no, 1, 1} | $g(j,h,w)$ | $4 \times 4$ | $W_{4,4}^{idxMode}$ with {no, 1, 1} | $g(j,h,w)$ |
| $4 \times 1$ | $1 \times 8$ | $W_{4,8}^{idxMode}$ with {yes, 1, 1} | $g(j,h,w)$ | $4 \times 8$ | $W_{4,8}^{idxMode}$ with {yes, 1, 1} | $g(j,h,w)$ |
| $8 \times 1$ | $1 \times 4$ | $W_{4,8}^{idxMode}$ with {no, 1, 1} | $g(j,h,w)$ | $8 \times 4$ | $W_{4,8}^{idxMode}$ with {no, 1, 1} | $g(j,h,w)$ |
| $4 \times 1$ | $1 \times 16$ | $W_{4,16}^{idxMode}$ with {yes, 1, 1} | $g(j,h,w)$ | $4 \times 16$ | $W_{4,16}^{idxMode}$ with {yes, 1, 1} | $g(j,h,w)$ |
| $16 \times 1$ | $1 \times 4$ | $W_{4,16}^{idxMode}$ with {no, 1, 1} | $g(j,h,w)$ | $16 \times 4$ | $W_{4,16}^{idxMode}$ with {no, 1, 1} | $g(j,h,w)$ |
| $4 \times 1$ | $1 \times 32$ | | false | $4 \times 32$ | | false |
| $32 \times 1$ | $1 \times 4$ | | false | $32 \times 4$ | | false |
| $8 \times 1$ | $1 \times 8$ | $W_{8,8}^{idxMode}$ with {no, 1, 1} | $g(j,h,w)$ | $8 \times 8$ | $W_{8,8}^{idxMode}$ with {no, 1, 1} | $g(j,h,w)$ |
| $8 \times 1$ | $1 \times 16$ | $W_{8,16}^{idxMode}$ with {yes, 1, 1} | $g(j,h,w)$ | $8 \times 16$ | $W_{8,16}^{idxMode}$ with {yes, 1, 1} | $g(j,h,w)$ |
| $16 \times 1$ | $1 \times 8$ | $W_{8,16}^{idxMode}$ with {no, 1, 1} | $g(j,h,w)$ | $16 \times 8$ | $W_{8,16}^{idxMode}$ with {no, 1, 1} | $g(j,h,w)$ |
| $8 \times 1$ | $1 \times 32$ | | false | $8 \times 32$ | | false |
| $32 \times 1$ | $1 \times 8$ | | false | $32 \times 8$ | | false |
| $16 \times 1$ | $1 \times 16$ | $W_{16,16}^{idxMode}$ with {no, 1, 1} | $g(j,h,w)$ | $16 \times 16$ | $W_{16,16}^{idxMode}$ with {no, 1, 1} | $g(j,h,w)$ |
| $16 \times 1$ | $1 \times 32$ | | false | $16 \times 32$ | | false |
| $32 \times 1$ | $1 \times 16$ | | false | $32 \times 16$ | | false |
| $32 \times 1$ | $1 \times 32$ | | false | $32 \times 32$ | | false |

## FIG. 38B

EP 4 633 144 A1

**FIG. 39A**

FIG. 39B

**FIG. 40A**

**prediction sub-module**

beginning of the prediction of $w \times h$ block $Y$ via the mode of index idxMode

idxMode

computing isSubstitutedByMb$^{\text{prediction}}$ telling whether the intra prediction mode of index idxMode is replaced by a matrix for predicting $Y$

isSubstitutedByMb$^{\text{prediction}}$

no — isSubstitutedByMb$^{\text{prediction}}$ ? — yes

predicting $Y$ via the intra prediction mode of index idxMode , yielding $\widehat{Y}_{\text{part}}$

no — isProxyUsed$^{\text{prediction}}$ ? — yes

predicting $Y$ via the matrix in $\mathcal{S}_{\text{idxMode}}$ dedicated to the prediction of blocks of size $w \times h$, yielding $\widehat{Y}_{\text{part}}$.

predicting $Y$ via the **proxy** matrix in $\bar{\mathcal{S}}_{\text{idxMode}}$ dedicated to the prediction of blocks of size $w \times h$, yielding $\widehat{Y}_{\text{part}}$. This **proxy** matrix may be paired with the matrix in $\mathcal{S}_{\text{idxMode}}$ dedicated to the prediction of blocks of size $w \times h$

$\widehat{Y}_{\text{part}}$

end of the prediction of $Y$ via the mode of index idxMode

2802

# FIG. 40B

**FIG. 41A**

EP 4 633 144 A1

$$(\ast\ast\ast\ast\ast\ast\ast\ast)$$

$$S_{idxMode} = \left\{ W_{4,4}^{idxMode}, W_{4,8}^{idxMode}, W_{4,16}^{idxMode}, W_{4,32}^{idxMode}, W_{8,8}^{idxMode}, W_{8,16}^{idxMode}, W_{16,16}^{idxMode} \right\}$$

| $w_p \times h_p$ for $P_a$ | $w_p \times h_p$ for $P_l$ | matrix used to predict $P_a$ and $P_l$ with {transposition, γ, δ} | isSubstitutedByMb$^{\text{derivation}}$ for $P_a$ and $P_l$ | isProxyUsed$^{\text{derivation}}$ for $P_a$ and $P_l$ | $w \times h$ | matrix used to predict $Y$ {transposition, γ, δ} | isSubstitutedByMb$^{\text{prediction}}$ | isProxyUsed$^{\text{prediction}}$ |
|---|---|---|---|---|---|---|---|---|
| 4 × 2 | 2 × 4 | $W_{4,4}^{idxMode}$ with {no, 1, 1} | true | $g_{der}(h,w)$ | 4 × 4 | $W_{4,4}^{idxMode}$ {no, 1, 1} | true | $g_{pred}(h,w)$ |
| 4 × 2 | 2 × 8 | $W_{4,8}^{idxMode}$ with {yes, 1, 1} | true | $g_{der}(h,w)$ | 4 × 8 | $W_{4,8}^{idxMode}$ {yes, 1, 1} | true | $g_{pred}(h,w)$ |
| 8 × 2 | 2 × 4 | $W_{4,8}^{idxMode}$ with {no, 1, 1} | true | $g_{der}(h,w)$ | 8 × 4 | $W_{4,8}^{idxMode}$ {no, 1, 1} | true | $g_{pred}(h,w)$ |
| 4 × 4 | 2 × 16 | $W_{4,16}^{idxMode}$ with {yes, 1, 1} | true | $g_{der}(h,w)$ | 4 × 16 | $W_{4,16}^{idxMode}$ {yes, 1, 1} | true | $g_{pred}(h,w)$ |
| 16 × 2 | 4 × 4 | $W_{4,16}^{idxMode}$ with {no, 1, 1} | true | $g_{der}(h,w)$ | 16 × 4 | $W_{4,16}^{idxMode}$ {no, 1, 1} | true | $g_{pred}(h,w)$ |
| 4 × 4 | 2 × 32 | $W_{4,32}^{idxMode}$ with {yes, 1, 1} | true | $g_{der}(h,w)$ | 4 × 32 | $W_{4,32}^{idxMode}$ {yes, 1, 1} | true | $g_{pred}(h,w)$ |
| 32 × 2 | 4 × 4 | $W_{4,32}^{idxMode}$ with {no, 1, 1} | true | $g_{der}(h,w)$ | 32 × 4 | $W_{4,32}^{idxMode}$ {no, 1, 1} | true | $g_{pred}(h,w)$ |
| 8 × 2 | 2 × 8 | $W_{8,8}^{idxMode}$ with {no, 1, 1} | true | $g_{der}(h,w)$ | 8 × 8 | $W_{8,8}^{idxMode}$ {no, 1, 1} | true | $g_{pred}(h,w)$ |
| 8 × 4 | 2 × 16 | $W_{8,16}^{idxMode}$ with {yes, 1, 1} | true | $g_{der}(h,w)$ | 8 × 16 | $W_{8,16}^{idxMode}$ {yes, 1, 1} | true | $g_{pred}(h,w)$ |
| 16 × 2 | 4 × 8 | $W_{8,16}^{idxMode}$ with {no, 1, 1} | true | $g_{der}(h,w)$ | 16 × 8 | $W_{8,16}^{idxMode}$ {no, 1, 1} | true | $g_{pred}(h,w)$ |
| 8 × 4 | 2 × 32 | | false | false | 8 × 32 | | false | false |
| 32 × 2 | 4 × 8 | | false | false | 32 × 8 | | false | false |
| 16 × 4 | 4 × 16 | $W_{16,16}^{idxMode}$ with {no, 1, 1} | true | $g_{der}(h,w)$ | 16 × 16 | $W_{16,16}^{idxMode}$ {no, 1, 1} | true | $g_{pred}(h,w)$ |
| 16 × 4 | 4 × 32 | | false | false | 16 × 32 | | false | false |
| 32 × 4 | 4 × 16 | | false | false | 32 × 16 | | false | false |
| 32 × 4 | 4 × 32 | | false | false | 32 × 32 | | false | false |

**FIG. 41B**

**FIG. 42A**

$$(********)$$

$$\mathcal{S}_{\text{idxMode}} = \{W_{4,4}^{\text{idxMode}}, W_{4,8}^{\text{idxMode}}, W_{4,16}^{\text{idxMode}}, W_{4,32}^{\text{idxMode}}, W_{8,8}^{\text{idxMode}}, W_{8,16}^{\text{idxMode}}, W_{16,16}^{\text{idxMode}}\}$$

| $w_p \times h_p$ for $P_a$ | $w_p \times h_p$ for $P_l$ | non-proxy matrix to predict $P_a$ and $P_l$ with {transposition, γ, δ} | isSubstitutedByMb$^{\text{derivation}}$ for $P_a$ and $P_l$ | isProxyUsed$^{\text{derivation}}$ for $P_a$ and $P_l$ | $w \times h$ | non-proxy matrix to predict $Y$ {transposition, γ, δ} | isSubstitutedByMb$^{\text{prediction}}$ | isProxyUsed$^{\text{prediction}}$ |
|---|---|---|---|---|---|---|---|---|
| $4 \times 1$ | $1 \times 4$ | $W_{4,4}^{\text{idxMode}}$ with {no, 1, 1} | $g(j,h,w)$ | $\dot{g}_{\text{der}}(j,h,w)$ | $4 \times 4$ | $W_{4,4}^{\text{idxMode}}$ {no, 1, 1} | $g(j,h,w)$ | $\dot{g}_{\text{pred}}(j,h,w)$ |
| $4 \times 1$ | $1 \times 8$ | $W_{4,8}^{\text{idxMode}}$ with {yes, 1, 1} | $g(j,h,w)$ | $\dot{g}_{\text{der}}(j,h,w)$ | $4 \times 8$ | $W_{4,8}^{\text{idxMode}}$ {yes, 1, 1} | $g(j,h,w)$ | $\dot{g}_{\text{pred}}(j,h,w)$ |
| $8 \times 1$ | $1 \times 4$ | $W_{4,8}^{\text{idxMode}}$ with {no, 1, 1} | $g(j,h,w)$ | $\dot{g}_{\text{der}}(j,h,w)$ | $8 \times 4$ | $W_{4,8}^{\text{idxMode}}$ {no, 1, 1} | $g(j,h,w)$ | $\dot{g}_{\text{pred}}(j,h,w)$ |
| $4 \times 1$ | $1 \times 16$ | $W_{4,16}^{\text{idxMode}}$ with {yes, 1, 1} | $g(j,h,w)$ | $\dot{g}_{\text{der}}(j,h,w)$ | $4 \times 16$ | $W_{4,16}^{\text{idxMode}}$ {yes, 1, 1} | $g(j,h,w)$ | $\dot{g}_{\text{pred}}(j,h,w)$ |
| $16 \times 1$ | $1 \times 4$ | $W_{4,16}^{\text{idxMode}}$ with {no, 1, 1} | $g(j,h,w)$ | $\dot{g}_{\text{der}}(j,h,w)$ | $16 \times 4$ | $W_{4,16}^{\text{idxMode}}$ {no, 1, 1} | $g(j,h,w)$ | $\dot{g}_{\text{pred}}(j,h,w)$ |
| $4 \times 1$ | $1 \times 32$ | $W_{4,32}^{\text{idxMode}}$ with {yes, 1, 1} | $g(j,h,w)$ | $\dot{g}_{\text{der}}(j,h,w)$ | $4 \times 32$ | $W_{4,32}^{\text{idxMode}}$ {yes, 1, 1} | $g(j,h,w)$ | $\dot{g}_{\text{pred}}(j,h,w)$ |
| $32 \times 1$ | $1 \times 4$ | $W_{4,32}^{\text{idxMode}}$ with {no, 1, 1} | $g(j,h,w)$ | $\dot{g}_{\text{der}}(j,h,w)$ | $32 \times 4$ | $W_{4,32}^{\text{idxMode}}$ {no, 1, 1} | $g(j,h,w)$ | $\dot{g}_{\text{pred}}(j,h,w)$ |
| $8 \times 1$ | $1 \times 8$ | $W_{8,8}^{\text{idxMode}}$ with {no, 1, 1} | $g(j,h,w)$ | $\dot{g}_{\text{der}}(j,h,w)$ | $8 \times 8$ | $W_{8,8}^{\text{idxMode}}$ {no, 1, 1} | $g(j,h,w)$ | $\dot{g}_{\text{pred}}(j,h,w)$ |
| $8 \times 1$ | $1 \times 16$ | $W_{8,16}^{\text{idxMode}}$ with {yes, 1, 1} | $g(j,h,w)$ | $\dot{g}_{\text{der}}(j,h,w)$ | $8 \times 16$ | $W_{8,16}^{\text{idxMode}}$ {yes, 1, 1} | $g(j,h,w)$ | $\dot{g}_{\text{pred}}(j,h,w)$ |
| $16 \times 1$ | $1 \times 8$ | $W_{8,16}^{\text{idxMode}}$ with {no, 1, 1} | $g(j,h,w)$ | $\dot{g}_{\text{der}}(j,h,w)$ | $16 \times 8$ | $W_{8,16}^{\text{idxMode}}$ {no, 1, 1} | $g(j,h,w)$ | $\dot{g}_{\text{pred}}(j,h,w)$ |
| $8 \times 1$ | $1 \times 32$ | | false | false | $8 \times 32$ | | false | false |
| $32 \times 1$ | $1 \times 8$ | | false | false | $32 \times 8$ | | false | false |
| $16 \times 1$ | $1 \times 16$ | $W_{16,16}^{\text{idxMode}}$ with {no, 1, 1} | $g(j,h,w)$ | $\dot{g}_{\text{der}}(j,h,w)$ | $16 \times 16$ | $W_{16,16}^{\text{idxMode}}$ {no, 1, 1} | $g(j,h,w)$ | $\dot{g}_{\text{pred}}(j,h,w)$ |
| $16 \times 1$ | $1 \times 32$ | | false | false | $16 \times 32$ | | false | false |
| $32 \times 1$ | $1 \times 16$ | | false | false | $32 \times 16$ | | false | false |
| $32 \times 1$ | $1 \times 32$ | | false | false | $32 \times 32$ | | false | false |

**FIG. 42B**

| | Europäisches Patentamt European Patent Office Office européen des brevets | **EUROPEAN SEARCH REPORT** | **Application Number** EP 24 30 5568 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHIOPU IONUT ET AL: "CNN-Based Intra-Prediction for Lossless HEVC", IEEE TRANSACTIONS ON CIRCUITS AND SYSTEMS FOR VIDEO TECHNOLOGY, IEEE, USA, vol. 30, no. 7, 9 September 2019 (2019-09-09), pages 1816-1828, XP011796774, ISSN: 1051-8215, DOI: 10.1109/TCSVT.2019.2940092 [retrieved on 2020-07-01] * abstract * * sections I, III and IV * ----- | 1-6, 10-14 | INV. H04N19/11 H04N19/156 H04N19/176 H04N19/593 |
| X | WO 2021/015934 A1 (INTERDIGITAL VC HOLDINGS INC [US]) 28 January 2021 (2021-01-28) * page 1, line 1 - page 2, line 33 * * page 7, line 5 - page 11, line 25 * * page 13, line 12 - page 16, line 28 * ----- | 1,2,5,6, 11,12,14 | |
| X | WO 2023/163632 A1 (ERICSSON TELEFON AB L M [SE]) 31 August 2023 (2023-08-31)  * paragraphs [0002] - [0015] * * paragraphs [0141] - [0150] * * paragraphs [0182] - [0207] * ----- | 1,2,5-9, 11,12, 14,15 | TECHNICAL FIELDS SEARCHED (IPC) H04N |

-/--

The present search report has been drawn up for all claims

| Place of search | Date of completion of the search | Examiner |
|---|---|---|
| The Hague | 13 September 2024 | André, Thomas |

page 1 of 2

Europäisches
Patentamt

European
Patent Office

Office européen
des brevets

# EUROPEAN SEARCH REPORT

**Application Number**

EP 24 30 5568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | COBAN M ET AL: "Algorithm description of Enhanced Compression Model 8 (ECM 8)", 141. MPEG MEETING; 20230116 - 20230120; ONLINE; (MOTION PICTURE EXPERT GROUP OR ISO/IEC JTC1/SC29/WG11), , no. m62440 ; JVET-AC2025 6 April 2023 (2023-04-06), XP030308550, Retrieved from the Internet: URL:https://dms.mpeg.expert/doc_end_user/documents/141_Teleconference/wg11/m62440-JVET-AC2025-v1-JVET-AC2025.zip JVET-AC2025-v1.docx [retrieved on 2023-04-06] * section 3.1.12 * | 4,10 | |
| A | Zhou Aojun ET AL: "INCREMENTAL NETWORK QUANTIZATION: TOWARDS LOSSLESS CNNS WITH LOW-PRECISION WEIGHTS", International Conference on Learning Representations, ICLR 2017, 25 August 2017 (2017-08-25), pages 1-14, XP093204536, Retrieved from the Internet: URL:https://arxiv.org/pdf/1702.03044 * abstract * | 5,6,14 | **TECHNICAL FIELDS SEARCHED (IPC)** |

The present search report has been drawn up for all claims

| Place of search | Date of completion of the search | Examiner |
|---|---|---|
| The Hague | 13 September 2024 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5568

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2024

| Patent document cited in search report | Publication date | Patent family member(s) | | Publication date |
|---|---|---|---|---|
| WO 2021015934 A1 | 28-01-2021 | CN | 114402614 A | 26-04-2022 |
| | | EP | 4005210 A1 | 01-06-2022 |
| | | US | 2022264085 A1 | 18-08-2022 |
| | | WO | 2021015934 A1 | 28-01-2021 |
| WO 2023163632 A1 | 31-08-2023 | NONE | | |

For more details about this annex : see Official Journal of the European Patent Office, No. 12/82

EPO FORM P0459